# EUROPÄISCHE PATENTANMELDUNG

(11) **EP 2 573 654 A1**
(43) Veröffentlichungstag der Anmeldung: **27.03.2013**
(21) Anmeldenummer: 12186225.4
(22) Anmeldetag: 08.07.2004
(51) Int. Cl.: G06F 3/033, G06F 21/35, G06F 1/16

(54) **Portabler Digitalcomputer mit einem rückseitig koppelbaren Funktionsmodul**

(30) Priorität: 08.07.2003 DE 10330773
(62) Teilanmeldung aus: 04740813.3
(71) Anmelder: Borgward, Glenn Rolus, 80796 München (DE)
(72) Erfinder: Borgward, Glenn Rolus, 80796 München (DE)
(74) Vertreter: Grünecker, Kinkeldey, Stockmair & Schwanhäusser

(57) **Zusammenfassung**

Die Erfindung betrifft einen mobilen Digitalcomputer mit einem herausnehmbaren Eingabegerät zur Eingabe von relativen Ortsdaten für die Steuerung eines Cursors auf einem Anzeigedisplay durch eine entsprechende Bewegung einer Hand oder mindestens eines Fingers einer Hand eines Benutzers, wobei das Eingabegerät sowohl in einem ersten Betriebszustand, in welchem das Eingabegerät nicht herausgenommen ist, als auch in einem zweiten Betriebszustand, in welchem das Eingabegerät herausgenommen ist, den Cursor auf dem Anzeigedisplay steuern kann.

## Beschreibung

Die Erfindung betrifft ein Eingabegerät für mobile und insbesondere portable Digitalcomputer sowie einen portablen Digitalcomputer mit Eingabegerät.

In jüngster Zeit haben portable Digitalcomputer weitgehende Verbreitung gefunden. Zu diesen portablen Digitalcomputern zählen insbesondere die sogenannten "Notebooks", worunter zweiflügelige portable Digitalcomputer verstanden werden, bei denen ein eine Anzeigeeinrichtung beinhaltender Deckelteil und ein mit einer Tastatur versehener Basisteil mit einer Scharniereinrichtung buchartig auf- und zuklappbar beweglich miteinander gekoppelt sind. Daneben gibt es insbesondere sogenannte "Tablet PC"-Computer, die einflügelig ausgestaltet sind. Schließlich hat eine Vielfalt von als Kleingeräte ausgeführten portablen Digitalcomputern in Gestalt sogenannter "Personal Digital Assistants" ("PDA") die Märkte erobert.

Nicht zu vergessen sind in diesem Zusammenhang auch sogenannte eBook-Reader, die häufig ebenfalls Mausfunktionatitäten nutzen. Derartige Technologien sind insbesondere in den früheren Druckschriften WO 2001073673 A2 und WO 1999015982 A1 beschrieben worden; der Inhalt dieser Druckschriften wird durch Bezugnahme in den Offenbarungsgehalt ausdrücklich aufgenommen.

Unter portablen Einrichtungen werden im Sinne dieses Patentes stets auch "mobile" Einrichtungen verstanden. Auch in Verkehrsmittel wie Kraftfahrzeuge einsetzbare Einrichtungen sind mitumfasst.

Bei zahlreichen Anwendungssituationen im Zusammenhang mit dem praktischen Gebrauch dieser vorstehend umrissenen portablen Digitalcomputer ist es erforderlich, daß der Benutzer mittels einer geeigneten Eingabevorrichtung eine Zeigermarke, gemeinhin "Cursor" genannt, auf dem Bildschirm der Anzeigeeinrichtung bewegen und positionieren kann. Das klassische Hilfsmittel hierfür ist die sogenannte "Maus". Eine Maus ist ein verschiebbares Eingabegerät, das es insbesondere im Zusammenwirken mit einem Betriebssystem und anderer Software dem Benutzer ermöglicht, auf der Anzeigeeinrichtung dargestellte Objekte zu positionieren und/oder zu selektieren. Eine derartige Maus ist beispielsweise aus dem Dokument US 5,805,144 bekannt.

Eine Maus besteht typischerweise aus einem Schiebeteil, das der Benutzer mit den Fingern einer Hand oder auch mit der flachen Hand ergreifen und auf einer ebenen Oberfläche, beispielsweise einer Tischoberfläche, hin- und herschieben kann. Eine in dem Schiebeteil vorgesehene Sensoreinrichtung detektiert die Bewegung der Maus nach Weglänge und Wegrichtung relativ zu der Oberfläche, auf der die Maus bewegt wird, und übermittelt diese Bewegungsgrößen auf eine geeignete Art und Weise über eine Kabelverbindung an einen Digitalcomputer. Der Digitalcomputer interpretiert dann diese Bewegungsgrößen unter Abarbeitung bestimmter Datenverarbeitungsprogramme, die üblicherweise Bestandteile des Betriebssystems und/oder von Anwendungsprogrammen bilden. Typische mausgesteuerte Funktionalitäten sind dabei häufig:
1. Auswählen von Funktionen durch Positionieren des Mauszeigers auf der Anzeigeeinrichtung in einen Bildschirmbereich, der nach geeigneten Konventionen vom Benutzer als graphische Symbolisierung einer Funktion angesehen wird
2. Aktivieren von Funktionen, d.h. einfaches oder rasch aufeinanderfolgendes doppeltes Betätigen von einem Maustaster, wenn der Mauszeiger auf der Anzeigeeinrichtung über einem Bildschirmbereich steht, der nach geeigneten Konventionen vom Benutzer als "Schaltfläche" angesehen wird;
3. Markieren von Informationen zwischen einer ersten Stelle des Bildschirms und einer zweiten Stelle des Bildschirmes im Rahmen eines vorgegebenen geometrischen Modells, d.h. Positionieren des Mauszeigers auf der Anzeigeeinrichtung an einer ersten Stelle, danach Betätigen und betätigt halten einer Maustaste und sodann, während die Maustaste betätigt gehalten wird, Verschieben des Mauszeigers an eine zweite Stelle, schließlich Loslassen der Maustaste, wobei das geometrische Modell beispielsweise ein Rechteck, eine Zeilenanordnung, eine Ellipse oder dergleichen sein kann;
4. Scrollfunktionen;
5. Einblenden von Auswahlinformation wie zum Beispiel Kontextmenues.

Die vorstehende Liste von Funktionen ist lediglich exemplarisch zu verstehen; im

Sinne dieser Patentschrift sind alle mit einem Mauszeiger möglichen Funktionen mitumfasst.

Fast alle Programme mit einer graphischen Bedienoberfläche bieten dem Benutzer zumindest optional die Möglichkeit, die gesamte Navigation in der Programmfunktionalität durch eine Maus oder äquivalente Eingabegeräte vorzunehmen. Beispiele hierfür sind das Navigationskonzept der "Windows"-Betriebssystemsoftware von Microsoft oder das Navigationskonzept der Bedienoberfläche "KDE" für Rechner, die unter dem Betriebssystem Linux betrieben werden. Dem Fachmann sind derartige Bedienoberflächen bekannt; insoweit wird hier von einer weiteren Erläuterung abgesehen.

Weitverbreitet sind Mäuse, bei denen eine an der Unterseite des Schiebeteils angeordnete und frei drehbare Rollkugel auf der Unterlage, auf der die Maus verschoben wird, abrollt, wobei die dadurch herbeigeführte Relativbewegung zwischen Rollkugel und Schiebeteilgehäuse auf geeignete Art und Weise, beispielsweise mittels Meßrollwalzen, erfasst und in ein elektrisches Signal umgesetzt wird. Da die Rollkugel mechanisch empfindlich und überdies gegen Verschmutzung anfällig ist, gibt es auch Ansätze, die Bewegung des Schiebeteils über der Oberfläche, auf der die Maus geschoben wird, berührungslos optisch zu erfassen, indem ohnehin vorhandene oder auf einer Mausunterlage angeordnete optisch detektierbare Oberflächenstrukturen mit optischen Mitteln meßtechnisch erfaßt und in Bewegungssignale umgesetzt werden.

Mit einer Rollkugel versehene Mäuse können im Prinzip auch in einem alternativen Modus benutzt werden, bei dem das Gehäuse ortsfest auf einer Unterlage, beispielsweise einer Tischfläche, zu liegen kommt, wobei die Rollkugeln mit den Fingern oder dem Handballan einer Hand des Benutzers gedreht wird. Mausvorrichtungen, die für diese Betriebsart optimiert sind, werden auch "Trackball" genannt.

Üblicherweise erweist es sich zweckmäßig, Mäuse beziehungsweise Trackballvorrichtungen mit an geeigneter Stelle am Gehäuse angeordneten Tastern, Stellrädchen und anderen Bedienelementen zu versehen, um beispielsweise vollständige Selektions- und Auswahlvorgänge auf einfache und eingängige Art und Weise durch den Benutzer ausführen zu können.

Beim praktischen Gebrauch portabler Digitalcomputer haben sich mit Kabel versehene Mäuse und Trackballvorrichtungen von jeher insoweit als unhandlich erwiesen, als der Benutzer neben dem eigentlichen Digitalcomputer die Maus beziehungsweise die Trackballvorrichtung als einen weiteren Gegenstand mitführen muss. Eine mit einem ausreichend langen Kabel versehene Maus beziehungsweise Trackballvorrichtung bereitet jedoch Probleme, da das Kabel einerseits vor einem Transport aufgewickelt oder auf andere Weise gegen Verwirrung gesichert werden muß und andererseits unmittelbar vor dem Einsatz einen entsprechenden Abwickelvorgang benötigt. Während des Betriebes kann sich das Kabel an anderen in der Nähe stehenden Gegenständen verfangen und dem Benutzer Unbequemlichkeit und Unannehmlichkeiten bereiten. Um diese Problematik anzugehen, sind sogenannte "kabellose" Mäuse beziehungsweise Trackballvorrichtungen bekannt, bei denen die Bewegungsdaten des Schiebeteils drahtlos über eine kurzreichweitige Funkverbindung oder per Infrarotdatenübertragung an den Digitalcomputer übertragen werden.

Für den Benutzer eines portablen Digitalcomputers bedeutet der Einsatz einer derartigen kabellosen Maus beziehungsweise einer kabellosen Trackballvorrichtung jedoch zunächst, daß er drei Teile mitzuführen hat, nämlich den portablen Digitalcomputer, eine mit einem kurzen Kabelstummel zum Anschluß an den Digitalcomputer versehene Basisstation, sowie das Schiebe- beziehungsweise Trackballteil. Es erweist sich in der Praxis als problematisch, beim Transport stets alle drei Teile einpacken und zuverlässig mitnehmen zu müssen.

Ein weiteres Problem stellt die Stromversorgung dar, denn entweder müssen ausreichend Batterien vorrätig gehalten werden, die sich durch häufigen Gebrauch schell entleeren können und somit häufig ausgewechselt werden müssen oder es muss im Fall einer wiederaufladbaren Batterie ein Ladegerät als weitere Komponente mitgeführt werden.

Ein aus dem Stand der Technik bekannter Ansatz, diese Problematik zu lindern, besteht darin, auf die Maus beziehungsweise auf die Trackballvorrichtung als eigenständigem Teil ganz zu verzichten und stattdessen einen Sensor zur Übermittlung von Orts- und Verschiebungsdaten unmittelbar in den portablen Digitalcomputer einzubauen. Ein weitverbreitetes Ausführungsbeispiel dieses Ansatzes ist das sogenannte "Slidepad". Ein "Slidepad" ist eine kleine Fläche von einigen Zentimetern Seitenlänge, die mit geeigneten Sensoren derart ausgestattet ist, sodasss bei einer schleifenden Berührung mit einer sich auf der Fläche bewegenden Fingerkuppe ein die Bewegungsstrecke und Bewegungsrichtung repräsentierendes Signal detektiert und vom Digitalcomputer weiterverarbeitet werden kann. Auch sind Lösungen bekannt, bei denen in der Tastatur ein aus der Tastaturebene geringfügig hervorstehender Stift angeordnet ist, der durch Krafteinwirkung mit einer Fingerspitze in eine Richtung gebogen werden kann. Durch geeignete Sensoren wird diese Krafteinwirkung gemessen und als Bewegungsrichtungs- und Bewegungslängensignal an den Digitalcomputer übermittelt. Schließlich sind Lösungen bekannt, bei denen eine Trackballvorrichtung fest in den portablen Digitalcomputer eingebaut ist.

Diese Verbesserungsansätze vereinfachen zwar das Transportproblem für den Benutzer ganz erheblich, da jetzt stets nur noch ein einziges Teil, nämlich der portable Digitalcomputer, eingepackt und transportiert werden muß; die ergonomischen Eigenschaften derartiger fest eingebauter Maussubstitute bleiben jedoch erfahrungsgemäß wegen der engen räumlichen Nähe zur Tastatur sowie infolge der stets knapp gehaltenen mechanischen Gehäuseabmessungen hinter denen einer externen Maus beziehungsweise einer externen Trackballvorrichtung empfindlich zurück.

Aus der Druckschrift US 5,126,955 A ist ein Notebook bekannt, dass eine mit einem Kabel angeschlossene Scanner-Mauseinheit aufweist. Vorgesehen ist nur eine Aufbewahrung des Scanner-Mausteiles im Aufbewahrungsteil zum Zecke des Transportes. Eine ausfunktionalität im Aufbewahrungsteil der Tastatur ist nicht gegeben. Das Kabel schränkt die Bewegungsfreiheit ein und limitiert die Möglichkeiten. Für die Mausfunktion wird eine Rollkugel verwendet.

Aus der Druckschrift US 5,049,863 ist eine Tastatureinheit bekannt, die zwar bei PCs und Notebooks anwendbar ist und anstelle einer Kabelverbindung eine Infrarot-Verbindung angibt; jedoch wird dazu ein Teil-Tastatursegment benutzt, um durch eine Entkoppelmöglichkeit des Tastensegments eine Maus zu schaffen, die über eine Rollkugel Maussignale generiert. Das entnommene Tastatursegment ist auf der Oberseite nur mit den Cursor-Tasten der Tastatur ausgestattet, die aufgrund ihrer Anordnung und ihrer eingeschränkten Nutzbarkeit keine funktionsäquivalente Alternative zu einer integrierten Notebookmaus bietet. Eine integrierte Maus müßte zusätzlich ausgebildet sein. Zudem wird die entnehmbare Tasteneinheit mit einer nicht wiederaufladbaren Trockenbatterie gespeist, die besonders bei intensiverem Gebrauch häufiger ausgewechselt werden müsste. In diesem Zusammenhang ist es sehr unvorteilhaft, ständig Ersatzbatterien vorhalten zu müssen. Ein weiterer Nachteil ist die Infrarot-Verbindung, die ebenfalls in der Bewegungsfreiheit einschränken kann. Zudem ist unvorteilhafterweise ausdrücklich vorgesehen, daß das Tastatursegment beim Einsetzen in die Tastatur einen Schalter betätigt, der die Stromversorgung für das Tastatursegment abschaltet.

Aus der Druckschrift US 5,546,334 A ist eine ein entkoppelbare Tastatur und eine entkoppelbare integrierte Trackball-Maus bekannt, die jedoch nur zu Reparaturzwecken oder wenn das Notebook ohne Trackball verwendet werden soll, entkoppelt werden sollen. Weder die Tastatur noch die Trackball-Maus sind nach dem mechanischen Entkoppeln mit dem Notebook elektrisch verbunden und funktional betreibbar.

Aus der Druckschrift US 5,726,684 A ist ein Notebook mit einer abkoppelbaren integrierten Maus mit Trackball bekannt, wobei diese sowohl als auch per Kabel, Infrarot oder Funk betrieben werden kann. Hierzu wird die entkoppelte Maus nach Entnahme aus dem Notebookgehäuse gewendet, so daß die Rollkugel durch Bewegen über eine ebene Fläche Maussignale generieren kann. Auch hier ist eine nicht wiederaufladbare Trockenbatterie vorgesehen, die nach Verbrauch ausgewechselt werden muß

Aus der Druckschrift US 6,476,795 A ist ein Notebook bekannt, mit dem es möglich ist, Funkmäuse aufzuladen. Jedoch geschieht dies auf eine komplexe Art und Weise unter Zuhilfenahme eines dazu in einen Wechsellaufwerksschacht des Notebooks beispielsweise für das Einfügen eines CD-ROM-Laufwerkes einzuführenden Moduls. Hierbei kann über eine Zwischenbatterie im Hilfsmodul die Aufladung einer Funkmaus erfolgen. Jedoch ist das Aufladen von herkömmlichen Funkmäusen bezweckt. Die gezeigte Lösung verfolgt nicht das Ziel, eine integrierte Maus zu entkoppeln, um diese auch als externe Maus verwenden zu können. Die Maus muss vielmehr als zweite externe Maus transportiert und verstaut werden. Das Lademodul kann im Notebook verbleiben, was jedoch die Koppelschnittstelle für eventuell wichtigere Module blockiert. Eine feste Integration des Moduls wäre daher aus Platz- und Kostengründen eher unvorteilhaft.

Aus der Druckschrift US 2001/0033267 A1 ist ein Notebook mit mehreren Koppelmöglichkeiten für Funktionsmodule wie eine externe Infrarot-Maus, die drahtlos mit dem Notebook wirksam verbunden werden kann. Jedoch ist dies als zusätzliche Möglichkeit zu einer fest integrierten Maus gezeigt. Die Notebookmaus läßt sich nicht aus dem Notebook entfernen. Die Lösung geht von der Plazierung von IR-Sendern an verschiedenen Stellen des Notebooks aus, um die Bewegungsfreiheit mit einer externen gezeigten Funkmaus zu erhöhen. Das Aufladen eines koppelbaren Mausmoduls ist nicht gezeigt.

Aufgabe der Erfindung ist es daher, ein verbessertes Eingabegerät für portable Digitalcomputer sowie einen verbesserten portablen Digitalcomputer mit einem Eingabegerät vorzuschlagen, bei dem Nachteile des Standes der Technik ausgeschaltet oder zumindest stark vermindert sind.

Die diesem Patent zugrundeliegende Aufgabe wird erfindungsgemäß gelöst durch die Gegenstände der nebengeordneten Patentansprüche. Den Unteransprüchen sind jeweils Weiterbildungen der Gegenstände derjenigen abhängigen Ansprüche zu entnehmen, auf die sie jeweils rückbezogen sind.

Durch die Erfindung wird es ermöglicht, dass bei minimalen konstruktiven und technischen Mitteln ein Höchstmaß an Ergonomie und Funktionalität geschaffen wird, die den hergebrachten Benutzungsgewohnheiten der Anwender Rechnung tragen.

Ein erster Aspekt der Erfindung steht mit der Schaffung eines Eingabegerätes in Zusammenhang, das die typischen Funktionalitäten einer Maus, eines Slidepads oder eines Trackballs bereitzustellen vermag und dabei einerseits ein integraler Bestandteil eines portablen Digitalcomputers, insbesondere eines Notebooks, eines Tablet PCs, eines eBook-Lesegerätes, eines Taschencomputers,eines Beamers oder ähnlicher Geräte ist und auch in diesem mit dem Bezugsgerät verbundenen Zustand insbesondere bei Anwendungen unter Platzmangelbedingungen seine Funktion zu erfüllen vermag, das andererseits aber auf die eine oder andere Art und Weise mechanisch von dem Bezugsgerät mechanisch entkoppelbar ist, um den Benutzer in Anwendungssituationen, bei denen dem Benutzer eine ebene Unterlagenfläche und genügend Platz zur Verfügung steht, ein ergonomisch optimiertes und angenehmes entspanntes Arbeiten in einem größeren Aktionsbereich um den Digitalcomputer herum zu ermöglichen. Dabei ist von hoher Bedeutung dieses Eingabegerät sowohl handlich, praktisch, ergonomisch sowie funktional zu gestalten wozu in einer bevorzugten Ausführungsform eine kombinierte drahtgebundene/drahtlose Ausführungsform vorgeschlagen wird, in der u.a. das Aufladen einer im Eingabegerät befindlichen Batterie aus bedienergonomischer Sicht sehr vorteilhaft ist, wenn sich das Eingabegerät für den Anwendungsfall des mechanisch/elektrisch gekoppelten Zustandes im mobilen Digitalgerät befindet. Vorteilhaft ist ebensodass Umschalten von einer bevorzugten kabellosen Datenverbindung zur Verwendung des Eingabegerätes im mechanisch entkoppelten Zustand, auf eine drahtgebundene Datenverbindung zur Verwendung des Eingabegerätes im mechanisch/elektrisch gekoppelten Zustand. Insbesondere eine kabellose Verbindung zum Rechner in Zusammenhang mit einer sensorischen Abtastvorrichtung zur Detektierung von Mausbewegungen auf einer Oberfläche, erlauben ein kompaktes und mechanikfreies Mausmodul, das geschützt vor Verunreinigungen überall einsetzbar ist, d.h. ohne lästige Kabel oder lästiges Reinigen eines verschmutzten Trackballs. Auf der anderen Seite gibt es Situationen für die eine Funkverbindung der Maus mit dem digitalen Computer weniger geeignet sind, in denen eventuell die Benutzung von Funkgeräten verboten ist. Dazu gehören z.B. Flugzeuge, in denen jedoch das Benutzten von Notebooks ansich erlaubt ist. Da gerade das Mitnehmen von Notebooks für Geschäftsreisende gängig ist, insbesondere um auf längeren Flügen oder Fahrten damit zu arbeiten, ist eine Umschaltung von funkgebunde- auf eine drahtgebunde Kontaktierung des Eingabegerätes mit dem mobilen Digitalgerät ein Vorteil. Da auf Reisen meist keine ausreichend große Oberfläche zur Verwendung des Eingabegerätes als Maus vorhanden ist (z.B. Flugzeug), ist die Verwendung des Eingabegerätes im mechanisch/elektrisch gekoppelten Zustand ohnehin gegeben. Eine Möglichkeit währe auch das Umschalten von einer Funkverbindung auf eine Infrarotverbindung zur Vermeidung solcher Probleme. Auch ist es möglich in solchen Fällen ein mechanisch/elektrisch koppelbares Verbindungskabel z.B. USB zu verwenden, falls der Anwender lieber mit der Maus arbeitet.

Ein zweiter Aspekt der Erfindung steht in dem Zusammenhang mit der ergonomischen Bedienbarkeit eines relativ kompakten bzw. flach ausgebildeten Eingabegerätes im Fall der entkoppelten Verwendung als Maus. Durch die integrierung des Eingabegerätes in einen relativ flachen Gehäuseflügel ist das Eingabegerät logischerweise auch im entkoppelten Zustand entsprechend flach und kompakt ausgebildet. Zwar ist diese einfacher zu verstauen und transportieren als herkömmliche Mäuse und unterstützt die nachfolgend beschriebenen Funktionsmöglichkeiten, doch ist die Handlichkeit und Bedienbarkeit solcher Mäuse für den Verbraucher ungewohnt. Hier ist es von Vorteil das Gerät mit einem Mechanismus auszustatten, welches es dem Anwender erlaubt, das entkoppelte Eingabegerät als Maus besser Greifen und Bedienen zu können. Eine weitere Möglichkeit besteht in der vorteilhaften Verwendung des vorbenannten Greifhandmechanismus auch zur mechanischen Arretierung bzw. Fixierung des Eingabegerätes im mobilen Digitalcomputer. Diese Ausführung ist nicht auf die speziell hier aufgezeigete Lösung eines in einem digitalen Mobilgerät integrierten Eingabegerätes zur Verwendung als Maus beschränkt, und kann auf alle Mäuse aus dem Stand der Technik angewandt werden, sofern diese Lösung zur ergonomischen Bedienung einer besonders kompakten Maus angewendet werden soll.

Ein dritter Aspekt der Erfindung besteht darin, daß der portable Digitalcomputer auch dann, wenn das Eingabegerät als integraler Bestandteil des Bezugsgerätes benutzt wird, in seiner Funktionalität bereichert und verbessert wird, indem das das Bezugsgerät im Zusammenwirken mit dem Eingabegerät auf einfache Weise in einen alternativen Betriebszustand versetzt werden kann, bei dem auch eine rückseitige Bedienung problemlos möglich ist, wenn das Bezugsgerät nicht auf einer Unterlage (Tischplatte oder dergleichen) liegend betrieben wird, sondern mit einer Hand oder mit zwei Händen zumindest teilweise frei gehalten wird. Durch umschalten der Mausbedienung auf Handgreifbedienung lassen sich Dokumente, Bücher und andere Texte in buchgerechter Form konsumieren, wobei die gerätegreifede Hand mittels der Handgreifbedienung sämtliche dafür erforderlichen Operationen mir den Händen bei gleichzeitigem Halten des Gerätes durchführen kann. Dazu gehören z.B. das Seiten blättern und/oder scrollen, das Einblenden von Auswahlinformationen (z.B. Menüs), das Selektieren von Informationen z.B. über Cursortasten und viele weitere Funktionen die mit relativ ruhiger Hand durchgeführt werden können. So lassen sich beispielsweise der Acrobat-Reader und andere Programme intuitiv und einfach bedienen und Navigationsfunktionen durchführen. Diese Erfindung ist nicht auf die speziell hier aufgezeigte Lösung eines in einem digitalen Mobilgerät integrierten Eingabegerätes zur Verwendung als Maus beschränkt, und kann auf alle Mäuse aus dem Stand der Technik angewandt werden, mit der eine Handgreifbedienung mittels Koppeln an einen mobilen Digitalcomputer bewirkt werden kann.

Ein vierter Aspekt der Erfindung besteht darin daß die Funktion des Eingabegerätes wegen dessen geringer Größe und damit verbundener guter Transportabilität vorteilhaft mit weiteren Zusatzfunktionen ausgebildet sein kann.

Eine erste besonders vorteilhafte Zusatzfunktion des Eingabegerätes besteht in einem ersten Sicherheitsaspekt und der damit verbundenen Möglichkeit der Kontrolle von Zugriffsmöglichkeiten auf persönliche Daten in einem mobilen Digitalcomputer. Als persönliches Sicherheitsmodul ist das erfinderische Eingabegerät aus vorbenannten Grund besonders gut geeignet, um ein kurzes oder auch längeres Verlassen des Arbeitplatzes tätigen zu können, ohne ständig das Gerät herunterfahren zu müssen oder aufpassen zu müssen, das kein unbefugter Dritter sich an seinen Computer zu schaffen macht. Screensaver sind je nach Sicherheitanforderung nicht immer geeignet zumal oft erst nach einiger Zeit dieser aktiv wird, oder der Anwender diesen jedesmal dazu aktivieren muss, falls er es nicht vergisst. Durch das Einstecken und Mitnehmen des erfindungsgemäßen Eingabegerätes, ist es neben einer softwaregesteuerten Zugangskontrolle noch einfacherer und sicherer, wenn selbst die Möglichkeiten zur Eingabe, und das ist in diesem Fall sowohl die integrierte Eingabevorrichtung wie auch die externe Maus, nicht mehr vorhanden ist. In dem Fall werden vorbestimmte, wenn nicht sogar sämtliche Funktionen des mobilen Digitalgerätes gesperrt und und nicht bedienbar gemacht, wobei ebenfalls Aussenverbinderschnittstellen zwar gekoppelt jedoch nicht wirksam gemacht werden, um zu vermeiden, dass eine externe Maus oder dergleichen über z.B. eine andere USB-Schnittstelle gekoppelt wird und eine nicht autorisiert Person über Umwege den digitatelen Computer nutzt. Dazu kann beispielsweise das erfindungsgemäße Eingabegerät um Eigenschaften eines Authentikations-Tokens angereichert werden, indem ein die Identität des legitimen Benutzers repräsentierendes Geheimnis mit geeigneten kryptographischen Techniken im Eingabegerät abgelegt und bei Weiterentwicklungen durch bekannte kryptographische Protokolle (Challenge-Response und viele andere Protokolle) dem Bezugsgerät zur Verfügung gestellt wird. Bei reinen ldentifikationsfunktionalitäten ohne Authentifikationskomponente kann der betreffende Rechner beispielsweise die Authentikation durch eine identifikationsspezifische Passwortabfrage vornehmen, d.h., der betreffende Benutzer wird an dem im Eingabegerät gespeicherten Identifikationscode erkannt, muß sich aber durch Eingabe seines persönlichen Paßwortes in die Tastatur noch authentifizieren. Diese Sicherheits-Funktionserweiterung für das Eingabegerät muß nicht auf Identifikations- und Authentifikationsfunktionen beschränkt sein.

Eine zweite besonders vorteilhafte Zusatzfunktion des Eingabegerätes besteht in einem weiteren Sicherheitsaspekt und der damit verbunden Möglichkeit das Eingabegerät als "sicheren Hafen" für vertrauliche Informationen auszugestalten. So kann das Eingabegerät mit einem Speicher wie beispielsweise einem Flashspeicher oder einer kleinen Festplattenspeichereinrichtung ausgerüstet werden. Auch eine Koppelschnittstelle im Eingabegerät für eine entnehmbare Speicherkarte ist möglich. Dadurch können vertrauliche Daten in dem Eingabegerät zur Steuerung eines Cursors gespeichert werden, sodass diese erst gar nicht physikalisch auf dem mobilen Digitalcomputer vorhanden sein müssen. Der Vorteil liegt darin, dass der Anwender seine privaten bzw. persönlichen Daten, oder sogar streng vertrauliche Daten mitnimmt, wenn er beispielsweise vorhat den Raum kurzfristig zu verlassen oder ohne mobilen Digitalcomputer auf Reisen gehen möchte. Eine weitere Ausbildungsmöglichkeit besteht darin das Eingabegerät mit einem Chip oder mit Chipkarten auszubauen, die zahlreiche andere Funktionen abdecken, beispielsweise Rechtenachweise im Rahmen von Digital Rights Management-Systemen oder Zahlungsfunktionalitäten. Dazu kann das Eingabegerät insbesondere mit einem Schacht zur Aufnahme von PCMCIA-Karten (PC-Karten) oder Smart-Karten (Speicher- und/oder Prozessorkarten) versehen sein. Diese Erfindung ist nicht auf die speziell hier aufgezeigete Lösung eines in einem digitalen Mobilgerät integrierten Eingabegerätes zur Verwendung als Maus beschränkt, und kann auf alle Mäuse aus dem Stand der Technik angewandt werden, sofern diese obig beschriebene Ausführung und/oder Funktionen erfüllt.

Eine dritte besonders vorteilhafte Zusatzfunktion des Eingabegerätes besteht in einem weiteren Sicherheitsaspekt und der damit verbunden Möglichkeit mittels einer in dem Eingabegerät ausgebildeten Vorkehrung sicherzustellen, dass zu Transportzwecken die Grundkonfiguration des mobilen Digitalkomputers mit dem Basis-Eingabegerät erfolgt. Hierzu ist eine Rastausnehmung im Eingabegerät beispielhaft gezeigt, die das ordentliche schliessen der Notebook-Flügelteile erlaubt, wobei zusätzlich das Eingabemodul im Kopplungsschacht fixiert wird und selbst bei grossen und permanenten Rüttelbewegungen nicht herausrutschen kann. Andere Module oder eine falsche Konfiguration von Modulen lassen das schliessen der Flügelteile nicht zu und machen rechtzeitig darauf aufmerksam das Eingabegerät entsprechend einzusetzten und/oder zu konfigurieren. Der Schutzumfang der vorteilhaften Ausführung ist nicht auf Engabegeräte zur Steuerung eines Cursors beschränkt und kann zur Sicherung beliebig ausgeführter Module in einem mehrflügeligen Digitalcomputer dienen.

Eine vierte besonders vorteilhafte Zusatzfunktion des Eingabegerätes besteht in einem weiteren Sicherheitsaspekt und der damit verbunden Möglichkeit des Ver - und Entriegelns der geschlossenen Flügelteile eines zweiflügeligen portablen Digitalcomputers über das erfindungsgemäße Eingabegerät. Das Verriegeln der Hardware ist vorteilhaft, wenn für Transportzwecke das im mobilen Digitalgerät gekoppelte Eingabegerät zur Cursorsteuerung enthalten ist, und ein eventuell unbefugter versucht das Gerät einschliesslich Eingabegerät zu nutzen. Ein Öffnen der Flügelteile oder auch nur das Starten (Booten) des mobilen Digitalgerätes ließe sich nur durch entsprechende Eingabe im Eingabegerät bzw. im mobilen Digitalgerät bewerkstelligen.

Eine fünfte besonders vorteilhafte Zusatzfunktion des Eingabegerätes besteht in einem weiteren Sicherheitsaspekt und der damit verbunden Möglichkeit, das Eingabegerät zum Einrichten von Benutzeroberflächen zu nutzen. Dazu sind Konfigurations- und Einstellparameterdaten in dem Eingabegerät gespeichert, die für das Bezugsgerät notwendig sind, sodass sich das Bezugsgerät, beispielsweise ein Notebook, durch Einsetzen beziehungsweise Koppeln mit einem benutzerindividuellen, erfindungsgemäßen Eingabegerät automatisch konfiguriert und einrichtet. Selbstverständlich können dazu auch Einstellparameter im mobilen Digitalcomputer gespeichert sein, sodass nach erfolgreicher Identifizierung des betreffenden Eingabegerätes und eventuell erforderlicher Authentifizierung, entsprechende Parameter aus dem Speicher des mobilen Digitalcomputer entnommen werden. Das Einrichten der nutzerspezifischen Oberfläche ist besonders vorteilhaft für u.a. Firmen-Notebooks die von mehreren Nutzern genutzt werden. Diese Erfindung ist nicht auf die speziell hier aufgezeigete Lösung eines in einem digitalen Mobilgerät integrierten Eingabegerätes zur Verwendung als Maus beschränkt, und kann auf alle Mäuse aus dem Stand der Technik angewandt werden, sofern mit dieser das Einrichten von nutzerspezifischen Oberflächen bewirkt werden kann.

Eine sechste besonders vorteilhafte Zusatzfunktion des Eingabegerätes besteht in der Möglichkeit diese mit einem Laserpointer auszustatten, wobei das Eingabegerät im mechanisch entkoppeltem Zustand für Präsentationszwecken mittels Beamer oder dergleichen, sowohl Fernbedinungsfunktionen über das vorteilhafterweise über Funk mit dem mobilen Digitalgerät verbundene Eingabegerät ausführen zu können, wie auch z.B. Lichtpunkt-Anzeigen auf der Präsentationsfläche eines Beamers mittels dem Eingabegerät bewerkstelligen zu können. Diese Erfindung ist nicht auf die speziell hier aufgezeigete Lösung eines in einem digitalen Mobilgerät integrierten Eingabegerätes zur Verwendung als Maus beschränkt, und kann auf alle Mäuse aus dem Stand der Technik angewandt werden.

Ein fünfter Aspekt der Erfindung besteht darin dass die Funktion des mobilen Digitalgerätes durch die spezielle Ausführungsform der Koppelbucht zum Koppeln des Eingabegerätes vorteilhaft für andere Module und/oder zum Verbinden mit externen Geräten und Einrichtungen zu verwenden, sodasss im Benutzungsfall des entkoppelns des Eingabegerätes zur Verwendung als Maus, die vorteilhafte Koppelbucht genutzt werden kann um den mobilen Digitalcomputer in seinen Funktionalitäten oder seinem Systemmöglichkeiten durch andere Module oder weitere Schnittstellen zu erweitern. Eine besonders Vorteilhafte Ausbildung der Koppelbucht ist eine relativ mittig, an der Seitenkante unterhalb der Notebooktastatur angeordente Ausnehmung über zumindest zwei, vorteilhafterweise drei Seitenflächen des mobilen Digitalgerätes, in dem Bereich, wo sich in der Regel das integrierte Eingabegerät zur Steuerung eines Cursors in einem Notebook befindet. Durch die in späteren Figuren gezeigte Aussparung zumindest in der Grösse des Eingabegerätes, ergeben sich eine Reihe von Möglichkeiten, wie sie bereits zuvor beschrieben wurden, u.a. die Möglichkeit der. Konfiguration des Eingabegerätes zur rückseitigen Handgreifbedienung. Weitere Vorteile ergeben sich durch weitere Ausbildungsmöglichkeiten. So ist es möglich in die freie Koppelbucht neben dem erfindungsgemässen Eingabegerät weitere Module elektrisch und/oder mechanisch zu koppeln. Dazu gehören Adaptermodule zum wirksamen verbinden von verschiedensten Speicherkarten oder Prozessorkarten, wie Multimediacard oder Smardcart, Systemeerweiterungsmodule zur Erweiterung der Funktionalität des mobilen Digitalgerätes beispielsweise mittels GSM, GPRS, DSL, Modem, GPS, SAT-Receiver, TV, etc., sowie Aufzeichnungsgerätemodule, Abspielgerätemodule, DRM-Module, externe Speichermodule, Prozessormodule usw.. Auch ist es Möglich besondere Schnittstellenmodule einzustecken d.h. elektrisch und mechanisch zu koppeln, wie z.B. ein HUB-Modul zur Erweiterung USB-Anschlüsse oder eine Acces-Point-Modul für die kabellose LAN-Kommunikation zum Verbinden von externen Geräten und Vorrichtungen. Selbstverständlich ist das mechanisch entkoppelte Eingabegerät weiterhin elektrisch mit dem digitalcomputer verbunden und kann trotz anderer in der Koppelbucht eingesteckter Module als Maus benutzt werden, sofern dies vorgesehen ist. Dies ist durch das Umschalten von einer drahtgebunden Verbindung auf eine kabellose Verbindung bezüglich des Eingabegerätes möglich, da durch das Umschalten die Stromversorgung wie auch die drahtgebundene Kontaktierungsstelle frei werden. Auch weitere Bediengeräte in anderen Ausführungsformen sind möglich, die elektrisch/mechanisch in die Koppelbucht eingesetzt werden können und/oder in gleicher Art und Weise wie das vorbeschriebene Eingabegerät kabellos und/oder mittels Kabel mit dem mobilen Digitalcomputer verbunden werden können. Das zeigt einen weiteren Vorteil des erfinderischen Systems, denn es kann Fälle geben in denen einfach nur ein moderneres oder andersartiges Eingabegerät das ursprüngliche Eingabegerät zur steuerung eines Cursors ersetzen soll, oder in anderen Fällen in der eine spezielle Anforderung kurzzeitig andere Bedienmöglichkeiten erfordert. Zum Beispiel eine Joystick-Bedieneinheit für Computerspiele oder eine Fernbedienungseinheit für Medienplayer. Gerade für diese beiden Anwendungsfälle, aber nicht darauf beschränkt ist es auch möglich das Einsteckmodul als Computerspieleeinheit oder beispielsweise MP3-Player mit eigener Steuereinheit, Speicher sowie eventuelle Sicherheitmechanismen zur Vermeidung von Raubkopien zu versehen, an denen wiederum diverse Ein- und Ausgabemöglichkeiten angeordnet sind oder konnektiert werden können.

Zudem ist es möglich die Koppelungsbucht derart zu gestalten, das eine Vielzahl von zusätzlich eingerichteten Schnittstellen dort angeordnet sein können, welche ebenfalls die Funktionalität des mobilen Digitalcomputers erhöhen. Im Zustand des mechanisch/elektrisch gekoppelten Eingabegerätes, wie z.B. auf Reisen, würden diese Schnittstellen automatisch abgedeckt bzw. geschützt werden, zudem kann das mobile Digitalgerät optisch etwas eleganter und unkomplizierter gestaltet werden, da nicht unbedingt alle vorhandenen Verbinderschnittstellen ständig und schon gar nicht gleichzeitig gebraucht werden. So ist es vorteilhaft, die Standardschnittstellen die weniger gebraucht werden oder besondere Schnittstellen für besondere Anwendungsfälle oder redundante Schnittstellen die mehrfach vorhanden sein sollen in die Koppelbucht des mobilen Digitalcomputers anzuordnen.

Ein sechster Aspekt der Erfindung besteht darin, das erfindungsgemäße Eingabegerät für eine weitere vorteilhafte Konfiguration des mobilen Digitalcombuters zu nutzen um aus einer Notebook-Konfiguration eine Desk-Top-Konfiguration zu ermöglichen und umgekehrt. Dazu wird die im Notebook integrierte Tastatur ebenfalls mechanisch entkoppelt und die Flügelteile über das Verbindungsscharnier nach hinten geklappt, sodass der Flügel mit dem Bildschirm in der Art eines PC-Monitors zum Anwender zeigt, und der Flügelteil für die mechanisch entkoppelte Tastatur sowie für das mechanisch entkoppelte Eingabegerät als Fuß bzw. Stütze dienen kann. Das Drehscharnier bzw. Drehgelenk ist so ausgebildet und/oder zwischen den Flügelteilen des Notebooks angeordnet, das eine Drehung mehr als üblich bei Notebooks nach hinten erfolgen kann, das ein Winkel zwischen beiden Flügelrückseiten (aus Anwendersicht) von mindestens 90° Möglich ist. Selbstverständlich sind hier alle möglichen Daten- und/oder Stromkoppelungsmöglichkeiten realisierbar, eine bevorzugte Ausführungsform ist jedoch die zumindest kabellose Verbindung des Eingabegerätes und/oder der Tastatur zum mobilen Digitalcomputer. Zusätzlich zu den bereits erwähnten Ausgestaltungsvarianten könnte eine konnektierbare Kabelverbindung zwischen dem Eingabegerät und der Tastatur erfolgen, vorteilhafterweise über die bereits erwähnte USB- oder Firewireschnittstelle. Die Tastarut kann ebenfalls mit einer Batterie ausgestattet sein, die in einer weiteren Ausführungsform ebenfalls zumindest im mechanisch/elektrisch gekoppeltem Zustand mit dem Notebook über die Stromversorgung des Notebooks aufgeladen werden kann. Die Lösung verschafft dem Anwender noch mehr Bewegungsfreiheit, da somit auch der Abstand des Bildschirmes zum Anwender frei wählbar ist, und die Tastatur auf jeden Fall weniger Platz benötigt, wie der gesamte Flügelteil des Notebooks. Zudem können für Präsentationszwecke das Notebook aus Kabellängengründen in der Nähe eines entfernten Beamers aufgestellt werden und die gesamte Bedienung mittels Tastatur und Eingabegerät vom Präsentator aus erfolgen.

Zur Realisierung derartiger Eingabegeräte wird es erforderlich sein, eine Stromquelle und eine komplexe Elektronik vorzusehen. Die Stromquelle kann als Akkumulator ausgestaltet sein, und es ist darüber hinaus möglich, das Bezugsgerät als Ladestation für das Wiederaufladen des Akkumulators einzusetzen. Für manche Anwendungsbereiche wird es ausreichen, Maus-, Slidepad- und/oder Trackballfunktionalitäten mit einem fest verdrahteten oder fest programmierten Elektroniksystem zu steuern. Es kann aber durchaus auch im Rahmen der erfindungsgemäßen Lösung vorgesehen werden, das Eingabegerät als solches wiederum mit einem eigenständigen Computer zu versehen. Beispielsweise kann anstelle eines herkömmlichen Slidepads ein berührungsempfindlicher Bildschirm verwendet werden. Durch derartige Ansätze ist es möglich, ein Mobiltelefon oder einen PDA-Taschenrechner technisch beispielsweise durch Vorsehen eines berührungsempfindlichen Bildschirmes und eines mechanischen und elektrischen Andockinterfaces zum Bezugsgerät so auszugestalten, dass diese auch eigenständig nutzbaren Gerätschaften in ihrer bestimmungsgemäß modifizierten Form wiederum als Eingabegerät im Sinne der erfindungsgemäßen Lösung einsetzbar sind.

Die Erfindung wird im folgenden Text anhand von Ausführungsbeispielen, die in der Zeichnung zur Veranschaulichung ohne Beschränkung der Allgemeinheit der darin zum Ausdruck gelangenden Erfindung illustriert sind, näher erläutert:
- **Fig. 1**: zeigt eine schematische Darstellung einer ersten erfindungsgemäßen Ausführungsform mit einem zweiflügeligen Notebook-Digitalcomputer in drei verschiedenen Betriebszuständen.
- **Fig. 2**: zeigt schematisch verschiedene Einsatzmöglichkeiten wie auch besonders bevorzugte Ausführungsmöglichkeiten des erfindungsgemäßen Eingabegerätes mit dem mobilen Digitalcomputer gemäß der in **Fig. 1** dargestellten ersten Ausführungsform.
- **Fig. 3**: zeigt eine schematische Darstellung einer zweiten erfindungsgemäßen Ausführungsform mit einem einteiligen "Tablet PC" in verschiedenen Betriebszuständen.
- **Fig. 4**: zeigt eine schematische Darstellung einer ersten vorteilhaften Weiterentwicklung der Erfindung gemäß der in **Fig. 1** dargestellten ersten Ausführungsform.
- **Fig. 5**: zeigt eine schematische Darstellung einer zweiten vorteilhaften Weiterentwicklung der Erfindung gemäß in **Fig. 1** dargestellten, ersten Ausführungsform.
- **Fig. 6**: zeigt eine schematische Darstellung eines ersten Aspektes der vorder - und rückseitigen Bedienung der, der Erfindung gemäß in **Fig. 1** dargestellten, ersten Ausführungsform.
- **Fig. 7**: zeigt eine schematische Darstellung eines zweiten Aspektes der vorder - und rückseitigen Bedienung der, der Erfindung gemäß in **Fig. 1** dargestellten, ersten Ausführungsform.
- **Fig. 8**: zeigt eine schematische Darstellung einer dritten erfindungsgemäßen Ausführungsform mit einem zweiflügeligen Notebook-Digitalcomputer in drei verschiedenen Betriebszuständen.
- **Fig. 9**: zeigt eine schematische Darstellung einer ersten vorteilhaften Weiter-entwicklung der Erfindung gemäß der in **Fig. 8** dargestellten dritten Ausführungsform.
- **Fig. 10**: zeigt eine erste Weiterentwicklung der erfindungsgemäßen Lösung, bei der das Eingabegerät mit einer elektronischen Einrichtung zur Benutzeridentifikation und/oder Benutzerauthentikation versehen ist.
- **Fig. 11**: zeigt eine zweite Weiterentwicklung der erfindungsgemäßen Lösung, bei der das Eingabegerät mit einer elektronischen Einrichtung zur Benutzeridentifikation und/oder Benutzerauthentikation versehen ist.
- **Fig. 12**: zeigt eine dritte Weiterentwicklung der erfindungsgemäßen Lösung, bei der der portable Digitalcomputer mit einer herausnehmbaren Tastatur versehen ist.
- **Fig. 13**: zeigt in einer schematisierten perspektivischen Darstellung verschiedene Betriebszustände der in **Fig. 12** dargestellten Ausführungsform.
- **Fig. 14**: zeigt in einer schematisierten perspektivischen Darstellung verschiedene Betriebszustände einer Weiterentwicklung der in **Fig. 12** dargestellten Ausführungsform.
- **Fig. 15**: zeigt eine perspektivische Ansicht beziehungsweise eine Draufsicht auf eine weitere Ausführungsform der erfindungsgemäßen Lösung mit einer multifunktionalen Koppelbucht.
- **Fig. 16**: zeigt eine schematische Querschnittsansicht einer Weiterentwicklung einer erfindungsgemäßen Lösung mit einer verbesserten elektrischen Steckverbinder-Schnittstelle.
- **Fig. 17**: zeigt eine Draufsicht auf eine weitere Ausführungsform der erfindungsgemäßen Lösung mit einem zweiteiligen Eingabegerät.
- **Fig. 18**: zeigt eine Querschnittsansicht des zweiteiligen Eingabegerätes aus **Fig. 17****.**
- **Fig. 19**: zeigt eine Draufsicht beziehungsweise eine schematisierte Querschnittsansicht eines erfindungsgemäßen Notebook-Digitalcomputers mit einer Weiterentwicklung eines zweiteiligen Eingabegerätes aus **Fig. 17****.**
- **Fig. 20**: zeigt den erfindungsgemäßen Notebook-Digitalcomputer aus **Fig. 19** mit eingestecktem beziehungsweise herausgezogenem Eingabegerät.
- **Fig. 21**: zeigt eine Weiterentwicklung des erfindungsgemäßen Notebook-Digitalcomputers aus **Fig. 19** mit einem durch ein Kabel an den Notebook-Digitalcomputer angekoppelten Unterteil des Eingabegerätes.
- **Fig. 22**: zeigt eine Weiterentwicklung des erfindungsgemäßen Notebook-Digitalcomputers aus **Fig. 19** mit einem wendbaren Eingabegerät.
- **Fig. 23**: zeigt eine Weiterentwicklung eines aus zwei Teilen zusammengesetzten erfindungsgemäßen Eingabegerätes.
- **Fig. 24**: zeigt eine andere Weiterentwicklung eines aus zwei Teilen zusammengesetzten erfindungsgemäßen Eingabegerätes.
- **Fig. 25**: zeigt eine andere Weiterentwicklung eines aus zwei Teilen zusammengesetzten erfindungsgemäßen Eingabegerätes.
- **Fig. 26**: zeigt schematisch eine Übersicht über verschiedene Varianten der Integration des Eingabegerätes in den Tastaturteil eines Notebooks.
- **Fig. 27**: zeigt schematisch eine Übersicht über weitere Varianten der Ausgestaltung der Gehäuseform des Eingabegerätes sowie der Integration des Eingabegerätes in den Tastaturteil eines Notebooks.

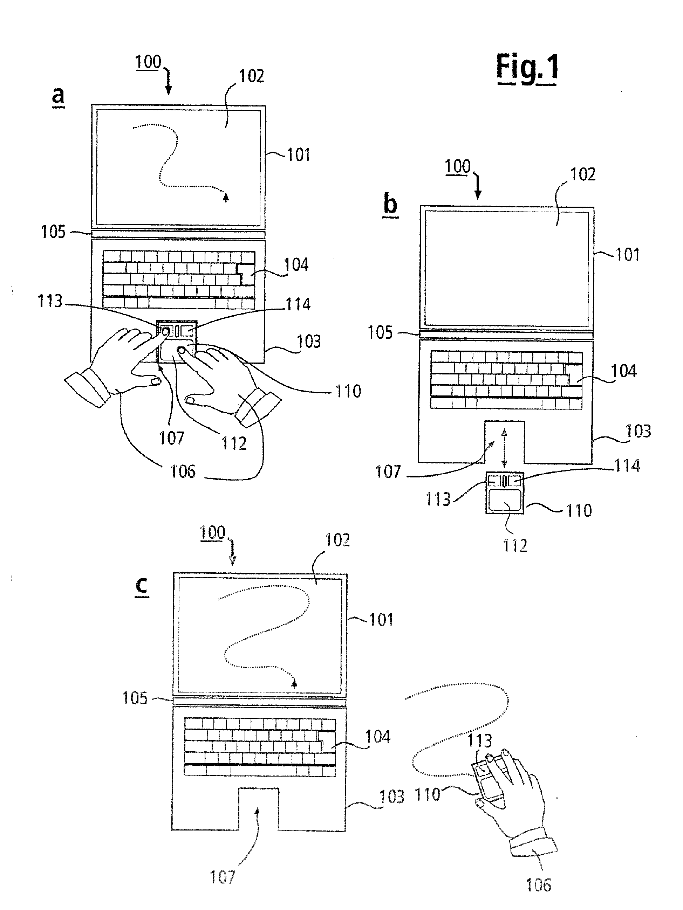

**Fig. 1** zeigt in den **Teil-****Fign. 1a**, **1b** und **1c** eine schematische Darstellung einer ersten Ausführungsform des erfindungsgemäßen portablen Digitalcomputers mit einem zweiflügeligen Notebook-Digitalcomputer 100 in drei verschiedenen Betriebszuständen a, b und c. Das zweiflügelige Notebook 100 umfasst ein Deckelteil 101 mit einem darin eingelassenen Anzeigedisplay 102 sowie ein Prozessorteil 103 mit einer darauf angeordneten Tastatur 104. Der Deckelteil 102 und der Prozessorteil 103 sind mit einer Scharniereinrichtung 105 nach der Art eines Buches auf- und zuklappbar mechanisch miteinander gekoppelt. Der Prozessorteils 103 umfasst in seinem Inneren nicht näher dargestellte Systemkomponenten wie eine Hauptplatine mit einer Zentraleinheit, mit Arbeits- und Massenspeicher und anderen für ein Notebook üblichen Komponenten. Wie bei Notebooks allgemein üblich, ist das Anzeigedisplay 102 durch die Scharniereinheit 105 hindurch elektrisch mit den elektronischen Komponenten im Prozessorteil 103 verbunden.

Es versteht sich, dass die beschriebenen Ausführungsbeispiele die Allgemeinheit der vorgestellten Erfindung nicht zu beschränken vermögen. Insbesondere ist beispielsweise davon auszugehen, dass in anderen von der Erfindung erfaßten Ausführungsbeispielen der Prozessor auch in einem Deckelteil angeordnet sein kann. Auch die Tastatur kann anders angeordnet oder fortgelassen sein. Die Erfindung bezieht sich auf alle bekannten elektronischen Mobilgeräte, zu denen auch PDAs, Mobiltelefone, e-Book-Lesageräte, Mediaabspielgeräte, Fernbe-dienungsgeräte, mobile TV-, Radio- oder Videogeräte sowie Kameras und Beamer gehören.

Das Gehäuse des Prozessorteils 103 weist in seinem der Scharniereinheit 105 abgewandten und dem Benutzer 106 zugewandten Bereich eine Bucht 107 auf, die zur Aufnahme eines Eingabegerätes 110 eingerichtet ist. Das Eingabegerät 110 weist bei dem gezeigten Ausführungsbeispiel auf der Oberseite ein Slidepad 112 sowie einen ersten Betätigungstaster 113 und einen zweiten Betätigungs-taster 114 auf. Auf der Unterseite beinhaltet das Eingabegerät 110 eine Rollkugel mit dazugehörigen Rollkugel-Bewegungssensoren (beides nicht dargestellt) oder eine optische Untergrundabtastvorrichtung (nicht dargestellt), wie sie jeweils auch in einer Maus anzutreffen sein können. Ferner beinhaltet das Eingabegerät 110 eine Stromquelle wie eine Batterie oder einen Akkumulator (nicht dargestellt) sowie eine geeignete elektronische Schaltung (nicht dargestellt), mit der die im folgenden beschriebene Funktionalität erbracht werden kann.

Wenn das Eingabegerät 110 wie in **Fig. 1a** dargestellt in die Bucht 107 eingesetzt ist, kann das Eingabegerät 110 in dieser Bucht 107 durch geeignete Rastvorrichtungen (nicht dargestellt) arretiert werden. In diesem in **Fig. 1a** dargestellten Betriebsmodus kann der Benutzer 106 das Notebook 100 durch Betätigung des Slidepads 112 und/oder der Taster 113, 114 beeinflussen.

Der Prozessorteil 103 sowie das Eingabegerät 110 weisen je eine geeignete Einrichtung zur drahtlosen Datenübertragung (nicht dargestellt) wie beispielsweise eine Einrichtung zur Datenübertragung über eine kurzreichweitige Funkverbindung (etwa gemäß dem Bluetooth-Standard etc.) oder eine Einrichtung zur Datenübertragung über eine Infrarotstrecke (etwa gemäß dem IRDA-Standard) auf.

Es kann vorgesehen sein, dass der Prozessorteil 103 und das Eingabegerät 110 in dem in **Fig. 1a** dargestellten Betriebsmodus durch mindestens eine elektrische Steckverbindereinrichtung (nicht dargestellt) oder andere geeignete Kontaktanordnungen (nicht dargestellt) elektrisch miteinander gekoppelt sind, um die aus den Bedienvorgängen des Benutzers 106 resultierenden Informationssignale den im Prozessorteil 103 angeordneten Bauelementen zuzuspeisen. In diesem Betriebsmodus kann die Stromversorgung des Eingabegerätes 110 durch die Steckverbindereinrichtung oder durch andere Kontaktanordnungen vom Prozessorteil 103 übernommen werden.

Wird das Eingabegerät 110 - wie in **Fig. 1b** gezeigt - aus dem Prozessorteil 103 herausgelöst und aus der Bucht 107 herausgezogen, so kann es der Benutzer 106 - wie in **Fig. 1c** gezeigt - nach der Art einer Maus benutzen. Die durch die Rollkugelsensoren beziehungsweise durch die optische Abtasteinrichtung generierten Bewegungssignale sowie Signale, die eine Betätigung der Tasten 113 und/oder 114 anzeigen, werden über die Einrichtung zur drahtlosen Datenübertragung (nicht dargestellt) an den Prozessorteil 103 übertragen und dort wie herkömmliche Maus-Signale ausgewertet und - falls erforderlich - angezeigt.

Nach erfolgtem Gebrauch verriegelt der Benutzer das Eingabegerät 110 zum Transport oder zur Verwendung des Eingabegerätes in elektrisch/mechanisch gekoppeltem Zustand wieder in der Bucht 107 des Prozessorteils 103, wie es in **Fig. 1** **a** gezeigt ist.

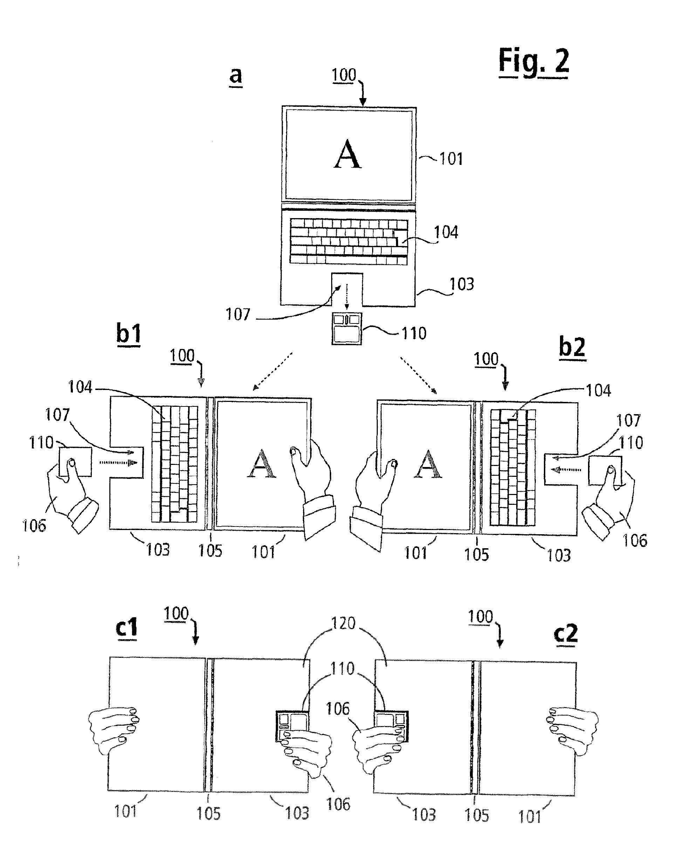

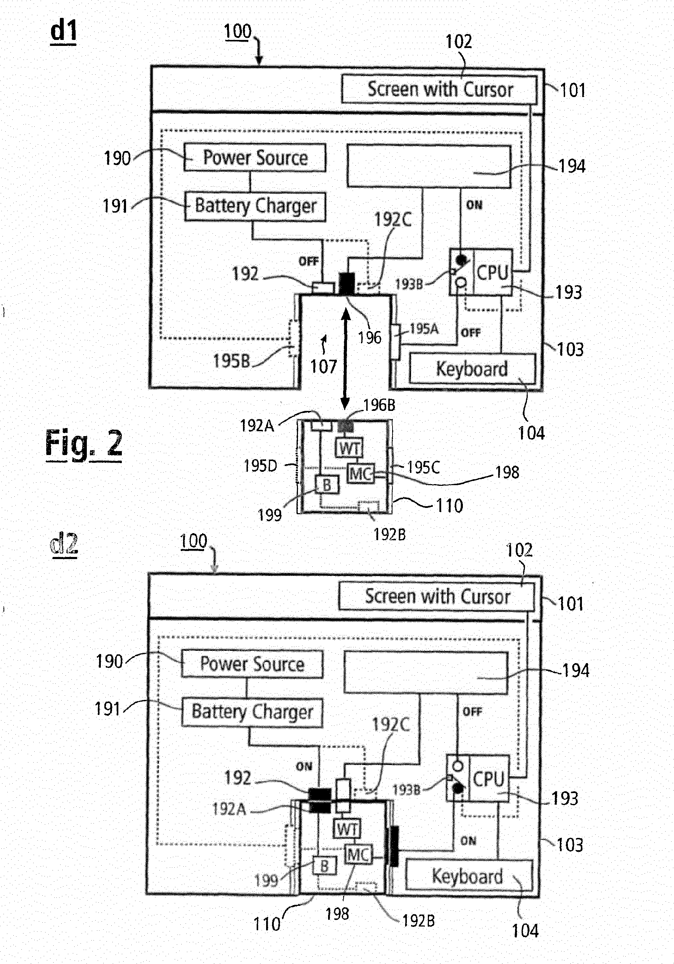

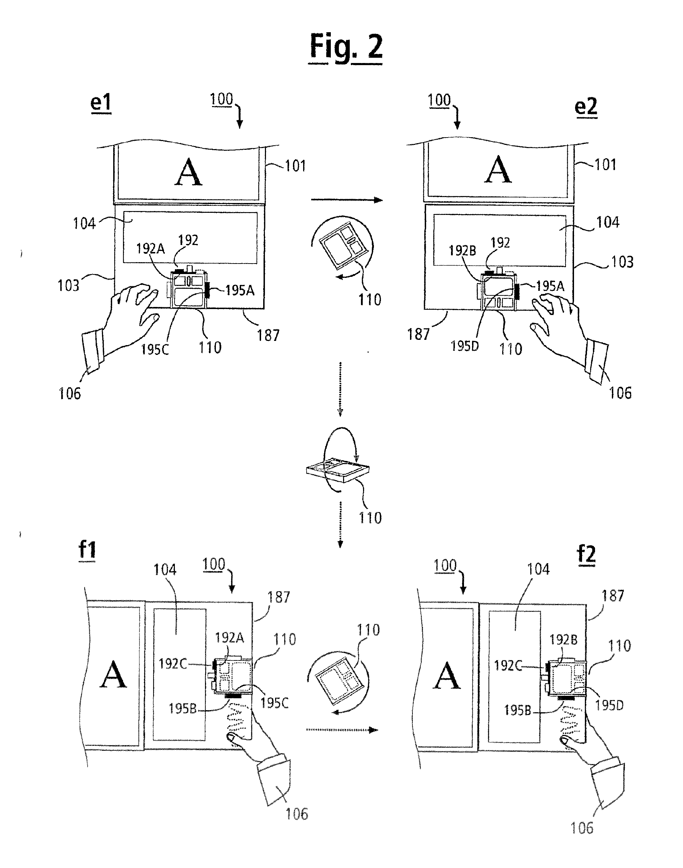

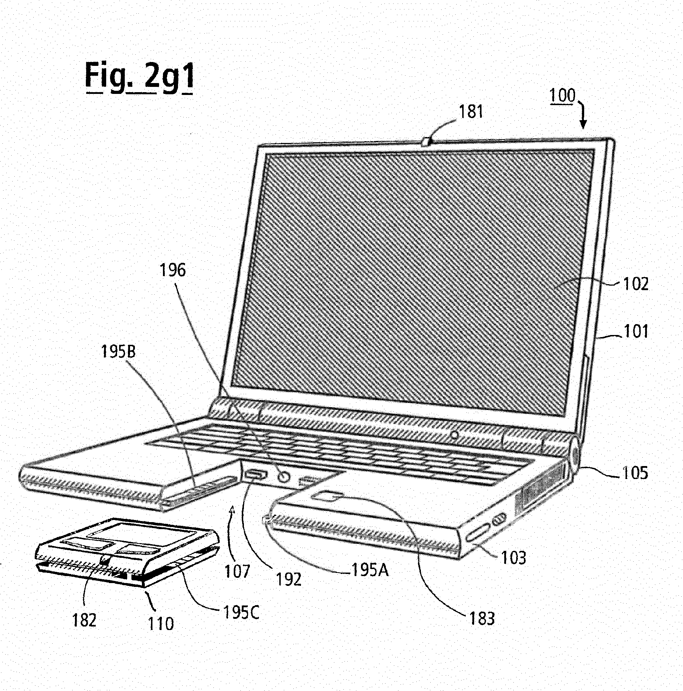

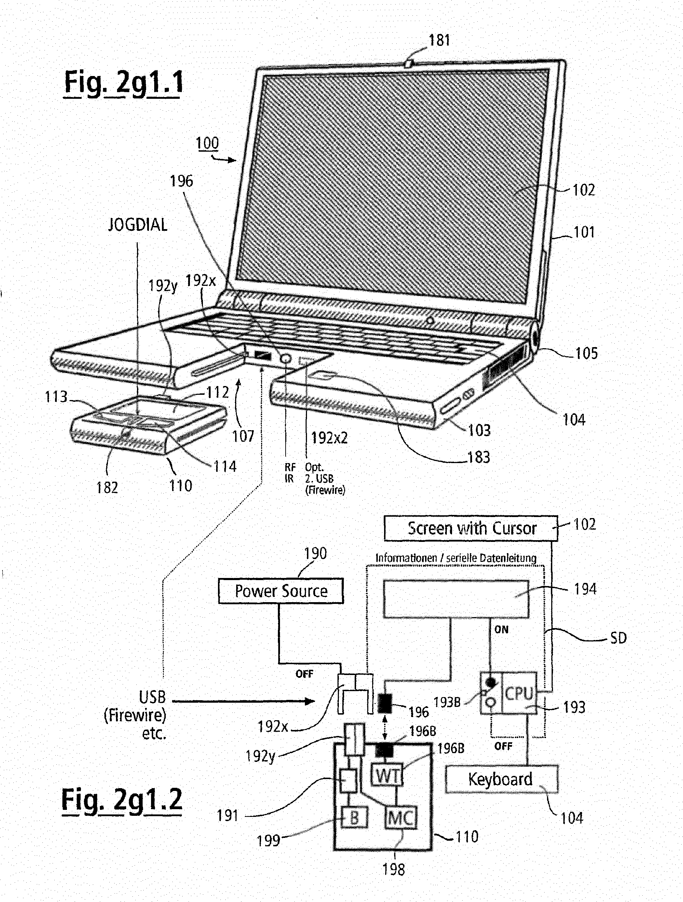

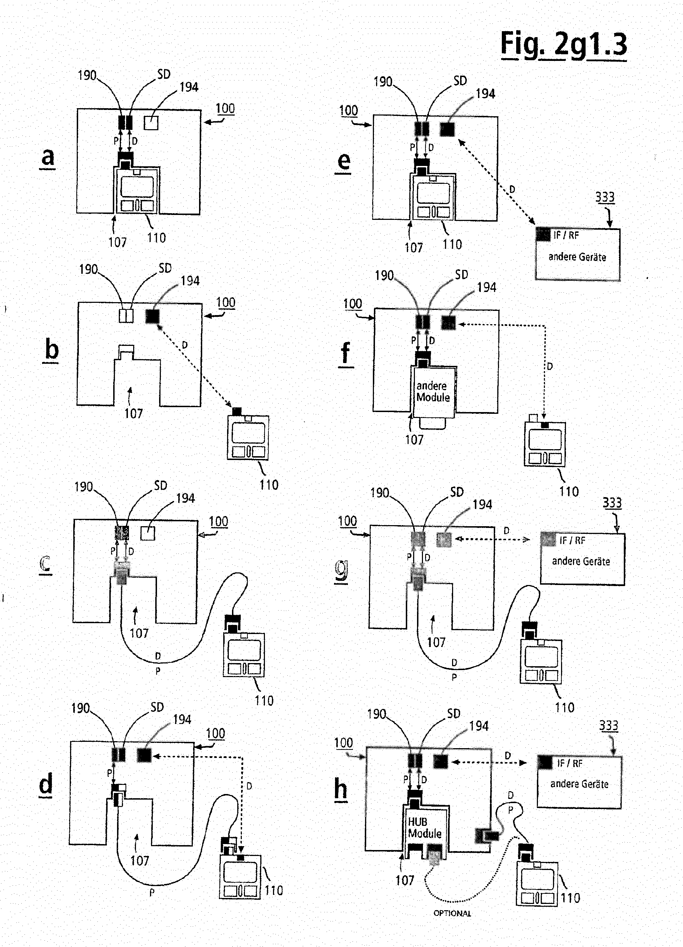

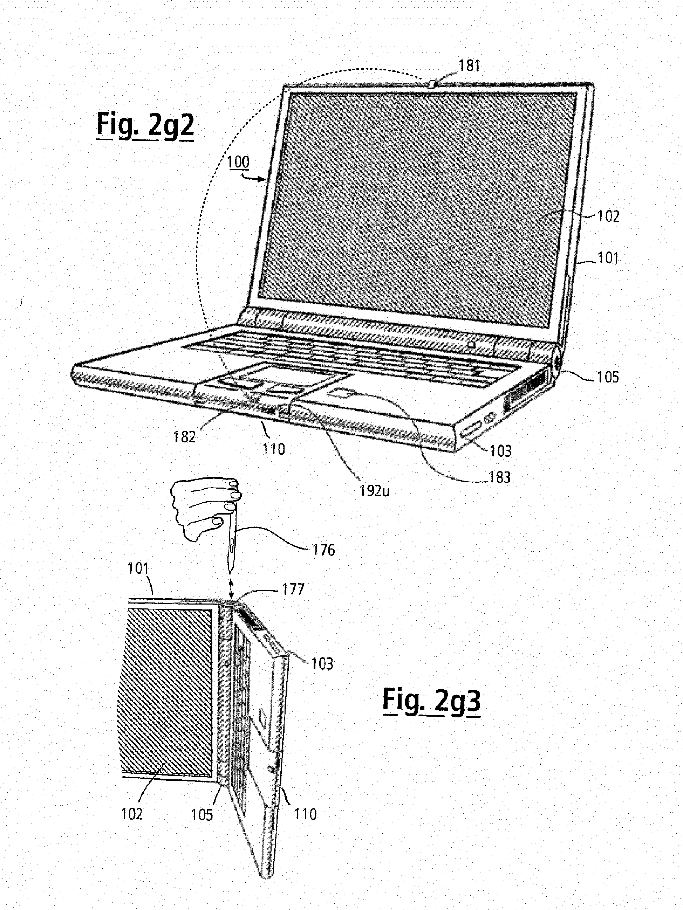

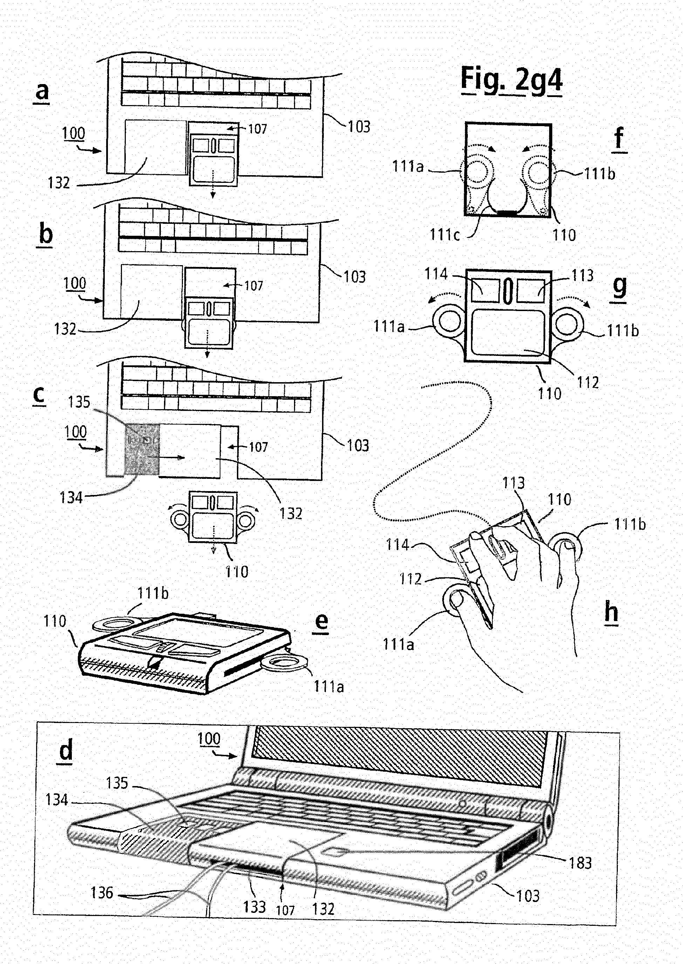

**Fig. 2** zeigt schematisch verschiedene Einsatzmöglichkeiten der Erfindung gemäß der in **Fig. 1** dargestellten ersten Ausführungsform des erfindungsgemäßen portablen Digitalcomputers mit einem zweiflügeligen Notebook-Digitalcomputer 100 in einer bevorzugten Weiterentwicklung. Der in **Fig. 2a** gezeigte Betriebszustand entspricht dabei dem Betriebszustand aus **Fig. 1****b.** In der weiterentwickelten Ausführungsform kann das Eingabegerät 110 nicht nur - wie schon in **Fig. 1** dargestellt - in einer ersten Orientierung in die Bucht 107 im Prozessorteil 103 eingesetzt werden, bei der die Bedienelemente, insbesondere das Slidepad 112 und die Taster 113, 114 auf derselben Seite des Prozessorteils 103 angeordnet sind wie die Tastatur 104. In der weiterentwickelten Ausführungsform kann das Eingabegerät 110 vielmehr auch in einer zweiten Orientierung in die Bucht 107 im Prozessorteil 103 eingesetzt werden, bei der die Bedienelemente, insbesondere das Slidepad 112 und die Taster 113, 114 auf der zu Seite des Prozessorteils 103, auf der die Tastatur 104 liegt, entgegengesetzten Seite (der Unterseite 120 des Prozessorteils 103) hin orientiert sind. Durch diese Eigenschaft kann das Eingabegerät 110 rückseitig mit den Fingern einer das Notebook 110 haltenden Hand 106 bedient werden, wenn das Notebook 110 nach Art eines Buches mit im wesentlichen vertikal orientierter Scharniereinheit 105 gehalten wird. Durch dieses Umorientieren des Eingabegerätes 110 mit dem Slidepad 112 und den Tastern 113, 114 zur Rückseite des Gerätes 100 wird es ermöglicht, eine Vielzahl von Funktionen auszuführen, die bei gleichzeitigem Greifen beziehungsweise Halten des Gerätes 100 mit den Fingern der gerätehaltenden Hand ausgelöst werden.

Vorteilhafterweise wird durch durch den Umkoppelungsvorgang selbst ein Handgreifbedienungsmodus eingerichtet bzw. eingestellt, sodasss entsprechende Funktionen über die Eingabemittel des Eingabegerätes für eine optimale Bedienung mit den rückseitigen Fingern der gerätegreifenden Hand nutzbar aber auch ergonomisch und sinnvoll sind. So können mittels softwaregesteuerter Umprogrammierung der Eingabemittel durch den eingeschalteten Handgreifmodus eine Vielzahl von Funktionen mittels der beispielsweise Taster und/oder dem Jog-Dial ausgeführt werden, die so nicht als entkoppelte Maus oder integriertes Eingabegerät auf der Tastaturseite möglich oder Sinnvoll währen. Dazu gehören u.a. das Blättern mit den Tasten und/oder Scrollen und/oder anteuern zum selektieren einer auf dem Display angezeigten Information in der Horizontalen, oder das Scrollen und/oder ansteuern zum selektieren einer auf dem Display angezeigten Information in der Vertikalen mittels dem Jog-Dial. Möglich ist auch das Einblenden einer Informationsauswahl (z.B. Menü) mittels Drücken beider Tasten 113 und 114 aus Fig. 1, oder das Einblenden von Auswahlinformationen mittels Drücken des Jog-Dails (Bestätigen).

Insbesondere sind eBook-Anzeigeprogramme oder beispielsweise der Acrobat Reader zum Darstellen und Bedienen von PDF-Dateien auf besonders vorteilhafte Weise möglich. In einer Ausführungsform werden entsprechenden Funktionen beim Einsetzen des Eingabegerätes 110 selbsttätig umprogrammiert oder konfiguriert. Dazu zählen insbesondere das Ein- und Ausschalten des Digitalcomputers oder des Bildschirmes, das Aktivieren oder Deaktivieren eines Stifteingabemodus, eines Energiesparmodus etc., das Blättern und/oder Scrollen, das Umschalten in einen anderen Betriebsmodus, das Einrichten von Geräte- und/oder Softwareeigenschaften, das Bereitstellen von Informationen auf dem Display, das Ansteuern von Informationen auf dem Display, das Selektieren und/oder Markieren von auf dem Display angezeigten Informationen, das Bewegen von auf dem Display angezeigten Informationen, das Bestätigen von markierten oder eingegebenen Informationen sowie das Ausüben von anderen auf dem Bildschirm angezeigten oder nicht angezeigten Funktionen. Die Ausführungsformen des Eingabegerätes 110 können hinsichtlich der Ausgestaltung der darin verbauten Sensoren (Slidepad, Taster, Rollkugel, kapazitative Sensoren, druckempfindlicher Bildschirm, Mehrfunktionstaster, Kreuzwippentaster und anderer Tasten etc. pp) unterschiedlich sein. Ebenso ist es möglich, angeordnete Eingabetaster in Kombination oder gleichzeitig zu bedienen und/oder in Kombination mit einer Eingabe durch den Daumen auf einen Taster oder auf der sensitiven Anzeigenfläche auf der Vorderseite. Auf die eingangs erwähnten Druckschriften WO 2001073673 A2 und WO 1999015982 A1 wird in diesem Zusammenhang besonders Bezug genommen. Die Möglichkeiten werden hier nicht noch einmal aufgeführt, da der Fachmann diese aus den angegebenen Druckschriften kennt.

**Fig. 2b1** zeigt eine Draufsicht auf die Tastatur- und Bildschirmseite des zweiflügeligen Notebook 100 in einer bevorzugten Ausrichtung für Linkshänder, wohingegen **Fig. 2b2** eine Draufsicht auf die Tastatur- und Bildschirmseite des zweiflügeligen Notebooks 100 in einer bevorzugten Ausrichtung für Rechtshänder zeigt. Die **Fig. 2c1** zeigt die Rückseite des in **Fig. 2b1** dargestellten Notebooks 100, das von einem Linkshänder-Benutzer 106 buchartig gehalten wird. Die **Fig. 2c2** zeigt entsprechend die Rückseite des in **Fig. 2b2** dargestellten Notebooks. 100, das von einem Rechtshänder-Benutzer 106 buchartig gehalten wird. Vorteilhafterweise ist die Orientierung der dargestellen Informationen auf dem Bildschirm des mobilen Digitalcomputers von der Konfiguration des Eingaberätes und/oder der Gerätehaltung bzw. Gerätestellung abhängig. Dies kann mittels einem aus dem Stand der Technik bekannten und hier nicht näher ausgeführtem Schwerkraftschalter (Sensor) automatisch erfolgen, oder durch eine Eingabe durch den Anwender oder in Kombination von beiden eingestellt werden.

**Fig. 2d1** zeigt schematisch ein beispielhaftes vergröbertes elektronisches Blockschaltbild einer Weiterentwicklung der in **Fig. 1** dargestellten Ausführungsform eines erfindungsgemäß ausgestalteten Notebooks 100 mit einer Bucht 107 zum Einstecken des Eingabegerätes 110. Eine Stromquelle 190 ist mit dem Eingang eines Ladesteuergerätes 191 verbunden. Der Ausgang des Ladesteuergerätes 191 ist mit einer ersten elektrischen Steckverbinder- oder Kontakteinrichtung 192 in der Bucht 197 verbunden. Die Zentraleinheit CPU 193 des Notebooks 100 kann mittels einer Umschalteinrichtung 193B einen (gegebenenfalls auch bidirektionalen) Datenstrom zwischen einer Kommunikationseinrichtung 194 und einer elektrischen Kontaktverbindung 195A, und/oder 195B freigeben. In einem anderen Betriebszustand der Umschalteinrichtung 193B gibt die Zentraleinheit 193 einen (gegebenenfalls auch bidirektionalen) Datenstrom zwischen der Kommunikationseinrichtung 194 und einer Sende-/Empfangseinrichtung 196 für drahtlose Datenübertragung (beispielsweise nach dem Bluetooth-Protokoll, IRDA oder dergleichen) frei.

Das Eingabegerät 110 verfügt über eine erste elektrische Steckverbindereinrichtung 192A, die mit der ersten elektrischen Steckverbindereinrichtung 192 in der Bucht 197 in Kontakt gebracht werden kann. Ferner verfügt das Eingabegerät 110 über eine zweite Steckverbindereinrichtung 195C und/oder 195D, die mit der elektrischen Steckverbindung 195A und/oder 195B in der Bucht 107 in Kontakt gebracht werden können. Schließlich ist in dem Eingabegerät eine Sende-/Empfangseinrichtung 196B für drahtlose Datenübertragung (beispielsweise nach dem Bluetooth-Protokoll, IRDA oder dergleichen) vorgesehen, die dafür eingerichtet ist, mit der entsprechenden Einrichtung 196 im Notebook 100 zu kommunizieren. Der Datenaustausch zwischen dem Notebook 100 und dem Eingabegerät 110 ist somit wahlweise drahtgebunden über die elektrische Steckverbindereinrichtung 195A, 195B, 195C und/oder 195D oder drahtlos über die Übertragungseinrichtung 196 möglich. Die Stromversorgung des Eingabegerätes 110 erfolgt durch einen Akkumulator 199. Die Steuerung der internen Vorgänge des Eingabegerätes 110 sowie des Datenaustausches mit dem Notebook 100 erfolgt durch eine geeignete Elektronik, die beispielsweise insbesondere eine Steuerungseinheit 198.

Die besonders weiterentwickelte elektronische Ausstattung sowie die in **Fign. 2d1** und **2d2** schematisch dargestellte Anordnung von elektrischen Kontaktverbindern ermöglicht eine besonders flexible Orientierung des Eingabegerätes 110 relativ zum Prozessorteil 103. Eine Minimalkonfiguration sieht notebookseitig vor:
a) ein Ladesteuergerät 191 mit einer ersten elektrischen Steckverbinder- oder Kontakteinrichtung 192 zum Aufladen des Akkumulators 199 im Eingabegerät 110,
b) eine Sende-/Empfangseinrichtung 196 für drahtlose Datenübertragung (beispielsweise nach dem Bluetooth-Protokoll, IRDA oder dergleichen) oder eine Steckverbinder- bzw. Kontaktschnittstelle für Kabelverbinder zum elektrischen Verbinden des Eingabegerätes 110 mit dem Notebook 100 für den entkoppelten Betriebszustand des Eingabegerätes 100,
c) eine elektrische Kontaktverbindungsschnittstelle 195A in der Bucht 107 für den gekoppelten Betriebszustand des Eingabegerätes 110.

Eine weitere Ausstattungsvariante beinhaltet alle erforderlichen Kontakte, um zwei verschiedene Orientierungen des Eingabegerätes mit 180° Drehung um eine senkrecht auf dem Slidepad 112 stehende Achse zu ermöglichen, beispielsweise um nach Belieben des Anwenders 106 auf dem Eingabegerät 110 angeordnete Tasten 113, 114 mehr zur Scharniereinrichtung 105 hin oder mehr zur Vorderkante des Prozessorteils 103 hin auszurichten. Diese Ausstattungsvariante benötigt insbesondere zusätzlich einen weiteren Batteriekontakt 192B am Eingabegerät 110 und einen Kontakt 195D seitwärts an dem Eingabegerät 110. Andere Positionen und Anordnungen sind möglich.

Für eine zusätzliche Möglichkeit des Schaffens eines weiteren Betriebszustandes des eingesetzten Eingabegerätes 110, bei dem das Eingabegerät 110 um eine parallel zur Ebene des Slidepads 112 sowie parallel zur Gehäusekante verlaufende Achse um 180° gedreht ist, wodurch die exemplarisch gezeigten Eingabemittel 112, 113 und 114 des Eingabegerätes 110 rückseitig bedienbar gemacht werden, werden darüberhinaus ein weiterer Ladestromkontakt 192C in der Bucht 107 sowie ein weitere Datenstromkontakt 195B in der Seitenwand der Bucht 107 benötigt.

Eine im wesentlichen quadratische Ausgestaltung des Gehäuses des Eingabegerätes 110 sowie der Bucht 107 ermöglicht weitere Betriebszustände des in die Bucht eingesteckten Eingabegerätes 110, die sich jeweils durch eine Drehung um die senkrechte Achse um 90° unterscheiden. Es versteht sich, dass dadurch unterschiedliche Betriebszustände bzw. Betriebsmodi eingerichtet werden können, die entweder hardwareseitig oder softwareseitig durch das Koppeln automatisch eingestellt werden, oder durch eine Eingabe des Anwenders oder durch eine Kombination aus automatischer Bereitstellung von auswählbaren Konfigurationmöglichkeiten welche beispielsweise nach dem Koppeln angezeigt werden, um diese durch Eingabe zu selektieren und zu bestätigen.

Anstelle der Anordnung des Ladesteuergerätes (Ladecontroller, Wiederstände) im digitalen Mobilgerät kann dieser auch im Eingabegerät bzw. in einem Koppelmodul, egal welcher Ausbildung untergebracht sein.

**Fig. 2e1** zeigt den Betrieb des Notebooks mit eingesetztem Eingabegerät 110, wobei das Slidepad 112 und die Taster 113,114 auf der Tastaturseite (Vorderseite) des Prozessorteils 103 liegen und derartig angeordnet sind, sodass das Slidepad zur vorderen Gehäusekante 187 des Prozessorteils 103 hin ausgerichtet ist, wohingegen die Taster 113, 114 zur Scharniereinheit 105 hin orientiert sind. Hierbei sind beispielhaft die Kontaktverbinderschnittstellen 192, 192A, 195A, 195C angeordnet, beziehungsweise aktiv. **Fig. 2e2** zeigt den Betrieb des Notebooks mit eingesetztem Eingabegerät 110, wobei das Slidepad 112 und die Taster 113,114 auf der Tastaturseite (Vorderseite) des Prozessorteils 103 liegen und derartig angeordnet sind, sodass das Slidepad zur Scharniereinheit 105 hin ausgerichtet ist, wohingegen die Taster 113, 114 vorderen Gehäusekante 187 des Prozessorteils 103 hin orientiert sind. Hierbei sind beispielhaft die Kontaktverbinderschnittstellen 192, 192B, 195A, 195D angeordnet, beziehungsweise aktiv. **Fig. 2f1** zeigt den Betrieb des Notebooks mit eingesetztem Eingabegerät 110, wobei das Slidepad 112 und die Taster 113,114 auf der Rückseite des Prozessorteils 103 liegen und derartig angeordnet sind, sodass das Slidepad zur vorderen Gehäusekante 187 des Prozessorteils 103 hin ausgerichtet ist, wohingegen die Taster 113, 114 zur Scharniereinheit 105 hin orientiert sind. Hierbei sind beispielhaft die Kontaktverbinderschnittstellen 192C, 192A, 195B, 195C angeordnet, beziehungsweise aktiv. **Fig. 2f2** zeigt den Betrieb des Notebooks mit eingesetztem Eingabegerät 110, wobei das Slidepad 112 und die Taster 113,114 auf der Rückseite des Prozessorteils 103 liegen und derartig angeordnet sind, sodass das Slidepad zur Scharniereinheit 105 hin ausgerichtet ist, wohingegen die Taster 113, 114 vorderen Gehäusekante 187 des Prozessorteils 103 hin orientiert sind. Hierbei sind beispielhaft die Kontaktverbinderschnittstellen 192C, 192B, 195D, 195B angeordnet, beziehungsweise aktiv.

**Fig. 2g1** zeigt eine entsprechende perspektivische Darstellung des Notebooks 100 mit herausgenommenem Eingabegerät 110, wohingegen Fig. 2g2 eine entsprechende perspektivische Darstellung des Notebooks 100 mit eingestecktem Eingabegerät 110 zeigt.

In der perspektivischen Ansicht von **Fig. 2g1** ist eine beipielhafte Ausgestaltung der Kontakteinrichtungen 192 (für die Stromversorgung beim Aufladen des Akkumulators 199) und der Kontakteinrichtungen 195A, 1958, 195G zur drahtgebundenen Datenübertragung zwischen Notebook 100 und Eingabegerät 110 erkennbar. Dabei sind die Kontakteinrichtungen 195A, 195B in der Bucht 107 des Notebooks als federartige Vorsprünge, die Kontakteinrichtungen 195C und 195D (nicht sichtbar) am Eingabegerät 110 als entsprechende Nuten ausgeführt, in denen elektrische Kontaktflächen zur Herstellung einer leitenden elektrischen Verbindung angeordnet sind. Selbstverständlich können entsprechende Nuten auch in der Bucht 107 angeordnet sein und die federartigen Vorsprünge am Eingabegerät 110.

In einer bevorzugten Weiterentwicklung weist der Deckelteil 101 im Bereich der Vorderkante eine vorspringende Rastnase 181 auf, die beim Schließen des Notebooks 100 in eine entsprechende Rastausnehmung 182 in dem in die Bucht 107 eingesetzten Eingabegerät 110 einrastet.

Durch eine zweckmäßige Detailausgestaltung dieses Rastmechanismus 181, 182 läßt sich erreichen, dass einerseits ein versehentliches Herausfallen des Eingabegerätes 110 aus der Bucht 107 bei geschlossenem Deckelteil 101 ausgeschlossen ist, und dass andererseits der Benutzer 106 den Rastmechanismus 181, 182 überhaupt nicht erst einrasten lassen kann, wenn das Eingabegerät nicht zuvor ordnungsgemäß in der Ladebucht des mobilen Digitalcomputers eingesetzt wurde. Dieser vorteilhafte Mechanismus soll verhindern, dass nach beispielweise einer Mausverwendung, das Eingabegerät 110 vergessen und liegengelassen wird. Zudem ist es wichtig und vorteilhaft eine Vorkehrung im Eingabemodul 110 selbst auszubilden, um eine Grund-konfiguration des mobilen Digitalgerätes 100 zu Transportzwecken zu sichern, da ansonsten ein anderes Modul als das Eingabegerät 110 in der Ladebucht eingesteckt sein könnte, mit dem eine Cursorsteuerung nicht möglich ist. Das Zusammenwirken zwischen der Rastnase 181 und der Rastausnehmung wird in Fig. 2g2 deutlicher gezeigt und beschrieben.

**Fig. 2g1.1** zeigt eine besonders bevorzugte Variante der in **Fig. 2g1** dargestellten Ausführungsform. Es finden derzeit mehr und mehr serielle Datenbussysteme Verwendung, die neben Datensignalen auch zur Stromversorgung dienen können. Ein prominentes Beispiel ist der USB Universal Serial Bus. Alternativ käme beispielsweise auch der FireWire-Bus in Betracht. In der **Fig. 2g1.1** wird nun eine auf dem USB basierende Variante dargestellt. In der Bucht 107 ist an der Stelle, an der bei der anderen Ausführungsform aus **Fig. 2g1** der Stromversorgungssteckverbinder 192 angeordnet ist, eine USB-Steckbuchse 192X angeordnet. An der entsprechenden Außenfläche des Eingabegerätes 110 ist ein entsprechender USB-Stecker 192Y angeordnet. bei eingestecktem USB-Stecker 192Y bezieht das Eingabegerät über die USB-Buchse 192X Strom zum Betrieb und zum Aufladen des Akkus 199 aus dem Notebook 100, wobei der Datenverkehr ebenfalls über den USB abgewickelt wird. Es ist auch möglich, den Ladecontroller 191 nicht im Notebook 100, sondern wie in Fig. 2g1.2 gezeigt im Eingabegerät 110 anzuordnen. Wenn die USB-Verbindung 192X, 192Y durch Herausziehen des Eingabegerätes 110 aus der Bucht 107 getrennt wird, schaltet das Eingabegerät 110 automatisch auf Akkubetrieb um, und das Eingabegerät 110 und das Notebook 100 kommunizieren gegebenenfalls automatisch über ein ebenfalls vorgesehenes drahtloses Datenkommunikationssystem. Im dargestellten Ausführungsbeispiel ist ein Hochfrequenz- oder Infrarotkommunikations-koppelpunkt 196 in der Bucht 107 angeordnet. Es versteht sich aber, daß dieser Hochfrequenz- oder Infrarotkommunikationskoppelpunkt 196 je nach den Gegebenheiten der im Einzelnen verwendeten Technologie auch an anderen Stellen im oder am Notebook angeordnet sein kann. Die im Zusammenhang mit der Beschreibung der **Fign. 2e1, 2e2, 2f1** und **2f2** dargelegten Symmetrieüberlegungen hinsichtlich von möglichen Drehungen des Eingabegerätes 110 gelten auch hier. Im vorliegenden Beispiel wird eine zweite USB-Steckbuchse 192X2 vorgesehen, wenn das Eingabegerät 110 für eine rückseitige Bedienung gedreht nutzbar sein soll. In einer vereinfachten Ausführungsvariante können eine normale Stromversorgung zum Laden des Akkumulators im Eingabegerätes 110 und ausschliesslich Mittel zur drahtlosen Informationsübertragung vorgesehen sein, um damit sowohl im gekoppelten, als auch im entkoppelten Zustand des Eingabegerätes 110 mit dem Notebook 100 über die drahtlose Verbindung Daten auszutauschen zu können. Eine optionale Taste 183 zum Entriegeln des bzw. zum Auswerfen des Eingabegerätes oder anderer Module ist beispielhaft neben der Ladebucht unterhalb der Tastatur angeordnet. Andere Mechanismen zur Ver- und Entriegelung bzw. zur Fixierung des Mudules in der Ladebucht (Ausnehmung) sind möglich.

**Fig. 2g1.2** zeigt ein stark schematisiertes elektronisches Blockschaltbild entsprechend **Fig. 2g1.1** jedoch in einer anderen, aber bevorzugten Ausführungsform. Das Eingabegerät 110 verfügt über eine USB-Steckereinrichtung 192Y, die mit der in der Bucht 107 angeordneten USB-Steckerbuchse 192X in Kontakt gebracht werden kann. Eine Stromquelle 190 im mobilen Digitalcomputers ist über die Schnittstellen 192x und 192y mit dem Eingang eines Ladesteuergerätes 191 im Eingabegerät 110 verbunden. Der Ausgang des Ladesteuergerätes 191 ist mit dem Stromversorgungsanschluß der USB-Steckbuchse 192y im Eingabegerät 110 verbunden. Das Ladesteuergerät (oder auch Wiederstand) 191 ist vorteilhaft zusammen mit einer Ladestandsanzeige - im Eingabegerät 110 anstatt im Notebook 100 angeordnet, da andere Module so ebenfalls mit dem USB-Anschluss 192x verbunden werden können. Die Zentraleinheit CPU 193 des Notebooks 100 kann mittels einer Umschalteinrichtung 193B einen (gegebenenfalls auch bidirektionalen) Datenstrom zwischen einer Kommunikationseinrichtung 194 und Datenleitungen der USB-Steckbuchse 192X freigeben. In einem anderen Betriebszustand der Umschalteinrichtung 193B gibt die Zentraleinheit 193 einen (gegebenenfalls auch bidirektionalen) Datenstrom zwischen der Kommunikationseinrichtung 194 und einer Sende-/Empfangseinrichtung 196 für drahtlose Datenübertragung (beispielsweise nach dem Bluetooth-Protokoll, IRDA oder dergleichen) frei.

Schließlich ist in dem Eingabegerät eine Sende-/Empfangseinrichtung 196B für drahtlose Datenübertragung (beispielsweise nach dem Bluetooth-Protokoll, IRDA oder dergleichen) vorgesehen, die dafür eingerichtet ist, mit der entsprechenden Einrichtung 196 im Notebook 100 zu kommunizieren. Der Datenaustausch dem Notebook 100 und dem Eingabegerät 110 ist somit wahlweise drahtgebunden über den USB-Bus 192X, 192Y oder drahtlos über die Übertragungseinrichtung 196 möglich. Die Stromversorgung des Eingabegerätes 110 erfolgt durch einen Akkumulator 199, der über dem Stromversorgungsanschluß des USB-Steckers 192Y aufgeladen werden kann. Die Steuerung der internen Vorgänge des Eingabegerätes 110 sowie des Datenaustausches mit dem Notebook 100 erfolgt

durch eine geeignete Elektronik, wie beispielsweise eine im Eingabegerät 110 befindliche Steuerungseinheit 198.

Für den Fall vorzeitiger Ermüdung des Akkumulators 199, kann zur Verwendung des Eingabegerätes 110 als Maus auch alternativ ein USB-Kabel mit den Schnittstellen 192x und 192y verbunden werden, um diese mit Strom aufzuladen. In dem Fall kann wie zuvor beschrieben ein Umschalten von einer kabellosen Datenübertragung auf die drahtgebundene Datenkommunikation erfolgen. Das Umschalten kann automatisch erfolgen oder auch nach einer Eingabe durch den Anwender (nicht gezeigt). Dadurch ist es möglich mittels dem frei gewordenen kabellosen Kommunikationssystem 194 anderen Geräte und/oder Einrichtungen (nicht gezeigt) für u.a. andere Zwecke der Datenübertragung mit dem mobilen Digitalcomputer 100 zu verbinden. Es versteht sich von selbst, dass der im Eingabegerät 110 enthaltene Akkumulator 199 durch geeignete Ausbildungen im Eingabegerät 110 aus dem Eingabegerät 110 herausgenommen und gegebenenfalls ausgewechselt werden kann. Auch ist es möglich das Eingabegerät über eine externe Vorrichtung aufzuladen, was auch für den oder die herausgenommenen Akkumulator(en) 199 gilt.

Andere Geräte und/oder Einrichtungen (nicht gezeigt) können in einem anderen Anwendungsfall mit der zumindest einen USB Schnittstelle 192x verbunden werden, wobei gleichzeitig das Eingabegerät 110 als Maus kabellos aber wirksam mit dem mobilen Digitalgerät zur zumindest Steuerung eines Cursors verbunden ist. Entspreched weiterer Ausführungsformen ist es möglich neben einer weiteren USB-Schnittstelle 192x2 für die Umkonfiguration des Eingabegerätes 110 im mobilen Digitalcomputer 100 noch weitere Schnittstellen (nicht gezeigt) in der Ladebucht 107 anzuordnen, um bei mechanisch entkoppeltem Eingabegerät 110 eine Vielzahl von Geräten und/oder Einrichtungen (nicht gezeigt) damit zu verbinden. Die Verbindung kann mittels Einstecken eines Modules (nicht gezeigt) bewerkstelligt werden oder über ein Kabel (nicht gezeigt), welches für die entsprechende Schnittstelle (nicht gezeigt) geeignet und vorgesehen ist. Auch ist es möglich ein Schnittstellenmodul beispielsweise in Form eines USB-HUBs (nicht gezeigt) mechanisch/elektrisch in die Ladebucht zu koppeln, um eine Vielzahl von USB-Schnittstellen zur Verbindung mit anderen Geräten bereitstellen zu können.

**Fig. 2g1.3** zeigt anhand von stark abstrahierten Ausführungsbeispielen die USB-Schnittstellenlösung gemäß der **Fig. 2g1.1** und der **Fig. 2g1.2** und deren verscheidenen Anwendungs- bzw. Verwendungsmöglichkeiten der mechanischen wie auch elektrischen Koppelung des Eingabegerätes 110 mit dem mobilen Digitalcomputer 100. In den nachfolgenden Beispielen wird zur Vereinfachung "P" für die wirksame Stromversorgung bzw. -verbindung und "D" für die wirksame Datenkommunikationsverbindung verwendet. Mit 190 als Stromquelle und SD als serielles Datenkabel ist beispielhaft eine USB-Verbindung gemeint. Andere serielle - oder nicht explizit erwähnte Datenbussysteme sind selbstverständlich möglich, sofern die in der Schrift aufgeführte Funktionalität damit erreicht werden kann. Auf USB wird als besonders bevorzugte Lösung und aufgrund ihrer Popularität zum einfacheren Verständnis Bezug genommen.

In der **Fig. 2g1.3 a** ist das Eingabegerät in der Ladebucht 107 des Digitalcomputers 100 eingesteckt und mit der USB-Schnittstelle verbunden, die das Eingabegrät über eine Stromquelle 190 sowohl mit Strom P versorgt wie auch über ein serielles Datenkabel (SD) die Datenkommunikation D ermöglicht.

In der **Fig. 2g1.3 b** ist das Eingabegerät ausserhalb der Ladebucht 107 des Digitalcomputers 100 als Maus eingesetzt, wobei die Datenkommunikation wirksam über eine drahtlose Verbindung, z.B. Funk (Bluetooth) oder Infrarot (IrDA), zwischen dem Eingabegerät 110 und dem mobilen Digitalgerät 100 erfolgt.

In der **Fig. 2g1.3 c** ist das Eingabegerät ausserhalb der Ladebucht 107 des Digitalcomputers 100 als Maus eingesetzt, wobei die Datenkommunikation wirksam über eine USB-Kabelverbindung mit dem mobilen Digitalgerät 100 erfolgt, die nachträglich zwischen Eingabegerät 110 und Digitalcomputer 100 gekoppelt wurde, um beispielsweise den Akkumulator (nicht gezeigt) im Eingabegerät 110 aufzuladen, während dieses als Maus in Benutzung ist.

In der **Fig. 2g1.3 d** ist das Eingabegerät ausserhalb der Ladebucht 107 des Digitalcomputers 100 als Maus eingesetzt, wobei die Datenkommunikation wirksam über eine drahtlose Verbindung z.B. Funk (Bluetooth) oder Infrarot (IrDA) zwischen dem Eingabegerät 110 und dem mobilen Digitalgerät 100 erfolgt und zusätzlich ein Kabel zur Stromversorgung zwischen Eingabegerät und Digitalcomputer gekoppelt ist, um beispielsweise den Akkumulator (nicht gezeigt) im Eingabegerät 110 aufzuladen, während dieses als Maus in Benutzung ist. Hierzu kann vom Anweder zuvor eine entsprechende Eingabe im Digitalgerät gemacht werden, um über eine nicht gezeigte Umschalteinrichtung entsprechende Konfiguration einzustellen.

In der **Fig. 2g1.3e** ist das Eingabegerät in der Ladebucht 107 des Digitalcomputers 100 eingesteckt und mit der USB-Schnittstelle verbunden, die das Eingabegrät über eine Stromquelle 190 sowohl mit Strom P versorgt wie auch über ein serielles Datenkabel (SD) die Datenkommunikation D ermöglicht, wobei die Kommunikatinseinrichtung zur drahtlosen Kommunikation mit einem anderen bzw. externen Gerät oder Einrichtung kommuniziert. Dies kann ein anderer Computer, wie z.B. PC oder Notebook sein, ein Drucker etc.pp..

In der **Fig. 2g1.3f** ist ein anderes Modul in Form eines Adapter-Modules für z.B. Multimediakarten, Flash-Speicherkarten etc. in der Ladebucht 107 des Digitalcomputers 100 eingesteckt und mit der USB-Schnittstelle verbunden, die das Modul bei Bedarf über eine Stromquelle 190 sowohl mit Strom P versorgt wie auch über ein serielles Datenkabel (SD) die Datenkommunikation D ermöglicht. Das Eingabegrät 110 ist wie in Fig. 2g1.3-b drahtlos mit der Kommunikationseinrichtung 194 wirksam verbunden.'

In der **Fig.2g1.3g** ist das Eingabegerät ausserhalb der Ladebucht 107 des Digitalcomputer 100 als Maus eingesetzt, wobei die Datenkommunikation wirksam über eine USB-Kabelverbindung mit dem mobilen Digitalgerät 100 erfolgt, die nachträglich zwischen Eingabegerät 110 und Digitalcomputer 100 gekoppelt wurde, um beispielsweise den Akkumulator (nicht gezeigt) im Eingabegerät 110 aufzuladen, während dieses als Maus in Benutzung ist. Hier kommunizieren andere bzw. externe Geräte und/oder Einrichtungen wie in Fig. 2g1.3-e über die dadurch freie Kommunikationseinrichtung 194 vorzugsweise über Funk (z.B. Bluetooth).

In der **Fig. 2g1.3 h** ist das Eingabegerät ausserhalb der Ladebucht 107 des Digitalcomputers 100 als Maus eingesetzt, wobei die Datenkommunikation wirksam über eine USB-Kabelverbindung mit dem mobilen Digitalgerät 100 erfolgt, die nachträglich zwischen Eingabegerät 110 und Digitalcomputers 100 gekoppelt wurde, um beispielsweise den Akkumulator (nicht gezeigt) im Eingabegerät 110 aufzuladen, während dieses als Maus in Benutzung ist. Jedoch ist diesmal das Eingabegerät mit einer anderen USB-Schnittstelle verbunden, um die Ladebucht für andere Zwecke frei zu halten. Ein Modul in Form eins USB-HUBs ist beispielhaft in der Ladebucht 107 des mobilen Digitalgerätes 100 eingesteckt und mechanisch wie elektrisch mit der USB-Schnittstelle in der Ladebucht des Digitalcomputers verbunden, um weitere USB-Geräte anschliessen zu können. Optional kann auch das Eigabegerät 110 an das HUB angeschlossen werden. Die Ausführungsbeispiele zeigen die vielfältigen und variablen Einsatzmöglichkeiten der Erfindung auf. Zudem kann die Ladebucht 107 mit einer Vielzahl von Verbinderschnittstellen ausgestattet sein.

**Fig. 2g2** zeigt das in **Fig. 2****-g1.1** gezeigte Notebook 100 mit vollständig eingesetztem Eingabegerät 110. Hier ist das Zusammenwirken der im Flügelteil 101 des mobilen Digitalcomputers 100 angeordneten Rastnase 181 mit der im Eingabegerät 110 ausgebildeten Rastausnehmung 192u aufgezeigt. Beim Schliessen der beiden Flügelteile 101 und 103, welche über ein Scharnier 105 zumindest drehbar miteinander verbunden sind, gleitet die Rastnase 181 in die dafür vorgesehene Rastausnehmung 192u, zur Arretierung bzw. Fixierung sowohl der beiden Flügelteile 102 und 103 wie auch zur Arretierung bzw. Fixierung des Eingabegerätes 110 im Digitalcomputer 100. Wie in Fig. 2g1 beschrieben, ist so ein Herausrutschen des Eingabegerätes während des Transportes, beispielsweise selbst bei extremen Rüttelbewegungen nicht mehr möglich und gleichzeitig wird dadurch sichergestellt, dass die Grundkonfiguration des mobilen Digitalcomputers 100 mit dem dazu notwendigen Eingabegerät 110 zum Transport eingerichtet ist.

Vorteilhafterweise haben andere Module diese Rastausnehmung nicht, soweit diese die Grundfunktionalität des Eingabegerätes nicht enthalten, sodass bei Reisen nicht versehentlich ein falsches Modul gekoppelt ist und der Digitalcomputer 100 dadurch nicht mehr bedienbar ist. Auch ein Vergessen des Eingabemodules 110 ist durch diese Lösung erschwert, da sich die Flügelteile 101 und 103 ohne Eingabemodul 110 nicht ordentlich schliessen lassen.

Weiterhin ist es möglich, wenn ein Transport nur mit dem Eingabegerät in der Basiskonfiguration vorgenommen werden kann, das eine Arretierung mittels einem entsprechendem Rastmechanismus auch vorgesehen und möglich ist, wenn das Eingabegerät 110 für Transportzwecke anders konfiguriert (nicht gezeigt) in das mobile Digitalgerät eingesteckt wird, dann z.B. wenn die Eingabemittel des Eingabegerätes entsprechend der **Fig. 2c1** und **Fig. 2c2** auf der Rückseite angeordnet sein sollen (nicht gezeigt). Dies kann erforderlich sein wenn Eingaben im geschlossen Zustand eines Notebooks vorgenommen werden sollen (nicht gezeigt), sei es zum Zwecke der Ver- oder Entriegelung des Notebooks oder aus anderen in bereits vorbezeichneten Gründen. Eine weitere Ausbildungsmölichkeit (nicht gezeigt) sieht vor eine zweite Rastnase mit Orientierung zur Anzeigenflächenrückseite (nicht gezeigt) oder eine schwenkbare Rastnase mit beipielsweise zwei Arretierungsanker (nicht gezeigt) anzuordnen, um auch die Flügelteile 101 und 103 dann gegenseitig miteinander Fixieren zu können, wenn eine besondere Scharnierausbildung (nicht gezeigt) es ermöglicht, das Displayteil 101 um 180 Grad zu drehen um das Notebook in einen Tablet PC (nicht gezeigt) umzukonfigurieren. So ist es möglich auch in einer Tablet PC-Konfiguration das Eingabegerät 110 zu fixieren oder es im mechanisch entkoppelten Zustand als Maus für das Tablet PC (nicht gezeigt) zu nutzen, oder das Eingabegerät 110 anders im Tablet PC (nicht gezeigt) zu Konfigurieren, derart dass mittels dem Eingabegerät 110 eine rückseitige Bedienung für das Tablet PC eingerichtet ist. Hierzu kann im Eingabegerät 110 eine weitere Rastausnehmung (nicht gezeigt) angeordnet sein, falls die erste Rastausnemung 182 nicht so konstruiert und angeordnet ist, dass auch in einer Tablet PC-Konfiguration der Flügelteil 101 mit dem Flügelteil 103 über das zur Greifhandbedienung umkonfigurierte Eingabegerät 110 fixierbar ist.

Weiterere Vorteile des besonderen Arretierungs- bzw. Verschlussmechanis-musses über das Eingabegerät 110 sind:
Da die Rastnase 181 das Eingabegerät 110 zu Transportzwecken im mobilen Digitalgerät 100 fixiert, ist es möglich auf andere modulhaltende, bzw. -klemmende Ausbildungen (nicht gezeigt) zu verzichten, sodass ein relativ leichtes und schnelles mechanisches und elektrisches Koppeln bzw. Entkoppeln der Eingabegerätes 110 oder anderer Module möglich ist.
b) Entsprechend der Höhe von Sicherheitanforderungen können Vorkehrungen wie z.B. Verriegelungsmechanismen (nicht gezeigt) im Eingabegerät 110 selbst ausgebildet werden, was ermöglicht derartige Module 110 zu einem späteren Zeitpunkt als ein Sicherheits-Eingabegerät zu vermarkten. So kann eine kostengünstige Grundkonfiguration des mobilen Digitalcomputers 100 mit einfachen Eingabegerät 110 hergestellt und verkauft werden, wobei sich die Kosten für die Ausbildung spezieller Eingabegeräte 110 mit z.B. Sperr- bzw. Verriegelungsmechanismus, Pin- oder Passwordeingabemöglichkeiten, Display evtl. mit Stifteingabemöglichkeiten, integrierter Speicher etc. auf das Eingabegerät 110 als Sondermodell umwälzen lassen.

Andere Ausbildungen von Verschluss-, Arretierungs- und/oder Fixierungsmechanismen sind möglich, ohne den Schutzumfang einzuschränken. Eine Taste 183 kann in einer Weiterbildung zur Entriegelung oder zum Auswerfen einer fixierten Eingabeeinrichtung 110 oder anderer fixierter Module (nicht gezeigt) in der Nähe der Ladebucht angeordnet sein.

**Fig. 2g3** zeigt das in **Fig. 2g2** gezeigte Notebook 100 in einer mit Touchscreen versehene Variante in einer anderen Stellung für eine buchartige Handhabung, in der der Benutzer einen Druckstift 176, mit dem Eingaben auf dem Touchscreen vorgenommen werden können, in einer in der Scharniereinrichtung 105 angeordneten Druckstiftgarage 177 unterbringt.

**Fig.** 2g4 zeigt weitere erfinderische Ausführungsformen insbesondere des Eingabegerätes 110 für ein verbessertes Halten und einer Ladebuchtausbildung mit Konfigurationsmöglichkeit durch Einstecken in oder herausnehmen des Eingabegerätes 110 oder anderer Module (nicht gezeigt) aus der Ladebucht des mobilen Digitalcomputers 100.

**Fig. 2g4 a** bis **Fig. 2g4 c** zeigen das herausnehmen des Eingabegerätes 110 aus einer vorteilhaften Ladebucht 107 des Prozzessor- bzw. Tastaturteiles 103 des mobilen Digitalcomputers 100. Hierbei sind zwei Ausbildungsmöglichkeiten vorteilhaft. Zum besseren Halten des Eingabegerätes 110 bei der Verwendung als Maus, sind an dem Eingabegerät 110 (im folgenden auch nur "Maus" genannt) beispielhaft zwei ringförmigen Fingerstützen 111 a und 111 b angeordnet, die entweder fest an der Maus angeordnet sind, oder sich scherenartig aus dem Gehäuse der Maus entfalten können. Die ringförmigen Fingerstützen 111 a und 111 b dienen der Hand des Anwenders, das Eingabegerät aufgrund seiner flachen Ausbildung besser Halten bzw. mit den Fingern der haltenden Hand Fixieren zu können. Hierzu ist es vorteilhaft, wie in der **Fig. 2** **g4 h** gezeigt, die ringförmigen Fingerstützen mittels Daumen und Ringfinger zu bedienen, um die Fingerkuppen der beiden Finger in den dazu vorgesehen Öffnungen einzustecken, und mit dem Zeige- sowie Mittelfinger die auf der Maus angeordneten Taster in gewohnter Weise zu betätigen. Die ringförmigen Fingerstützen 111 a und 111 b bieten der mausbedienenden Hand mehr Griff, und stabilisieren die Hand derart am Eingabegerät 110, dass horizontale Bewegungen ohne eine Ausgleitgefahr und kraftraubende Verrenkungen der Finger am Eingabegerät 110 ausgeführt werden können.

**Fig. 2g4 f** und **Fig. 2g4 g** zeigen eine erste Möglichkeit der schwenkbar im Gehäuse des Eingabegerätes 110 gelagerten ringförmigen Fingerstützen 111a und 111b, welche zum Zweck einer mausartigen Bedienung aus dem Gehäuse 110 ausfahrbar sind, wobei in der **Fig. 2g4 f** die ringförmigen Fingerstützen 111a und 111 b im Gehäuse der Maus bzw. des Eingabegerätes 110 geparkt sind und in **2g4 g** die ringförmigen Fingerstützen 111 a und 111 b für eine komfortablere Mausbedienung aus dem Gehäuse der Maus bzw. des Eingabegerätes 110 ausgefahren sind.

Hierbei ist es möglich die ringförmigen Fingerstützen 111 a und 111 b über einen geeigneten Mechanismus manuell, per Betätigung der dazu vorgesehenen Mittel aus- und wieder einzufahren, oder mittels einer federartigen Vorrichtung 111 c die ringförmigen Fingerstützen 111 a und 111 b aus dem Gehäuse des Eingabegerätes 110 ausgefahren zu halten, um diese nur im Fall eines Transportes in der beispielsweise Jacken- oder Hosentasche oder für den Fall des mechanischen Koppelns in die Ladebucht 107 des mobilen Digitalgerätes 100, mechanisch einfahren zu lassen bzw. in das Gehäuse der Maus reinzudrücken. Hier kann ein Einrast - oder Haltemechanismus (nicht gezeigt) die beiden ringförmigen Fingerstützen 111a und 111b solange fixieren, bis der Anwender durch entsprechende Einwirkung die Halterung löst. Auch ist es Möglich, das zumindest ein Teil und/oder eine Teilkraft der federnden, ringförmigen Fingerstützen zur Führung und/oder Arretierung des Eingabegerätes 110 in der dazu vorgesehenen und dazu ausgeführten Ladebucht 107 des Digitalcomputers 100 dienen. In einer einfachen aber robusten Ausführungsform des Eingabegerätes 110 bzw. einer Maus mit dem erfinderischen ringförmigen Fingerstützen 111a und 111b sind die Ringhalter nicht beweglich am Eingabegerät bzw. Maus befestigt, sodass die Fingeringe der Stüzen permanent in der in Fig. 2g2 **4** gezeigten Konfiguration stehen. Das hat den Vorteil, dass das Gehäuse des Eingabegerätes 110 bzw. der Maus mehr Platz für andere Komponenten bietet und zudem Anfälligkeiten durch mechanische Dauerbelastung oder Schmutz vermieden wird. Zudem können die ringförmigen Fingerstützen 111 a und 111 b sinnvoll zur Führung und Arretierung des Eingabegerätes 110 im mobilen Digitalgerät 100 genutzt werden. Andere Ausführungsformen insbesonders zur Fingerkuppenfixierung einer besonders flachen Maus oder mit einer Mechanik zur Volumenvergrösserung des Gehäuses einer Maus zum Zeck eines besseren Greifens und Bedienens mit der Hand sind möglich. Auch ist die Form, Anzahl und Anordnung der Fingerstützen nur beispielhaft, und kann in den verschiedensten Ausführungen realisiert werden. Die Lösung wird ausdrücklich auch auf Computermäuse bezogen, die nicht ein integrierbares Cursorsteuerungsgerät 110 eines mobilen Computers im Sinne dieser Patentschrift sind.

**Fig. 2g4 a** bis **Fig. 2g4 d** zeigen eine weitere besonders vorteilhafte Weiterntwicklung zum erfinderischen Digitalcomputer 100 und seinem entkoppelbaren Eingabegerät 110. Hiezu ist ein Schiebedeckel 132 welches zur Abdeckung bzw. zum Verschliessen der Ladebucht 107 vorgesehen ist. In einem Zustand, in dem die Ladebucht 107 im Flügelteil 103 für das Eingabegerät 110 im Digitalcomputer 100 geöffnet bleiben soll, z.B. aufgrund eines gekoppelten Eingabegerätes 110 oder anderer gekoppelter Module, verbleibt der Ladebuchtdeckel 132 in seiner Ausganskonfiguration auf einer Seite neben der Ladebucht 107 wie die **Fig. 2g4 a** und **2g4 b** zeigen. Für den Fall, dass die Ladebucht 107 verschlossen werden soll, sei es aus optischen Gründen oder auch damit in der Ladebucht 107 angeordnete Schnittstellen (nicht gezeigt) nicht verschmutzt werden sollen, kann hierzu der Ladebuchtdeckel 132 über die Öffnung der Ladebucht 107 geschoben werden. Dadurch ist es möglich, die freiwerdende Fläche 134 besonders auszugestalten. Beispielsweise können durch verschliessen der Ladebucht 107 mittels dem Ladebuchtdeckels 132 weitere Verbinderschnittstellen, Bedienelemtente und/oder Anzeigenelemente 135 in der Fläche 134 freigegeben werden, die entweder im Falle einer Mauskonfiguration des Systems vorteilhaft sind oder die aufgrund des seltenen aber notwendigen Gebrauchs vorwiegend Versteckt gehalten werden sollen.

**Fig. 2g4 d** zeigt eine Weiterentwicklung des Ladebuchtdeckels 132, in der eine auf der vorderen Seitenkannte des Ladebuchtdeckels 132 eingebrachte Auslassung in Form eines Kabelschlitzes angeordnet ist, welche das Koppeln von Kabelverbinden in der Ladebuchtöffnung 107 auch im geschlossenen Zustand ermöglicht. So können eine Vielzahl von Verbinderschnittstellen in der Ladebucht angeordnet sein, ohne das diese den Anwender optisch stören. Zudem ist der Ladebuchtdeckel 132 mit Kabelschlitz vorteilhaft für die in der **Fig. 2g1.3 g** gezeigten Notkabel-Koppelungsmöglichkeit des Eingabegerätes 110 mit dem mobilen Digitalcomputer 100 zur Verwendung als Maus,· denn es können Situationen auftreten in denen zwar ausreichend Platz zur Verwendung der Maus vorhanden ist, jedoch eine Datenkommunikation über Funk nicht gestattet ist, oder eine vorzeitigen Ermüdung des Akkumulators eine beipielsweise Funkverbindung nicht möglich macht. In einer weiteren Ausführungsform ist ein solches Notkabel z.B. USB-Kabel in einem dazu ausgebildeten Schacht (nicht gezeigt) beispielsweise neben der Ladebucht 107 und durch dessen Öffnung erreichbar untergebracht. Der Schacht kann auch unterhalb des Verschlussdeckels 132 (im geöffneten Zustand) angeordnet sein, wobei der Verschlussdeckel im geschlossenen Zustand Schubladenartig die Notkabelkammer (nicht gezeigt) in den Ladebuchtbereich 107 schiebt, und das Kabel über die Ladebuchtöffnung 107 auf der Unterseite bzw. Rückseite des Flügelteiles 103 zugänglich macht. Soll das Kabel verstaut werden wird der vordere Ladebuchtdeckel 132 über die Ladebucht 107 geschoben, das Kabel von hinten in die Schublade (nicht gezeigt) eingelegt, wonach die Schublade (nicht gezeigt) wieder durch zurückschieben des Ladebuchtdeckels 132 in seine Grund-konfiguration über die Fläche 134 zurückgeschoben werden kann um die Schublade zu schliessen.

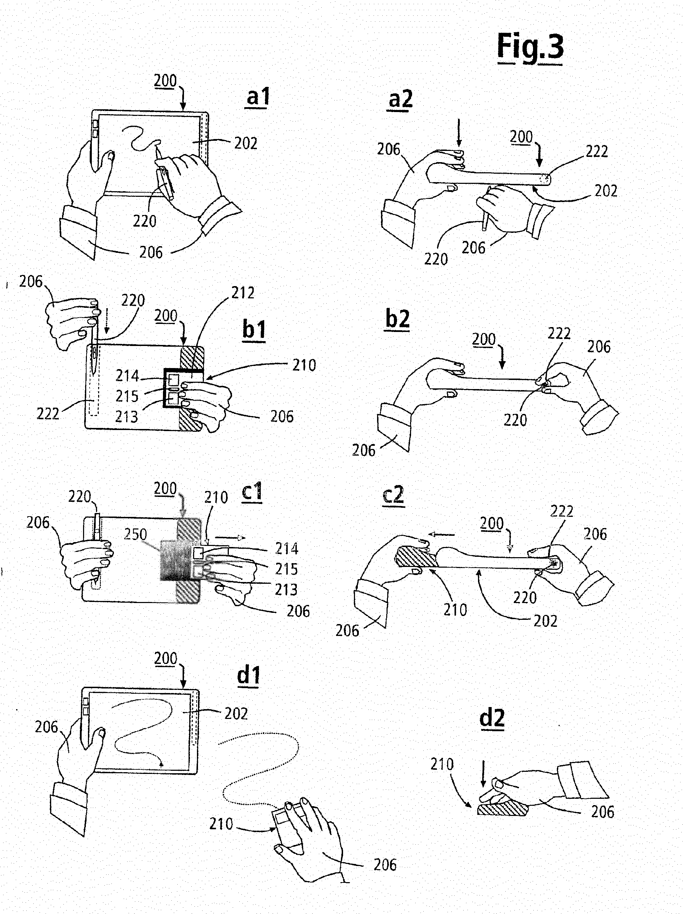

**Fig. 3** zeigt eine schematische Darstellung einer zweiten erfindungsgemäßen Ausführungsform mit einem einteiligen "Tablet PC" 200 in verschiedenen Betriebszuständen. Die **Fign. 3a1** und **3a2** zeigen einen in einer typischen Anwendungssituation befindlichen Tablet PC 200 in einer schematisierten quasi-perspektivischen Ansicht von vorn (aus der Sicht des Benutzers 206) beziehungsweise von oben, wobei der Benutzer mit einem Druckstift 220 auf einem auf der Vorderseite des Tablet PCs 200 angeordneten druck- oder berührungsempfindlichen Bildschirm 202 Bedienvorgänge vornimmt. Fig. 3b1 zeigt die Rückseite 203 des Tablet PC 200, wobei der Benutzer 206 den Druckstift 220 in eine Druckstiftaufnahmekammer 222 schiebt, um den Druckstift 220 während des Nichtgebrauches sicher zu verstauen. Die Rückseite 203 des Tablet PC weist ferner eine Ausnehmung 250 auf, in die ein Eingabegerät 210 einsetzbar ist. Das Eingabegerät 210 weist bei dem gezeigten Ausführungsbeispiel auf der Oberseite ein Slidepad 212 sowie einen ersten Betätigungstaster 213 und einen zweiten Betätigungstaster 214 sowie ein Stellrädchen 215 auf. Auf der Unterseite beinhaltet das Eingabegerät 210 eine Rollkugel mit dazugehörigen Rollkugel-Bewegungssensoren (beides nicht dargestellt) oder eine optische Untergrundabtastvorrichtung (nicht dargestellt), wie sie jeweils auch in einer Maus anzutreffen sein können. Ferner beinhaltet das Eingabegerät 210 eine Stromquelle wie eine Batterie oder einen Akkumulator (nicht dargestellt) sowie eine geeignete elektronische Schaltung (nicht dargestellt), mit der seine Funktionalität erbracht werden kann. **Fig. 3b2** zeigt die in **Fig. 3b1** dargestellten Situation von oben.

In **Fig. 3c1** ist dargestellt, wie der Benutzer 206 das Eingabegerät 210 seitlich aus der Ausnehmung 250 im Gehäuse des Tablet PC 200 herauszieht, um es eigenständig benutzen zu können. Die Erfindung ist nicht auf ein seitliches Herausziehen beschränkt; es kann beispielsweise auch eine Magnethalterung oder ein Rastmechanismus vorgesehen sein, durch den das Eingabegerät 210 nach hinten aus der Aufnahme 250 weggezogen werden kann. Beispielsweise kann das Eingabegerät 210 im einfachsten Falle mit einem Klettverschluß (nicht dargestellt) in der Aufnahme 250 reversibel befestigt sein. **Fig. 3c2** zeigt die in **Fig. 3c1** dargestellten Situation von oben.

In **Fig. 3d1** ist dargestellt, wie der Benutzer 206 das Eingabegerät 210 seitlich aus der Ausnehmung 250 im Gehäuse des Tablet PC 200 herausgenommen hat, um es eigenständig als Maus auf einer Tischfläche benutzen zu können. **Fig. 3d2** zeigt die Benutzung des Eingabegerätes 210 als Maus durch den Benutzer 206. Die besondere Ausführungsform zeigt eine rückseitige Aufwölbung im Handgreifbereich, die ein ergonomisches Halten des Tablet PCs ermöglicht, wobei bestimmte elektronische Bauteile und Komponenten im Hohlraum der Handgreifaufwölbung untergebracht sein können, beispielsweise aus Größen- und/oder Lastigkeitsgründen. Daraus ergibt sich der Vorteil, daß eine in dem Aufwölbungsbereich geparkte Maus (Eingabegerät 110), welche auch als rückseitige Bedienung fungieren kann, ebenfalls die Aufwölbung aufweist und dadurch eine ergonomisch vorteilhafte Handhabung beim Mausbetrieb ermöglicht. Zudem lassen sich auch grössere Bauteile und Komponenten in die Maus integrieren. Anders gesehen kann eine Maus mit ergonomischer Aufwölbung als griffstabilisierendes Mittel in der in der Hand gehaltenen Vorrichtung 100 dienen.

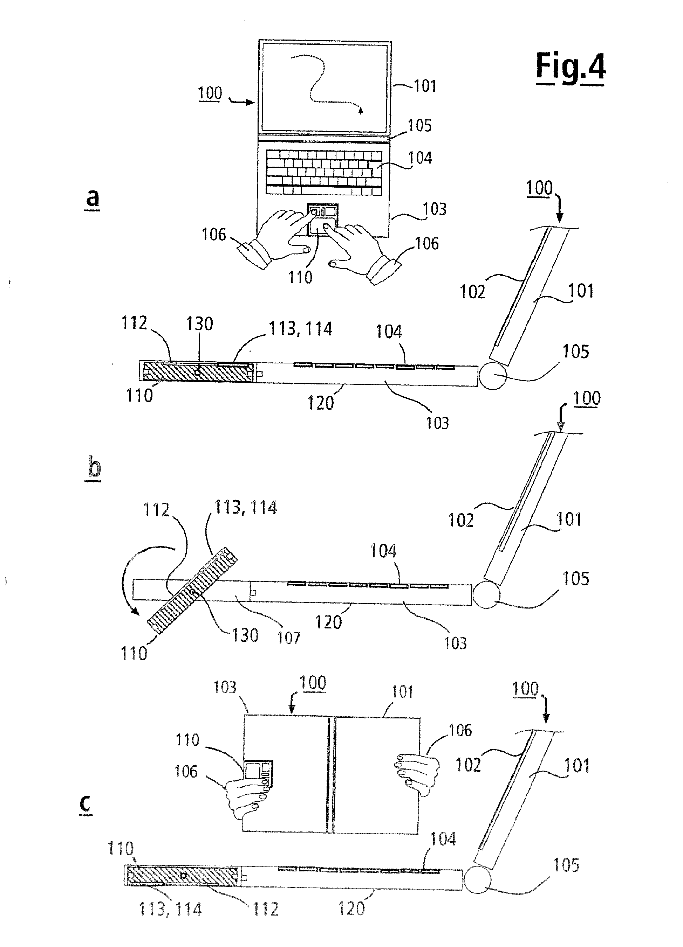

**Fig. 4** zeigt eine schematische Darstellung einer weiteren vorteilhaften Weiterentwicklung der der Erfindung gemäß der in **Fig. 1** dargestellten ersten Ausführungsform des erfindungsgemäßen portablen Digitalcomputers mit einem zweiflügeligen Notebook-Digitalcomputer 100 in drei verschiedenen Betriebszuständen a, b und c. Bei dieser Weiterbildung ist das Eingabegerät 110 mittels einer im wesentlichen parallel zur Scharniereinheit 105 angeordneten Kippwelle 130 kipp - und schwenkbar in der Bucht 107 des Prozessorteils 103 des Notebooks 100 angeordnet. Bevorzugt sind mechanische Konstruktionen, bei denen die Kippwelle 130 beispielsweise mit durch eine Feder vorgespannten Rastmechanismen (nicht dargestellt) aus dem Prozessorteil 103 ausgerastet werden kann, so daß das Eingabegerät - wie bereits in **Fig. 1** - gezeigt vollständig aus der Bucht 107 entnommen werden kann. Durch die Kippwelle 130 kann der in **Fig. 2** illustrierte Konfigurationswechsel hinsichtlich der Handhabung für den Benutzer 106 vereinfacht werden. Fig. **4a** zeigt schematisch im Querschnitt das Notebook 100 in einem ersten Betriebszustand, bei dem das Slidepad 112 sowie die Taster auf derselben Seite des Prozessorteils 103 angeordnet sind wie die Tastatur 104. In **Fig. 4b** ist schematisch im Querschnitt des Notebooks 100 gezeigt, wie das Eingabegerät 110 um die Kippwelle 130 gekippt wird. **Fig. 4c** zeigt den zweiten Betriebszustand für die rückseitige Bedienung mit einem oder mehreren Fingern einer das Notebook 100 haltenden Hand eines Benutzers 106, bei der die Bedienelemente, insbesondere das Slidepad 112 und die Taster 113, 114 auf der zu Seite des Prozessorteil 103, auf der die Tastatur 104 liegt, entgegengesetzten Seite (der Unterseite 120 des Prozessorteils 103) hin orientiert sind. Wie bereits beschrieben kann es in einer weiteren Ausführung vorgesehen sein das über die Kippwelle 130 drehbare Eingabegrät 110 mechanisch entkoppelbar zu machen, beispielweise auch mittels herausziehen (nicht gezeigt) des Eingabegerätes 110 aus dem Flügelteil 103, wobei die Kippwelle 130 in einer Führungsschiene (nicht gezeigt) gelagert ist. Auch ist es Möglich die Kippwelle mehrteilig, federnd auszubilden (nicht gezeigt), wobei die Kippwelle ähnlich einer Uhr-Armbandfixierung (nicht gezeigt) in das Eingabegerät 110 oder das Gehäuse des Flügelteiles 103 eingezogen wird um das Eingabegerät 110 zu entnehmen.

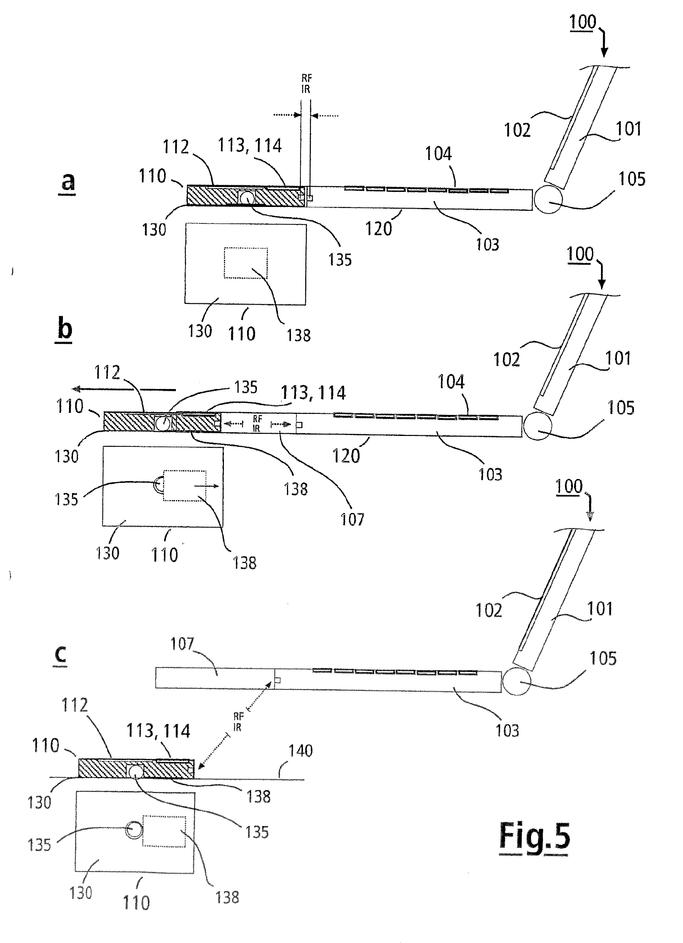

**Fig**. **5** zeigt eine schematische Darstellung einer anderen vorteilhaften Weiterentwicklung der der Erfindung gemäß der in **Fig. 1** dargestellten ersten Ausführungsform des erfindungsgemäßen portablen Digitalcomputers mit einem zweiflügeligen Notebook-Digitalcomputer 100 in drei verschiedenen Betriebszuständen a, b und c. **Fig. 5** veranschaulicht eine Anordnung mit einer Mechanik in der Bucht 107 des Prozessorteils 103, bei der das Eingabegerät 110 schubladenartig ein- und ausfahrbar ausgestaltet ist. **Fig. 5a** zeigt schematisch eine Querschnittsansicht des Notebooks 100 mit eingeschobenem Eingabegerät 110. Das Eingabegerät 110 ist auf seiner Unterseite 130 mit einer Rollkugeleinrichtung 135 versehen. Bei eingeschobenem Eingabegerät 110 ist die Rollkugeleinrichtung 135 durch einen Schutzschieber 138 gegen Verschmutzung geschützt. **Fig. 5b** zeigt schematisch eine Querschnittsansicht des Notebooks 100 mit teilweise herausgezogenem Eingabegerät 110. Der Schutzschieber 138 gibt einen Teil der Rollkugeleinrichtung 135 frei. **Fig. 5c** zeigt schematisch eine Querschnittsansicht des Notebooks 100 mit vollständig herausgezogenem Eingabegerät 110. Das Eingabegerät liegt jetzt nach Art einer Maus auf einer ebenen Fläche 140, beispielsweise einer Tischfläche, auf. Der Schutzschieber 138 gibt die Rollkugeleinrichtung 135 vollständig frei. Eine andere Aufführungsform (nicht gezeigt) sieht vor, die Unterseite der Ladebucht welche die Rückseite des Flügel- bzw. Prozzesorteiles 103 ist ohne Durchbruch auszubilden, d.h. die Rückseite des Flügelteiles 103 ist eine geschlossene Fläche. Auch hier kann mittels einer Schiebevorrichtung ein Deckelteil (nicht gezeigt) aufgeschoben werden, um in einer weiteren Konfiguration des Eingabegerätes 110 entsprechende Eingabemittel, wie Tasten, Trackball oder Display einsichtig und/oder bedienbar zu machen. Der Vorteil des Schiebedeckels (nicht gezeigt) liegt in der Schutzwirkung vor Verschmutzung oder mechanischer Belastungen von Eingabemitteln auf der tastaturabgewandten Seite des Flügelteiles 103, die am Eingabegerät 110 angeordnet sind und für Transportzwecke oder bei Nichtgebrauch im schützenden Gehäuse des mobilen Digitalcomputers untergebracht sein sollen. Selbstverständlich kann eine Ausbildungsvariante auch vorsehen einen entsprechenden Schutzdeckel auf- bzw. absteckbar (nicht gezeigt) anzuordnen.

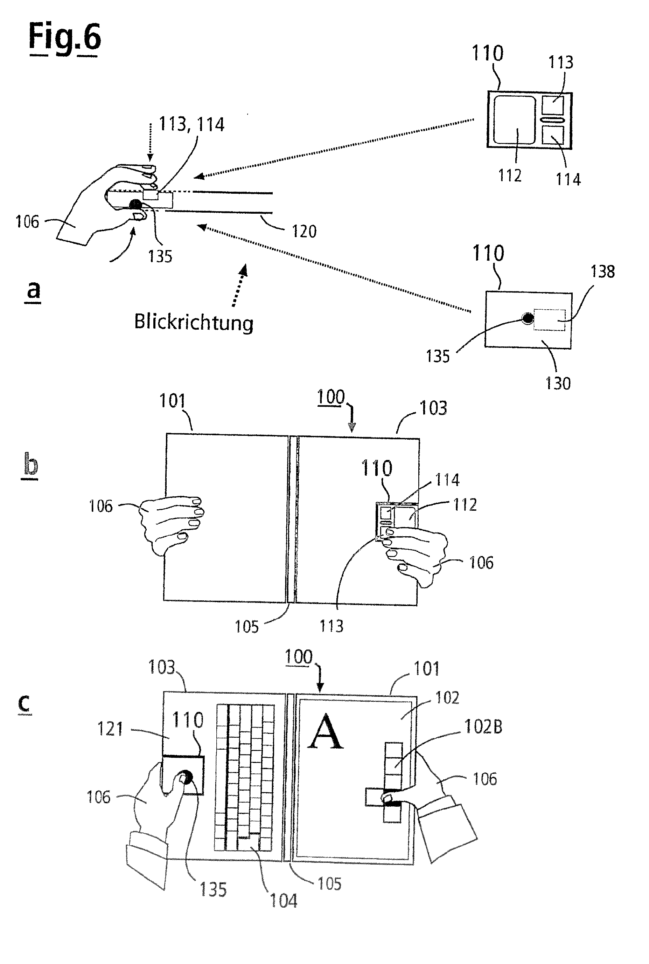

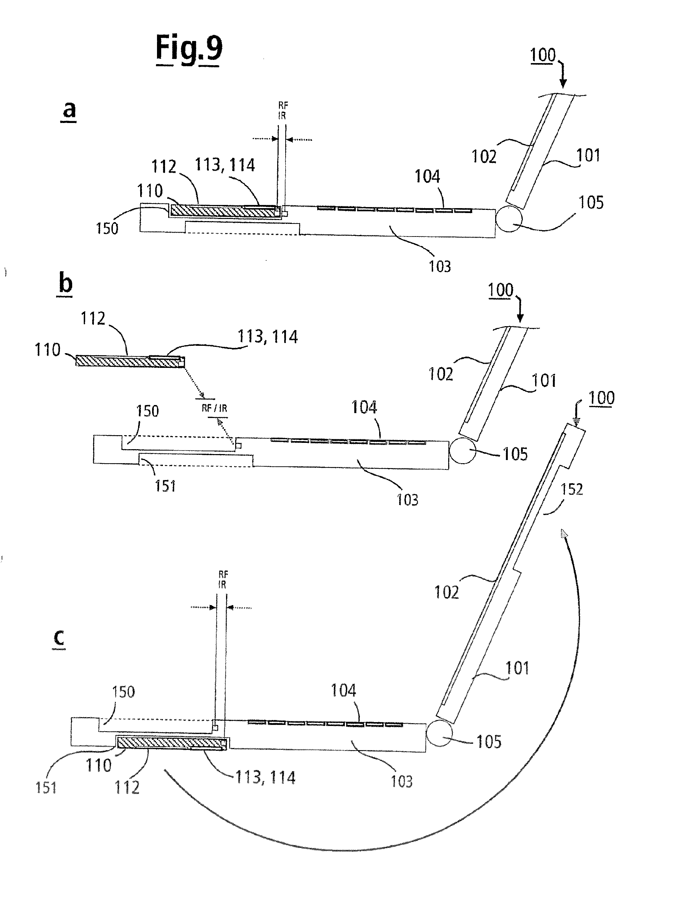

**Fig. 6** zeigt eine schematische Darstellung eines ersten Aspektes der vorder- und rückseitigen Bedienung der der Erfindung gemäß der in **Fig. 5** dargestellten ersten Ausführungsform. Bei einer Weiterentwicklung der in **Fig**. **5** dargestellten Ausführungsform kann das Eingabegerät 110 beispielsweise durch Umstecken wie in **Fig. 2** gezeigt oder durch Kippen wie in **Fig**. **4** gezeigt in eine zweite Orientierung gebracht werden, bei der die Bedienelemente, insbesondere das Slidepad 112 und die Taster 113, 114 auf der zu Seite des Prozessorteils 103, auf der die Tastatur 104 liegt, entgegengesetzten Seite (der Unterseite 120 des Prozessorteils 103) hin orientiert sind. **Fig**. **6b** zeigt wie durch diese Eigenschaft das Eingabegerät 110 rückseitig mit den Fingern einer das Notebook 110 haltenden Hand 106 bedient werden kann, wenn das Notebook 110 nach Art eines Buches mit im wesentlichen vertikal orientierter Scharniereinheit 105 gehalten wird. Dadurch ist dann die Rollkugeleinrichtung 135 auf der Tastaturseite 121 des Prozessorteils 103 einer trackballartigen Bedienung durch einen oder mehrere Finger einer das Notebook 100 haltenden Hand des Benutzers 106 zugänglich, wie in **Fig. 6c** gezeigt,um damit bestimmte Bedienoperationen auszuführen, während die Taster 113, 114 auf der, der Tastatur 104 abgewandten Rückseite 120 des Prozessorteils 103 einer Betätigung durch einen oder mehrere Finger einer das Notebook 100 haltenden Hand des Benutzers 106 zugänglich sind, wie in **Fig. 6b** gezeigt. Wird das Anzeigedisplay als berührungsempfindliches sogenanntes "Touch Screen Display" ausgeführt wie In **Fig. 6c** gezeigt, ist es möglich, die andere Hand des Benutzers 106, die nicht das Eingabegerät 110 bedient, zur Durchführung weiterer Bedienoperationen auf dem Display im Handgreifbereich zu benutzen. Hierzu kann beispielsweise eine Auswahlinformation 102b im Greifhandbereich der bildschirmhaltenden Hand derart eingeblendet werden, das diese mit dem Daumen der gerätehaltenden Hand selektiert und bestätigt werden kann. So sind eine Reihe von Bedienoperationen neben dem Blättern und/oder Scrollen von Seiten oder dem Einblenden von Auswahlinformationen (Menüs) möglich. In einer weiteren Ausführungsform ist vorgesehen wie später in der **Fig. 9c** aufgezeit, auch eine Möglichkeit zu schaffen, das Eingabegerät auf die Rückseite des Flügelteils 101, welcher mit einem Bildschirm ausgestattet ist, anzuorden. Somit ist es auch möglich oben beschriebene Bedienoperationen auf einem eingabesensitiven Bildschirm mit dem Daumen der gerätehaltenden Hand durchzuführen, wobei die rückseitig angeordneten Finger der gleichen Hand die Eingabemittel z.B. die Taster 113 und 114 des Eingabegerätes 110 bedienen können. Es wird ausdrücklich darauf hingewiesen, das sich die Bedienelemente bzw. Eingabemittel des Eingabegerätes 110 auch auf einer Seitenkante befinden können, sodass wenn in der Patentschrift auch von rückseitiger Bedienung gesprochen wird auch eine seitliche Bedienung gemeint sein kann. Das bezieht sich auf alle gezeigten oder nur erwähnten Ausführungsbeispiele. Auch können sich Eingabemittel und Schnittstellen der unterschiedlichsten Funktion, Ausbildung und Anzahl auf dem Eingabegerät 110 oder dem mobilen Digitalcomputer 100 befinden.

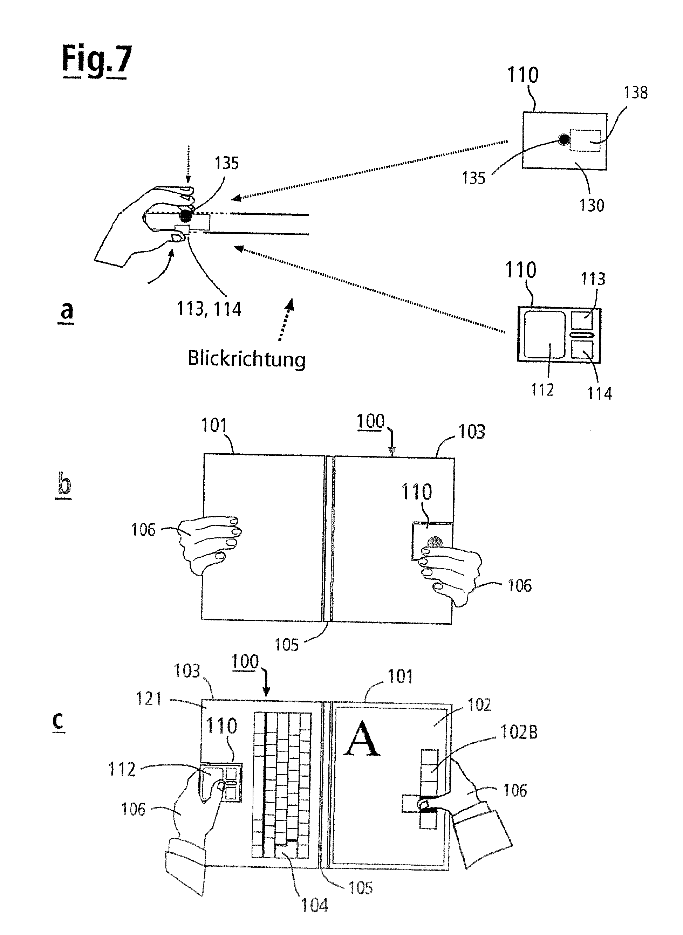

**Fig. 7** zeigt eine schematische Darstellung eines zweiten Aspektes der vorder - und rückseitigen Bedienung der der Erfindung gemäß der in **Fig**. **5** dargestellten ersten Ausführungsform, bei der wie in **Fig. 6** das Eingabegerät 110 rückseitig mit den Fingern einer das Notebook 110 haltenden Hand 106 bedient werden kann, wenn das Notebook 110 nach Art eines Buches mit im wesentlichen vertikal orientierter Scharniereinheit 105 gehalten wird. Gegenüber **Fig. 6** ist das Eingabegerät 110 hier in einer anderen Orientierung in die Bucht 107 des Prozessorteils 103 eingesetzt, bei der die Bedienelemente, insbesondere das Slidepad 112 und die Taster 113, 114 auf der zu Seite des Prozessorteils 103, auf der die Tastatur 104 liegt, entgegengesetzten Seite (der Unterseite 120 des Prozessorteils 103) hin orientiert sind. Auch hierbei kann das Eingabegerät 110 rückseitig mit den Fingern einer das Notebook 110 haltenden Hand 106 bedient werden, wenn das Notebook 110 nach Art eines Buches mit im wesentlichen vertikal orientierter Scharniereinheit 105 gehalten wird. Dadurch ist dann die Rollkugeleinrichtung 135 auf der Rückseite 120 des Prozessorteils 103 einer trackballartigen Bedienung durch einen oder mehrere Finger einer das Notebook 100 haltenden Hand des Benutzers 106 zugänglich, während die Taster 113, 114 auf der der Tastatur 104 entsprechenden Seite 121 des Prozessorteils 103 einer Betätigung durch einen oder mehrere Finger einer das Notebook 100 haltenden Hand des Benutzers 106 zugänglich sind. Wird das Anzeigedisplay als berührungsempfindliches sogenanntes "Touch Screen Display" ausgeführt, ist es möglich, die andere Hand des Benutzers 106, die nicht das Eingabegerät 110 bedient, zur Durchführung weiterer Bedienoperationen auf dem Display im Handgreifbereich zu benutzen. Die in Fig. 6 beschriebenen Möglichkeiten der Bedienung, insbesondere der Greifhandbedienung zur Bedienung von Informationen 102b auf einem Bildschirm 102 mit Eingabemöglichkeiten sind hier ebenso möglich.

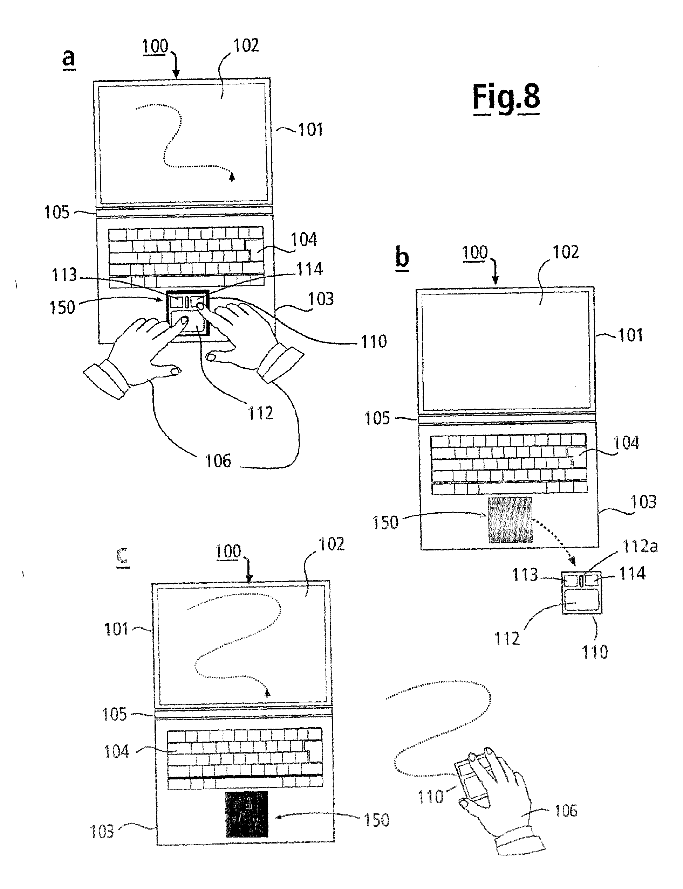

**Fig. 8** zeigt eine schematische Darstellung einer weiteren erfindungsgemäßen Ausführungsform mit einem zweiflügeligen Notebook-Digitalcomputer 110 in drei verschiedenen Betriebszuständen a, b und c. **Fig. 8** entspricht in wesentlichen Zügen der in **Fig. 1** dargestellten Anordnung. Das zweiflügelige Notebook 100 umfaßt einen Deckelteil 102 mit einem darin eingelassenen Anzeigedisplay 102 sowie einen Prozessorteil 103 mit einer darauf angeordneten Tastatur 104. Der Deckelteil 102 und der Prozessorteil 103 sind mit einer Scharniereinrichtung 105 nach der Art eines Buches auf- und zuklappbar mechanisch miteinander gekoppelt. Der Prozessorteil 103 umfaßt in seinem Inneren nicht näher dargestellte Systemkomponenten wie eine Hauptplatine mit einer Zentraleinheit, mit Arbeits- und Massenspeicher und anderen für ein Notebook üblichen Komponenten. Wie bei Notebooks allgemein üblich, ist das Anzeigedisplay 102 durch die Scharniereinheit 105 hindurch elektrisch mit den elektronischen Komponenten im Prozessorteil 103 verbunden.

Das Gehäuse des Prozessorteils 103 weist in seinem der Scharniereinheit 105 abgewandten und dem Benutzer 106 zugewandten Bereich eine Aufnahme 150 auf, die beispielsweise als Vertiefung in der Tastaturseite des Prozessorteils 103 zur Aufnahme eines Eingabegerätes 110 eingerichtet ist. Das Eingabegerät 110 weist bei dem gezeigten Ausführungsbeispiel auf der Oberseite ein Slidepad 112, ein Stellrädchen 112a sowie einen ersten Betätigungstaster 113 und einen zweiten Betätigungstaster 114 auf. Auf der Unterseite beinhaltet das Eingabegerät 110 eine Rollkugel mit dazugehörigen Rollkugel-Bewegungssensoren (beides nicht dargestellt) oder eine optische Untergrundabtastvorrichtung (nicht dargestellt), wie sie jeweils auch in einer Maus anzutreffen sein können. Ferner beinhaltet das Eingabegerät 110 eine Stromquelle wie eine Batterie oder einen Akkumulator (nicht dargestellt) sowie eine geeignete elektronische Schaltung (nicht dargestellt), mit der die im folgenden beschriebene Funktionalität erbracht werden kann.

Wenn das Eingabegerät 110 wie in **Fig. 8a** dargestellt in die Aufnahme 150 eingesetzt ist, kann das Eingabegerät 110 in dieser Aufnahme 150 durch geeignete Rastvorrichtungen (nicht dargestellt) arretiert werden. Die Rastvorrichtung kann mechanische Rastelemente wie beispielsweise eine oder mehrere Rastnasen oder aber auch andere Elemente wie Permanentmagnete umfassen. In diesem in **Fig. 8a** dargestellten Betriebsmodus kann der Benutzer 106 das Notebook 100 durch Betätigung des Slidepads 112, des Stellrädchens 112a und/oder der Taster 113, 114 beeinflussen.

Der Prozessorteil 103 sowie das Eingabegerät 110 weisen je eine geeignete Einrichtung zur drahtlosen Datenübertragung (nicht dargestellt) wie beispielsweise eine Einrichtung zur Datenübertragung über eine kurzreichweitige Funkverbindung (etwa gemäß dem Bluetooth-Standard etc.) oder eine Einrichtung zur Datenübertragung über eine Infrarotstrecke (etwa gemäß dem IRDA-Standard) auf.

Es kann vorgesehen sein, daß der Prozessorteil 103 und das Eingabegerät 110 in dem in **Fig. 8a** dargestellten Betriebsmodus durch mindestens eine elektrische Steckverbindereinrichtung (nicht dargestellt) oder andere geeignete Kontaktanordnungen (nicht dargestellt) elektrisch miteinander gekoppelt sind, um die aus den Bedienvorgängen des Benutzers 106 resultierenden Informationssignale den im Prozessorteil 103 angeordneten Bauelementen zuzuspeisen. In diesem Betriebsmodus kann die Stromversorgung des Eingabegerätes 110 durch die Steckverbindereinrichtung oder durch andere Kontaktanordnungen vom Prozessorteil 103 übernommen werden.

Wird das Eingabegerät 110 - wie in **Fig. 8b** gezeigt - aus dem Prozessorteil 103 herausgelöst und aus der Aufnahme 150 herausgenommen, so kann es der Benutzer 106 - wie in **Fig. 8c** gezeigt - nach der Art einer Maus benutzen. Die durch die Rollkugelsensoren beziehungsweise durch die optische Abtasteinrichtung generierten Bewegungssignale sowie Signale, die eine Betätigung der Tasten 113 und/oder 114 anzeigen, werden über die Einrichtung zur drahtlosen Datenübertragung (nicht dargestellt) an den Prozessorteil 103 übertragen und dort wie herkömmliche Maus-Signale ausgewertet.

Nach erfolgtem Gebrauch verriegelt der Benutzer das Eingabegerät 110 zum Transport wieder in der Aufnahme 150 des Prozessorteils 103, wie es in **Fig. 8a** gezeigt ist. Auch hier ist es möglich, die Gehäuserückseite, d.h. die Tastaturabgewandte Seite mit einer Fensteröffnung (nicht gezeigt) auszuführen, welche in einer weiteren Ausführungsform mittels eines Schlebedeckels (nicht gezeigt) oder einer Klappe, oder eines koppelbaren Deckels aus optischen Gründen oder zum Schutz von Eingabemitteln geschlossen werden kann.

**Fig. 9** zeigt eine schematische Darstellung einer ersten vorteilhaften Weiterentwicklung der Erfindung gemäß der in **Fig. 8** dargestellten dritten Ausführungsform des erfindungsgemäßen portablen Digitalcomputers mit einem zweiflügeligen Notebook-Digitalcomputer 100 in drei verschiedenen Betriebszuständen a, b und c. Bei dieser Weiterbildung ist das Eingabegerät 110 mittels einer zweiten Aufnahme 151 oder einer dritten Aufnahme 152 in der Rückseite des Prozessorteils 103 beziehungsweise des Deckelteils 101 befestigbar.

Fig. **9a** zeigt schematisch im Querschnitt das Notebook 100 in einem ersten Betriebszustand, bei dem das Eingabegerät 110 in der ersten Aufnahme 150 eingesetzt ist, so daß das Slidepad 112 sowie die Taster auf derselben Seite des Prozessorteils 103 angeordnet sind wie die Tastatur 104. In **Fig. 9b** ist schematisch im Querschnitt des Notebooks 100 gezeigt, wie das Eingabegerät 110 aus der ersten Aufnahme 150 herausgenommen wird. **Fig. 9c** zeigt den zweiten Betriebszustand für die rückseitige Bedienung mit einem oder mehreren Fingern einer das Notebook 100 haltenden Hand eines Benutzers 106, bei der die Bedienelemente, insbesondere das Slidepad 112 und die Taster 113, 114 auf der zu Seite des Prozessorteils 103, auf der die Tastatur 104 liegt, entgegengesetzten Seite (der Unterseite 120 des Prozessorteils 103) hin orientiert sind. Dabei kann das Eingabegerät in eine zweite Aufnahme 151 in der Rückseite 120 des Prozessorteils oder in eine dritte Aufnahme 152 in der Rückseite des Deckelteils 101 eingesetzt sein.

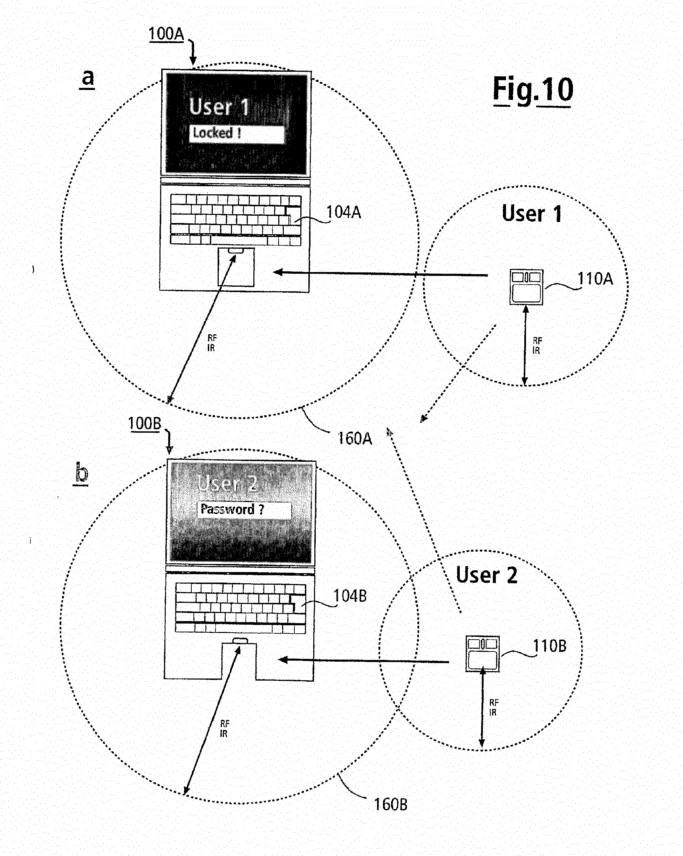

**Fig. 10** zeigt eine erste Weiterentwicklung der erfindungsgemäßen Lösung, bei der das Eingabegerät 110 mit einer elektronischen Einrichtung zur Benutzeridentifikation und/oder Benutzerauthentikation versehen ist. Im dargestellten Beispiel ist ein nach der in **Fig**. **8** dargestellten Art beschaffenes erstes Notebook 100A sowie ein nach der in **Fig. 1** dargestellten Art beschaffenes zweites Notebook 100B dargestellt. Hinsichtlich beider Notebooks 100A, 100B wird angenommen, daß der Benutzer eine Zeit lang abwesend war und die jeweiligen Betriebsysteme der Notebooks 100A beziehungsweise 100B die jeweiligen Tastaturen 104A und 104B solange gesperrt halten, bis ich der berechtigte Benutzer erneut authentifiziert hat. Diese Authentifikation kann nun in einer Weiterentwicklung der Erfindung dergestalt geschehen, indem ein Eingabegerät 110A, 1108 als Authentikations-Token zur Authentifikation des berechtigten Benutzers verwendet wird. Wenn der Benutzer sich von seinem Notebook eine Zeit lang entfernen möchte, um beispielsweise eine Erfrischung zu sich zu nehmen, kann er das relativ kleine und kompakte Eingabegerät 110A, 110B einfach mitnehmen. Die Notebooks 100A, 100B sind vermöge ihrer Hardware und Software derart ausgestaltet, so daß die Tastatur 104A beziehungsweise 104B automatisch gesperrt wird, sobald das jeweilige Eingabegerät 110A, 110B aus der maximalen Reichweite 160A, 160B der kurzreichweitigen kabellosen Datenverbindung (beispielsweise per Funk oder per Infrarot) entfernt worden ist. Das jeweilige Notebook 100A, 100B muß dazu in die Lage versetzt werden, das jeweilige zu ihm gehörende Eingabegerät 110A beziehungsweise 110B sicher authentifizieren zu können. Dem Fachmann sind technische Mittel bekannt, mit denen dies erreicht werden kann. Beispielsweise können "challenge-rasponso"-Verfahren eingesetzt werden, um die Eingabegeräte 110A, 110B zu authentifizieren. Auch ist es möglich, komplexere Rechteschemata zu implementieren. Beispielsweise können mehrere Eingabegeräte verschiedener Benutzer einem einzelnen mobilen Digitalcomputer bekannt sein, so daß verschiedene Benutzer durch das von ihnen jeweils mitgeführte Eingabegerät identifiziert und authentifiziert werden können. Vorsorglich wird darauf hingewiesen, das auch andere Möglichkeiten der Identifikation des oder der Eingabemodule möglich sind, entscheident ist nur, dass der mobile Digitalcomputer 100 das entkoppelte Eingabegerät 110 oder die Eingabegeräte (nicht gezeigt) bzw. ein dazu vorbestimmtes Modul (nicht gezeigt) erkennt, und entsprechend vorherbestimmter Regeln, reagiert. Hierzu können gehören: Das Protokollieren bestimmter Vorgänge, das Berechtigen zur Nutzung von zumindest einem Teilbereich an möglichen Funktionen, Dokumenten und/oder Applikationen, das Untersagen von Nutzungsmöglichkeiten (Sperren), das Einrichten der Benutzeroberfläche entsprechend voreingestellter Userprofile, das umgehende Informieren des Berechtigten über Missbrauchsversuche z.B. über sms, e-mail, einen Anruf z.B. über Pager oder einfach nur das Warnen mittels lauter Signaltöne. Im Fall von extrem sicherheitsrelevanten Informationen können sogar das Löschen von entsprechenden Daten oder Geheimnissen, unter Umständen auch die Zerstörung von Speicherkomponenten (nicht gezeigt) bzw. anderen Soft- und/oder Hardwareteilen (nicht gezeigt) in Betracht kommen, falls dies erforderlich ist. Zur Zielgruppe dieser Nutzer dürften Militär, Forschungslabors, Geheimdienste, aber auch Unternehmensmanager gehören, die Wirtschafts-, Betriebsspionage oder sogar Landesspionage vermeiden wollen. Auch im täglichen Gebrauch, gerade im privaten Bereich gibt es Informationen, bei denen es unerwünscht oder sogar unangenehm und peinlich sein kann, wenn nach kurzem Verlassen seines Notebooks, sich ein Unbefugter Zugang zu seinem gespeicherten oder angezeigten Daten verschafft.

In dem Zusammenhang sind weitere Ausbildungsmöglichkeiten von Bedeutung:
1. Im Eingabegerät ist vorteilhafterweise ein Datenspeicher angeordnet, auf dem vertrauliche Informationen oder Geheimnisse gespeichert werden können. Das hat den Vorteil, dass der Nutzer nicht nur seinen Digitalcomputer durch zuvor beschriebene Lösung vor dem Zugriff Unbefugter schützt, sondern gleichzeitig durch Mitnehmen der relativ flach ausgeführten Maus, seine Daten bei sich hält. Über die beispielhaft vorher beschriebene USB-Lösung ist ein einfaches Konnektieren des Datenspeichers (nicht gezeigt) auch im laufenden Betrieb mit anderen Computern (nicht gezeigt) möglich, sofern diese nicht mit dem gleichen System zur drahtlosen Kommunikation und/oder Identifikation ausgestattet sind, oder der Nutzer nicht auf dem gewünschten Computer angemeldet wurde. Hierzu kann ein direktes Einstecken des Eingabegerätes 110 in den USB-Port deines Fremdgerätes (nicht gezeigt) möglich sein, oder das Eingabegerät 110 kann mittels einem z.B. USB-Kabel an den entsprechenden USB-Port des Fremdrechners (nicht gezeigt) angeschlossen werden. Es versteht sich von selbst, das in dem Fall der einfachen Kabelkonnektierung über vorbenanntes Kabel ein eventuell eingerichteter Sicherheitsbereich (nicht gezeigt) nicht ausgelesen werden kann, wenn dies vom Anwender bzw. Inhaber des Eingabegerätes 110 zur Steuerung eines Cursors nicht gewollt ist. Andere Ausbildungen als USB sind ebenfalls möglich.
2. Das Eingabegerät 110 kann durch entsprechende Ausgestaltung der Eingabemitttel (nicht gezeigt) und bei entsprechender Ausbildung des mobilen Digitalcomputers 100 auch als Verriegelungseinheit (nicht gezeigt) genutzt werden, um einen zweiflügeligen mobilen Computer sowohl Hardware- wie auch Softwareseitig verschlossen zu halten. Vorteilhafterweise ist hier der Verriegelungsmechanismus (nicht gezeigt) in dem Eingbegerät 110 zur Cursorsteuerung enthalten, da dieser Sperrmechanismus eine Sonderform darstellen würde und die Kosten eines serienmäßig hergestellen mobilen Digitalcomputers in die Höhe treiben würde. So kann, wie bereits in früheren Figuren beschrieben, im Bedarfsfall einer entsprechenden Anzahl von potentiellen Nutzern, nachträglich das Eingabegerät mit Verriegelungsmechanismus vermarktet werden. Die vorbeschriebene Ausbildung in Fig.2g1.1 und Fig. 2g2 kann hierzu vorteilhaft genutzt werden, da die Rastnase eines klappbaren Flügelteiles des mobilen Digitalcomputers in die Rastausnehmung des gekoppelten Eingabegerätes zum Arretieren von Deckel und Eingabegerät verwendet werden kann. Durch einen geeigneten Mechanismus aus dem Stand der Technik lässt sich die Rastnase aus Fig. 2g2 relativ einfach in dem Gehäuse des Eingabegerätes sperren. Das Sperren kann automatisch beim Schliessen des mobilen Digitalcomputers bewerkstelligen werden oder auch nach entsprechender Eingabe im Digitalcomputers oder nach einer Eingabe in das Eingabegerät. Umgekehrt ist der Verschluss durch eine entprechende Eingabe auch zu öffnen. Vorteilhaferweise kann die Ladebuchtöffnung (Fig.2g1.1 und Fig. 2g2) des Digitalcomputers 100 dazu genutzt werden auch im geschlossenen Zustand des zweiflügeligen Digitalcomputers Eingaben in das Eingabegerät 110 zu machen, sofern dieses wiederum mit entsprechenden Eingabemöglichkeiten ausgestattet ist. Dazu gehören beispielsweise zumindest Eingabemittel wie Taster zum Eingeben eines Sicherheitscodes bzw. einer PIN-Nummer oder eines Passwortes (nicht gezeigt) und/oder ein Eingabedisplay zur Eingabe mittels Bildschirmstiftes (nicht gezeigt), wobei die Eingabemittel, gemäß dem gezeigten Trackball 135 der Fig.5, auf der Rückseite der Eingabegerätes angeordnet sind.
3. Für alle vorbeschriebenen Lösungen gilt, wenn ein' entsprechendes Sicherheitssystem installiert und aktiviert wurde, das nach Aktivierung des Sperrmoduses (nicht gezeigt) ein wirksames Konnektieren bzw. Nutzen von anderen Datenschnittstellen am digitalen Mobilgerät nicht oder nur eingeschränkt möglich ist (nicht gezeigt).

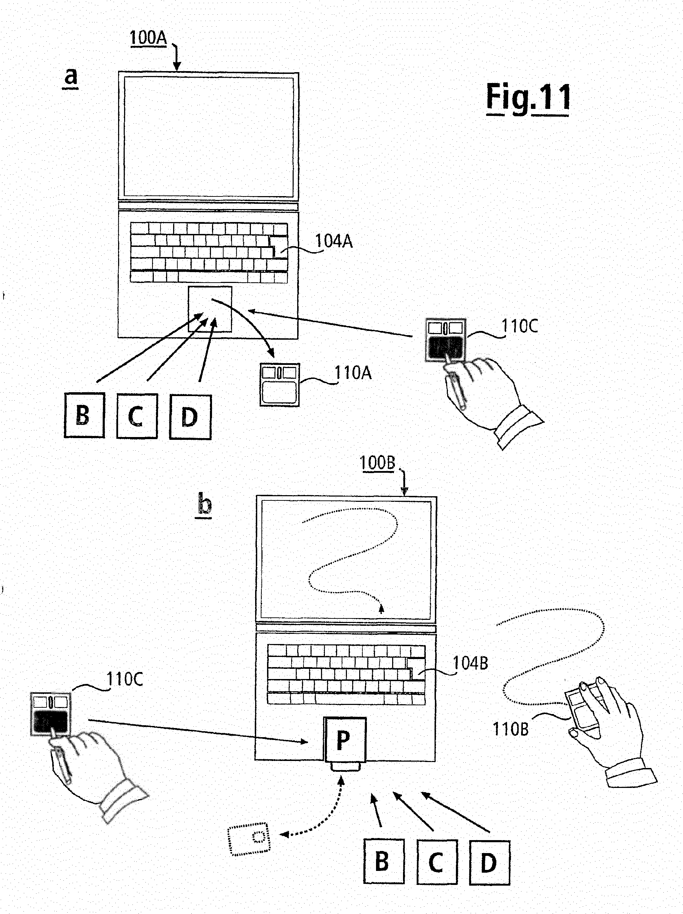

**Fig. 11** zeigt eine andere Weiterentwicklung der in **Fig. 10** illustrierten erfindungsgemäßen Lösung, bei der das Eingabegerät 110A, 110B mit mindestens einem Zusatzfunktionsmodul, beispielsweise einer elektronischen Einrichtung zur Benutzeridentifikation und/oder Benutzerauthentikation versehen ist. Ferner können andere Module vorgesehen sein, beispielsweise ein Sondermodul B mit einem Joystick (nicht dargestellt), ein Sondermodul C mit einer abweichenden Gestaltung von Slidepad und Tasten (beispielsweise ein Draitaston-Slidepad für Linux-Anwender) oder ein Trackball-Modul D. Auch kann ein Chipkartenaufnahmemodul P vorgesehen sein. Auch andere Module aus dem Stand der Technik sind möglich, beispielsweise Adapterkarten für Speichermodule, für Netzwerkanschlüsse und andere Systemerweiterungs-module. Insbesondere ist es auch möglich, Module mit oder ohne Mausfunktionalität zum Empfang und oder Senden von Satellitensignalen (Information) einzusetzen. Auch andere Telekommunikationsmodule (GSM, Modems, GRPS, ISDN, UMTS etc. pp.) oder Positionsbestimmungsmodule (GPS, Gallileo) können eingesetzt werden. Ebenfalls können Mobilfunktelefone, PDAs, Fernbedienungen und andere mobile Geräte ebenso wie auch USB- oder FireWire-Schnittstellenmodule eingesetzt bzw. gekoppelt werden. Es ist beispielsweise möglich, über ein zu koppelndes Displaymodul mit Stift und/oder Tasteneingabe 110c Auswahlfunktionen beispielsweise in einem Telefon- oder Werkverzeichnis derart zu steuern, daß das gekoppelte mobile Digitalgerät 100 oder dergleichen entsprechende Prozesse durchführt und/oder auf dem Gerätedisplay anzeigt. Selbstverständlich sind vielfältige Ausführungs-möglichkeiten denkbar, so kann jedes der aufgezählten Module mit oder ohne Cursorsteuerungseingabemittel oder mit anderen Funktionalitäten ergänzend ausgebildet werden. Demzufolge können auch bestimmte Funktionen und Funktionalitäten der erwähnten Module (nicht gezeigt) in dem Eingabegerät 110 ergänzend ausgebildet und angeordnet sein.

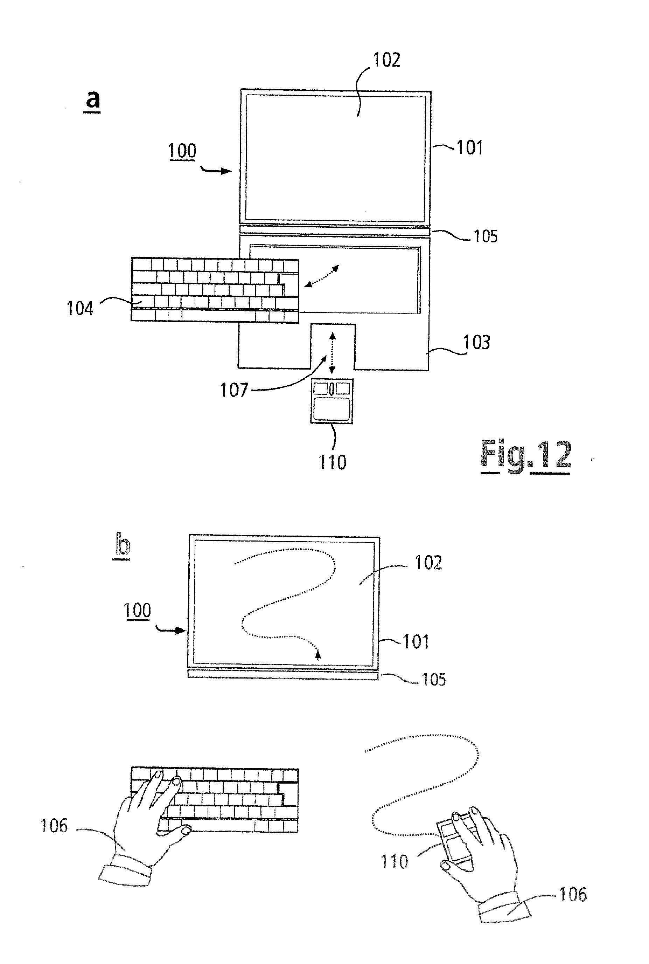

**Fig. 12** zeigt eine andere Weiterentwicklung der erfindungsgemäßen Lösung, bei der der portable Digitalcomputer mit einer herausnehmbaren Tastatur versehen ist. in **Fig. 12a** weist ein im allgemeinen nach der in **Fig. 1** dargestellten Art beschaffenes Notebook 100 eine Tastaturaufnahme 160 auf, in die die Tastatur 104 herausnehmbar eingesetzt ist. Die Tastatur 104 ist über eine kabellose Daten-übertragungsstrecke (nicht dargestellt) mit dem Prozessorteil 103 verbunden, so daß Tastaturanschlagsignale an den Prozessorteil 103 übertragen werden können. **Fig. 12b** zeigt schematisch das Arbeiten mit dem in **Fig. 12a** dargestellten Notebook bei mechanisch entkoppelter Tastatur 104 und mechanisch entkoppeltem Eingabegerät 110. Es ist auch möglich nach mechanischem Entkoppeln von Tastatur 104 und Eingabegerät 110 vom mobilen Digitalgerät 100, diese mittels Kabel zu verbinden um gegebenfalls eine gemeinsame Stromquelle, in der Tastatur 104 oder im Eingabegerät 110 zu verwenden, und um gegenenfalls die kabellose Datenkommunikation ebenfalls zu bündeln. Auch können Tastatur und/oder Eingabegerät bei Bedarf z.B. bei Ermüdung des Akkus über ein vorzugsweise USB- oder Firewire-Kabel mit dem mobilen Digitalcomputer verbunden werden. Die dazu notwendigen Schnittstellen sind in früheren Figuren, insbesondere in den Fig. 2g1.1 und 2g1.2 beschrieben. Die Schnittstelle an der Tastatur 104 zum Vebinden mit dem eingabegerät 110 und/oder dem mobilen Digitalcomputer sind nicht gezeigt, bedürfen jedoch insbesondere bei USB- bzw. Firewireausbildung keiner weiteren Ausführungen, da solche Tastaturen in Bezug auf Personal-Computer aus dem Stand der Technik bekannt sind

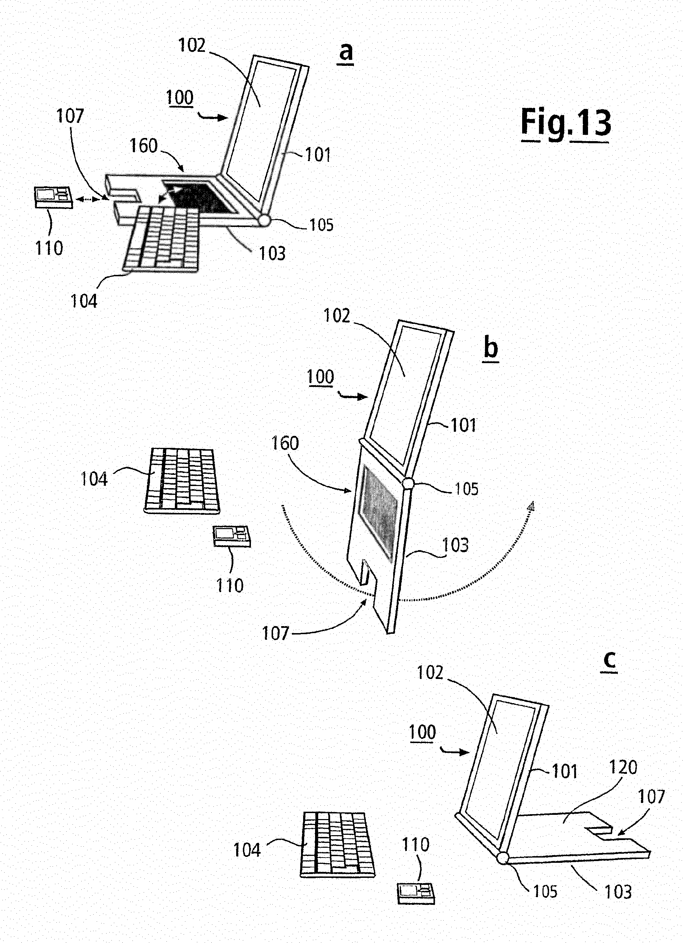

**Fig. 13** zeigt in einer schematisierten perspektivischen Darstellung verschiedene Betriebszustände der in **Fig. 12** dargestellten Ausführungsform und illustriert insbesondere den Übergang von dem in **Fig. 12a** dargestellten Zustand, in dem das Eingabegerät und die Tastatur mechanisch entkoppelt werden, zu dem in **Fig. 12b** dargestellten Endbetriebszustand. Durch Aufklappen des Notebooks 100 um die Scharniereinrichtung mit einem Winkel von deutlich über 180° - wie in **Fig. 13b** gezeigt - kann das Notebook in einen Zustand versetzt werden, der in **Fig. 12b** wie auch in **Fig. 13c** illustriert ist, bei dem die Tastaturseite des Prozessorteils 103 auf einer ebenen Unterlage, beispielsweise einer Tischoberfläche, aufliegt, wobei die Scharniereinheit 105 parallel zur Tischfläche auf dieser aufliegt und der Deckelteil mit dem Anzeigedisplay 102 senkrecht oder leicht zur Rückseite 120 des Prozessorteils 103 geneigt aufrecht steht, so daß der Benutzer den im Display 102 angezeigten Inhalte bequem erkennen kann.

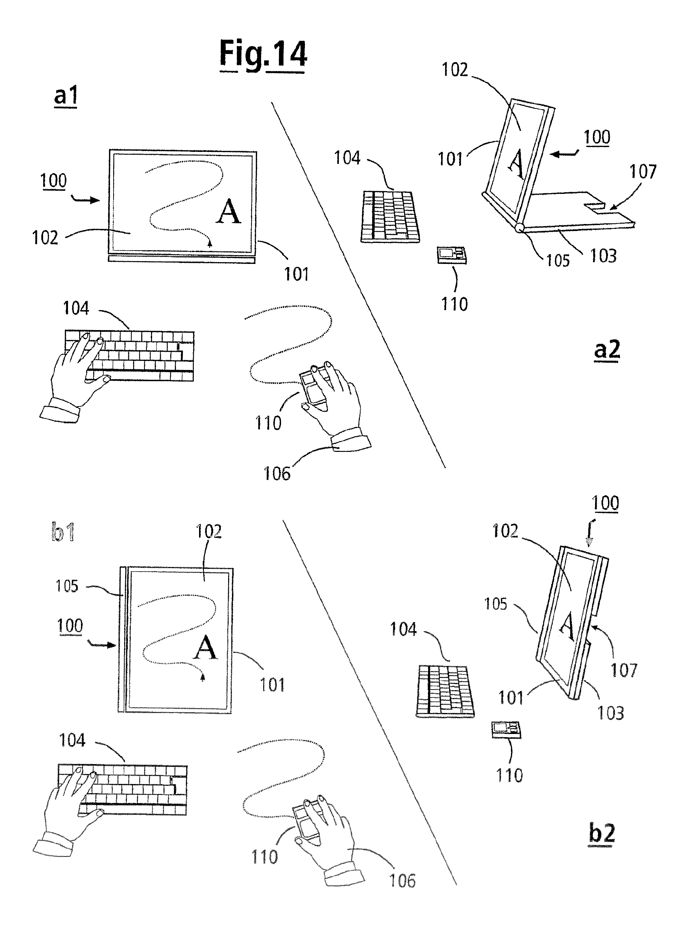

**Fig. 14** zeigt in einer schematisierten perspektivischen Darstellung verschiedene Betriebszustände einer Weiterentwicklung der in **Fig. 12** dargestellten Ausführungsform. Dabei entspricht der in Fig. **14a1** dargestellte Betriebszustand der in **Fig. 12b** illustrierten Situation, und **Fig. 14a2** entspricht **Fig. 13c****.** Eine Weiterentwicklung besteht nunmehr darin, daß das Notebook 100 derart eingerichtet ist, daß es auch mit im wesentlichen senkrecht gestellter Scharniereinheit 105 - wie in Fig. **14b1** aus Benutzersicht und in Fig. **14b2** aus einer Seitenansicht ersichtlich - auf einer ebenen Oberfläche, beispielsweise einer Tischfläche, stehen kann. Eine weitere Weiterentwicklung besteht darin, daß das Notebook die Darstellung des in der Anzeigeeinheit 102 angezeigten Inhaltes automatisch daran anpaßt, ob der in **Fig. 14a1** gezeigte Betriebsmodus oder der in **Fig. 14b1** gezeigte Betriebsmodus herrscht. Zu diesem Zweck kann die Prozessoreinheit 103 mit einem oder mehreren Schwerkraftschaltern ausgestattet sein.

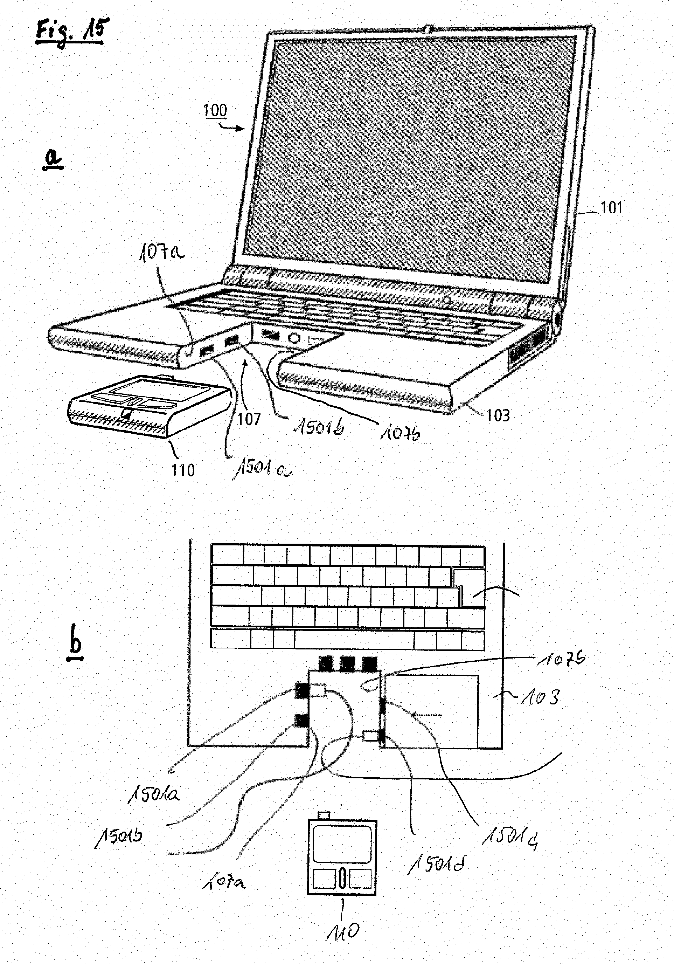

**Fig. 15** zeigt eine perspektivische Ansicht beziehungsweise eine Draufsicht auf eine weitere Ausführungsform der erfindungsgemäßen Lösung für einen zweiflügeligen Notebook-Digitalcomputer 100 mit einem Display-Teil 101, einem Tastatur-Teil 103 sowie mit einer multifunktionalen Koppelbucht 107, in die ein erfindungsgemäßes Eingabegerät 110 eingesetzt werden kann. Dabei stellt **Fig. 15a** eine perspektivische Ansicht des Notebook-Digitalcomputers 100 mit herausgenommenem Eingabegerät 110 dar, wohingegen **Fig. 15b** eine schematische Draufsicht auf den Tastatur-Teil 103 und das Eingabegerät zeigt. Die Besonderheit dieser Ausführungsform besteht darin, daß in mindestens einer Wand der Koppelbucht 107 mindestens ein weiteres elektrisches Interface 1501 a, 1501 b, 1501 c, 1501 d, vorgesehen ist, beispielsweise in einer Seitenwand 107a, 107b der Koppelbucht 107. Das mindestens eine elektrische Interface 1501 a, 1501 b, 1501c, 1501d kann insbesondere als elektrische Steckverbinderanordnung zum Anschluß von einem oder mehreren mit je einem Stecker versehenen Kabeln ausgeführt sein. Die Kabel können beispielsweise zu einem Peripheriegerät wie einem Scanner oder Drucker oder dergleichen führen.

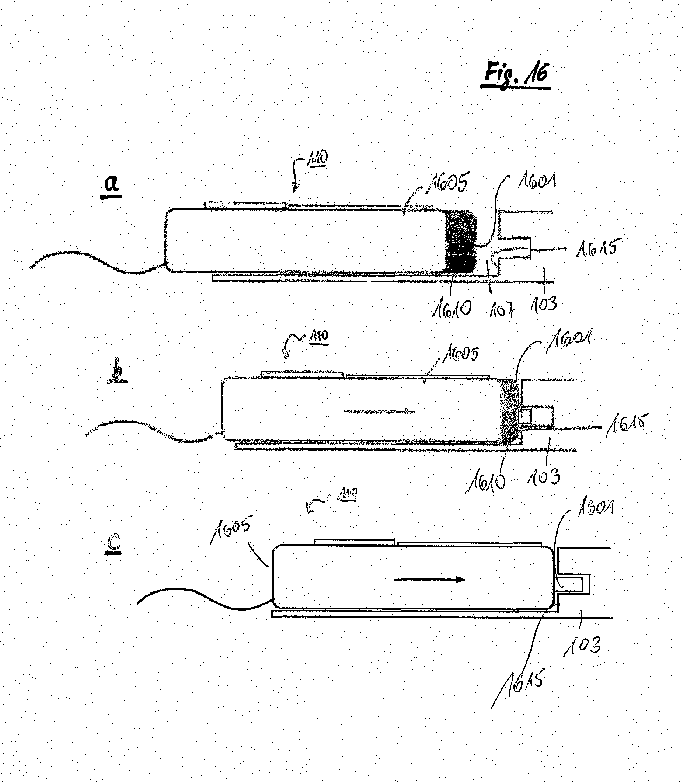

**Fig. 16** zeigt eine schematische Querschnittsansicht einer Weiterentwicklung einer erfindungsgemäßen Lösung für ein erfindungegemäßes Eingabegerät 110 mit einer verbesserten elektrischen Steckverbinder-Schnittstelle. Bei Ausgestaltung eines erfindungsgemäßen Eingabegerätes 110 mit einer vorspringenden elektrischen Steckverbindereinrichtung 1601 besteht je nach Bauart der elektrischen Steckverbindereinrichtung das Problem, daß die Steckverbindereinrichtung 1601 aus dem Gehäuse 1605 des Eingabegerätes mechanisch hervorsteht. Zur Lösung dieses speziellen Problemes wird vorgeschlagen, das Eingabegerät mit einem geeignet geformten und federnd befestigten Abdeckschild 1610 zu versehen, welches die elektrische Steckverbindereinrichtung 1601 mechanisch abdeckt, wenn das Eingabegerät 110 sich außerhalb der Koppelbucht 107 befindet und mechanisch federnd zurückweicht, wenn das Eingabegerät 110 in die Koppelbucht 107 eingeführt wird, und dabei die elektrische Steckverbindereinrichtung 1601 mechanisch nach außen vortreten läßt. **Fig. 16a** zeigt ein entsprechend weiterentwickeltes Eingabegerät 110 in einer ersten Phase des Einführens des Eingabegerätes 110 in die Koppelbucht 107. Hierbei ist der Abdeckschild 1610 noch vollständig ausgefahren und deckt die vorstehende Steckverbindereinrichtung 1601 vollständig ab. **Fig. 16b** zeigt eine zweite Phase des Einführens des Eingabegerätes 110 in die Koppelbucht 107. Hierbei stößt der Abdeckschild 1610 gegen eine stirnseitige Seitenwand 1615 der Koppelbucht 107 und wird ein Stück zurück in das Gehäuse 1605 geschoben. **Fig. 16c** zeigt eine den Einführungsvorgang abschließende dritte Phase des Einführens des Eingabegerätes 110 in die Koppelbucht 107, bei der der Abdeckschild 1610 durch den Gegendruck der stirnseitigen Seitenwand 1615 der Koppelbucht 107 im wesentlichen zur Gänze in das Gehäuse 1605 geschoben ist.

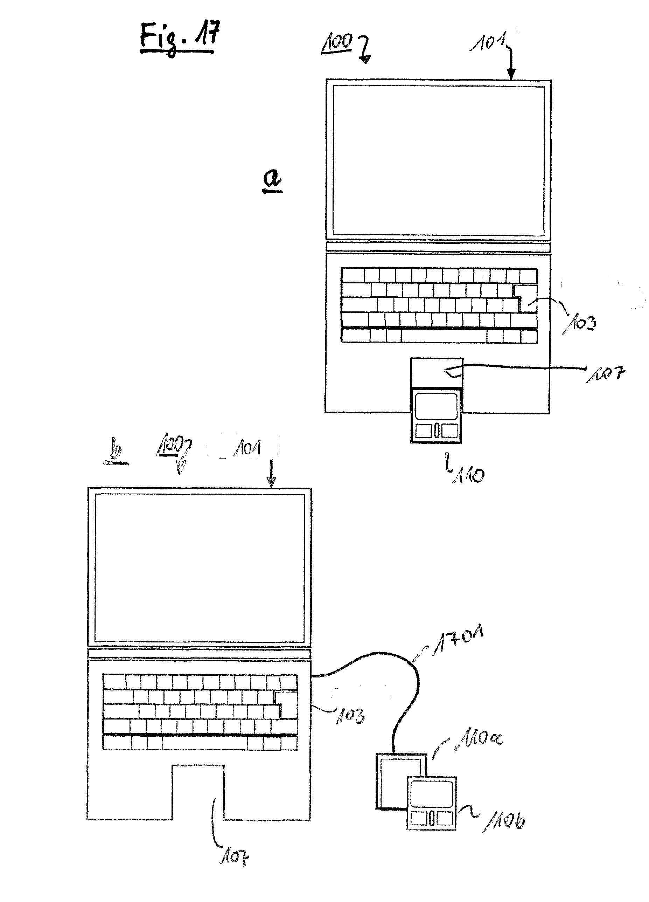

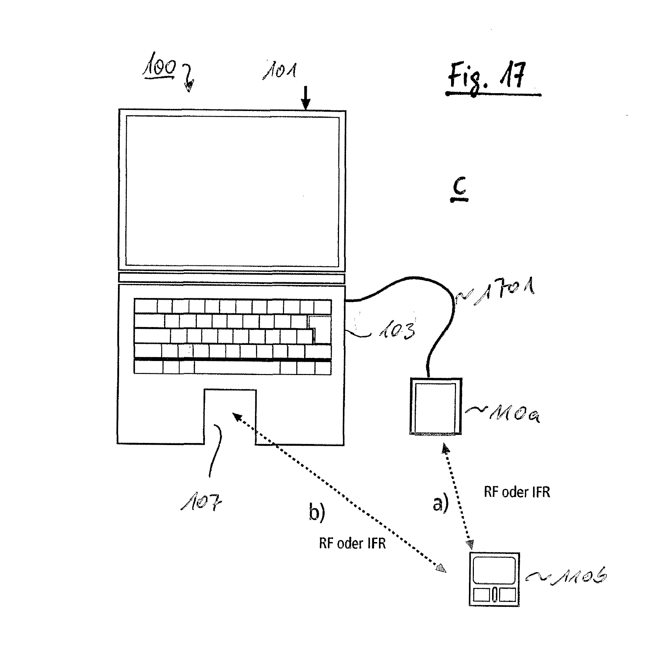

**Fig. 17** zeigt eine Draufsicht auf eine weitere Ausführungsform der erfindungsgemäßen Lösung mit einem zweiflügeligen Notebook-Digitalcomputer 100 sowie einem zweiteiligen Eingabegerät 110. **Fig. 17a** zeigt das in die Koppelbucht 107 eingesetzte weiterentwickelte erfindungsgemäße zweiteilige Eingabegerät 110, wohingegen **Fig. 17b** das in **Fig. 17a** dargestellte Szenario zeigt, wenn das zweiteilige Eingabegerät 110 aus der Koppelbucht 107 des Notebook-Digitalcomputers 100 herausgenommen ist. Das zweiteilige Eingabegerät 110 umfaßt einen im Regelfall unten liegenden ersten Teil 110a und einen oben auf den ersten Teil 110a auf- oder einsetzbaren zweiten Teil 110b. Der erste Teil kann insbesondere nach Art einer Ladeschale ausgestattet sein und ist dann mechanisch so ausgestaltet, daß der zweite Teil 110b auf dem ersten Teil 110a aufliegen oder sogar von dem ersten Teil 110a nach Art einer Schale aufgenommen werden kann. Alternativ kann die Oberseite des ersten Teil 110a auch mit einer nach oben stehenden Aufwölbung (nicht dargestellt) versehen sein, der in dem zweiten Teil 110b eine entsprechende Einwölbung gegenübersteht. Bei dieser letztgenannten Variante ist es möglich, die Bauhöhe des zweiten Teiles 110b im wesentlichen gleich hoch zu wählen wie die Höhe des Tastaturteils 103 des Notebooks 100, was die Handhabbarkeit des zweiten Teils 110b für einen Benutzer besonders bei schlanken notebooks von geringer Bauhöhe signifikant verbessern kann. Der zweite Teil 110b kann insbesondere funktional als Maus, Slidepad oder dergleichen ausgestaltet sein. In einer bevorzugten Ausführungsform sind die beiden Teile 110a, 110b mit elektrischen Kontakten (in **Fig. 17** nicht dargestellt) versehen, mittels derer beide Teile 110a, 110b hinsichtlich der Stromversorgung und/oder elektrischer Signale gekoppelt werden können, wenn der zweite Teil 110b auf dem ersten Teil 110a aufliegt. Beispielsweise kann der erste Teil 110a als Strom liefernde Ladeschale ausgeführt sein. **Fig. 17b** zeigt eine derartige Variante, bei der der erste Teil 110a mittels eines Kabels 1701 mit dem Tastaturteil 103 des Notebooks 100 verbunden ist, um die Stromversorgung des Eingabegerätes 110 sicherzustellen. Anstelle der (in **Fig. 17** nicht dargestellten) elektrischen Kontakte können beide Teile 110a, 110b auch je eine Induktionsspule aufweisen, über die elektrische Energie und/oder Datensignale übertragen werden, wenn der zweite Teil 110b auf dem ersten Teil 110a aufliegt. **Fig. 17c** zeigt das in **Fig. 17b** dargestellte Szenario, wobei der zweite Teil 110b von dem ersten Teil 110a abgenommen ist, um beispielsweise vom Benutzer (nicht dargestellt) als Slidepad oder Maus verwendet zu werden. Die Positionsdaten können insbesondere entweder von dem zweiten Teil 110b drahtlos - etwa per Funk oder Infrarotübertragung - direkt zum Notebook 100 oder aber von dem zweiten Teil 110b zunächst drahtlos zum ersten Teil 110a übertragen werden, wobei im letztgenannten Fall die Daten über das Kabel 1701 zum Notebook 100 übertragen werden können.

In einer bevorzugten Ausführungsform kann das Eingabegerät 110 mit seinen beiden Teilen 110a, 110b von einem Benutzer (nicht dargestellt) sowohl im in das Notebook-Gehäuse 103 eingesetzten Zustand als auch im herausgenommenen Zustand **(****Fig. 17c**) benutzt werden.

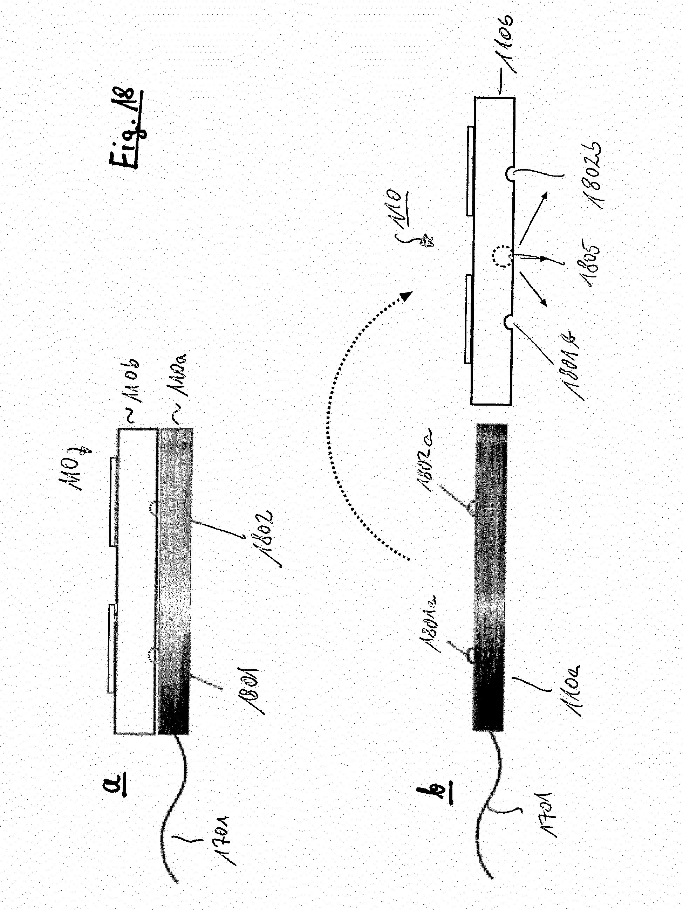

**Fig. 18** zeigt eine Querschnittsansicht des zweiteiligen Eingabegerätes 110 aus **Fig. 17****.** In **Fig. 18a** liegt der zweite Teil 110b des Eingabegerätes 110 auf der Oberseite des ersten Teils 110a des Eingabegerätes 110 auf. Der erste Teil 110a und der zweite Teil 110b sind durch elektrische Kontaktpaare 1801, 1802 elektrisch miteinander verbunden. In abweichenden Ausführungsformen kann auch eine andere Anzahl von Kontaktpaaren vorgesehen sein. In **Fig. 18b** ist das in **Fig. 18a** gezeigte Szenario wiedergegeben, wenn der zweite Teil 110b von dem ersten Teil 110a heruntergenommen ist. Eine Rollkugel oder optische Einheit 1805 ermöglicht ein Detektieren von relativen Ortsveränderungen des zweiten Teiles 110b gegenüber einer ebenen Oberfläche (nicht dargestellt).

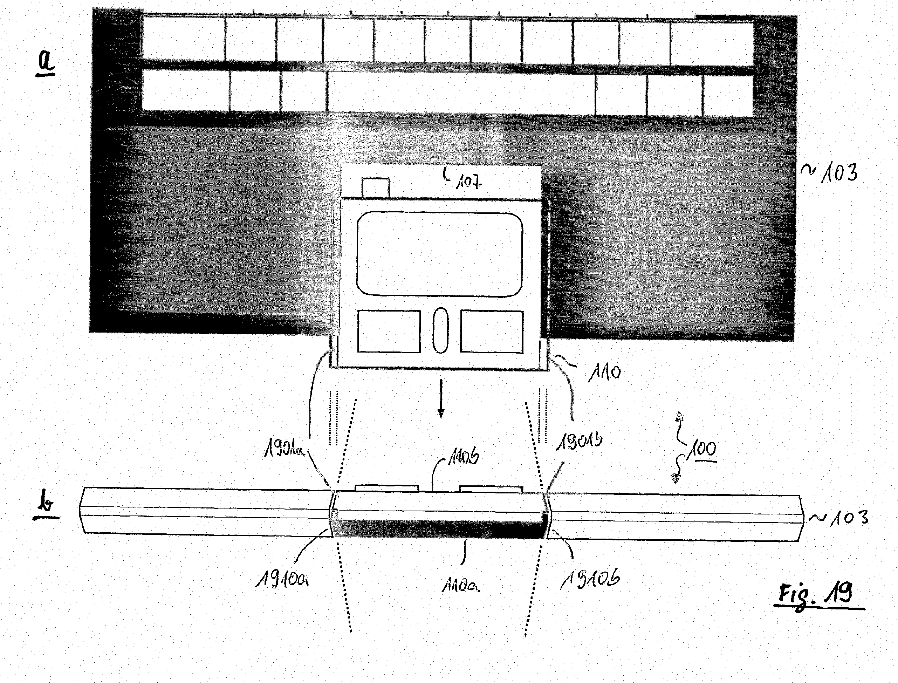

**Fig. 19** zeigt eine Draufsicht beziehungsweise eine schematisierte Querschnittsansicht eines erfindungsgemäßen Notebook-Digitalcomputers 100 mit einer Weiterentwicklung eines zweiteiligen Eingabegerätes 110 aus **Fig. 17****.** **Fig. 19a** zeigt eine schematische Draufsicht auf einen Tastaturflügel 103 eines Notebooks 100 mit einem in eine Koppelbucht 107 eingesetzten Eingabegerät 110, das in der Darstellung teilweise in die Koppelbucht 107 eingesetzt ist. **Fig. 19b** zeigt eine der **Fig. 19a** entsprechende Querschnittansicht. Bei der dargestellten Weiterentwicklung ist das zweiteilige Eingabegerät 110 derart ausgestaltet, daß bei zusammengesetztem ersten Teil 110a und zweitem Teil 110b die dabei resultierende Außenform des gesamten Eingabegerätes 110 seitliche Außenwände 1901a, 1901b aufweist, die konvex nach außen ausgewöbt sind. Die entsprechenden Seitenwände 1910a, 1910b der Koppelbucht 107 weisen eine ensprechende konkave Einwölbung auf. Dadurch wird das Eingabegerät 110 beim Ein- und Ausstecken in die / aus der Koppelbucht 107 mechanisch sicher geführt, ohne daß die Koppelbucht 107 eine obere und/oder eine untere Wand aufweisen müßte, um das Eingabegerät am Herausfallen zu hindern. Dadurch ist es insbesondere möglich, daß das als Bauhöhe des Eingabegerätes 110 die gesamte Höhe des Tastaturteils 103 des Notebooks 100 gewählt werden kann. Es versteht sich, daß dieses Merkmal auch auf einteilige Eingabegeräte 110 anwendbar ist. Ferner kann anstelle der in **Fig. 19** dargestellten auch ergonomisch vorteilhaften Auswölbung der Eingabevorrichtung auch eine anders geartete Nut-/Feder-Kombination in den Seitenwänden 1901a, 1901b des Eingabegerätes 110 beziehungsweise in den Seitenwänden 1910a, 1910b der Koppelbucht zur Anwendung kommen. Die gezeigte Auswölbung des Eingabegerätes ermöglicht ein vorteilhaftes Umgreifen mit der Hand eines Benutzers (nicht dargestellt).

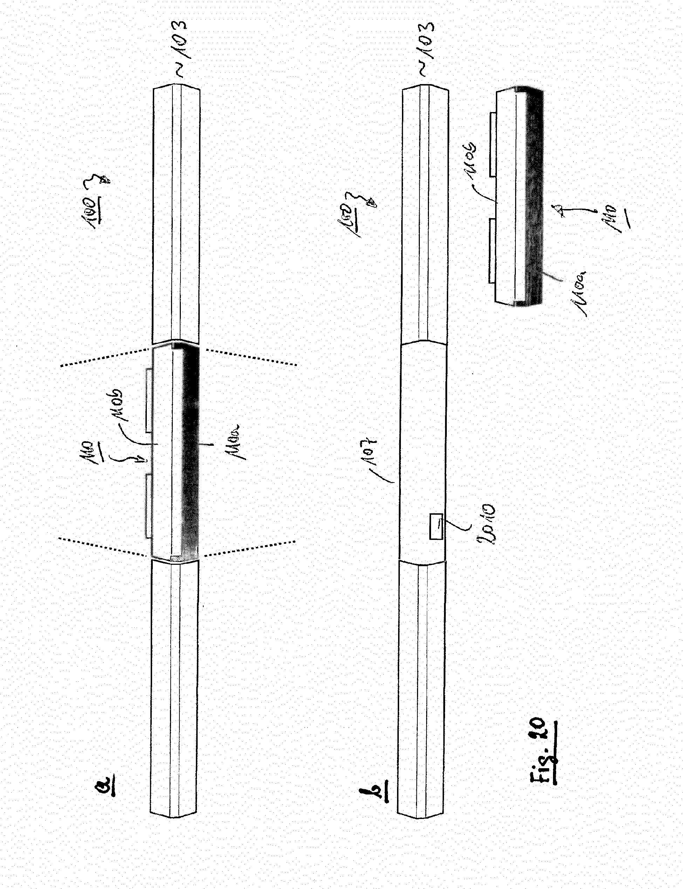

**Fig. 20** zeigt den erfindungsgemäßen Notebook-Digitalcomputer 100 aus **Fig. 19** mit eingestecktem **(****Fig. 20a****)** beziehungsweise herausgezogenem (**Fig. 20b****)** Eingabegerät 110. In **Fig. 20b** ist bei herausgenommenem Eingabegerät 110 an der Stirnwand der Koppelbucht 107 eine elektrische Schnittstelle 2010 erkennbar.

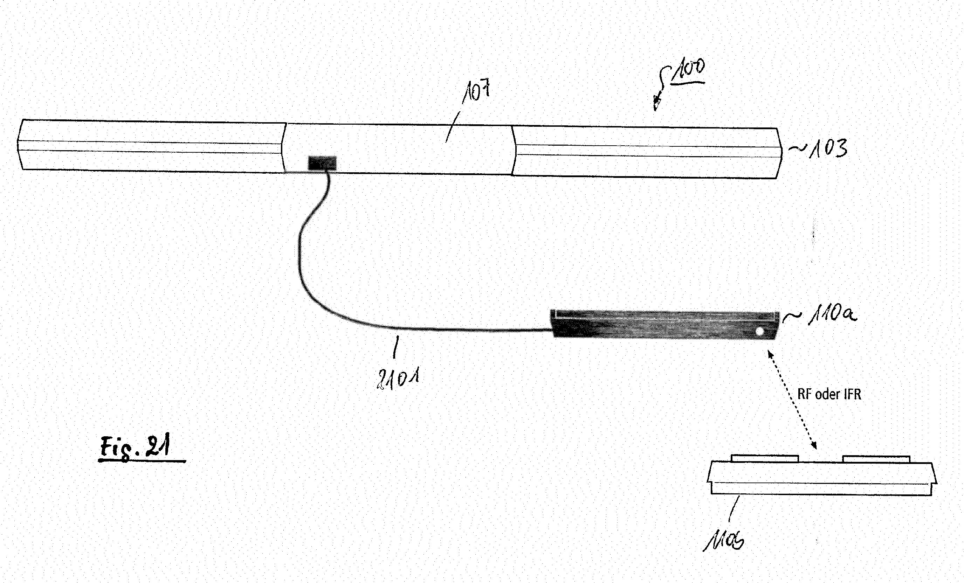

**Fig. 21** zeigt eine Weiterentwicklung des erfindungsgemäßen Notebook-Digitalcomputers 100 aus **Fig. 19** mit einem durch ein Kabel 2101 an die Stirnwand der Koppelbucht 107 des Notebook-Digitalcomputers 100 angekoppelten ersten Teils (Unterteil) des Eingabegerätes 110, wobei das Eingabegerät 110 aus der Koppelbucht 107 herausgenommen und überdies der zweite Teil (Oberteil) 110b vom ersten Teil 110a abgenommen ist.

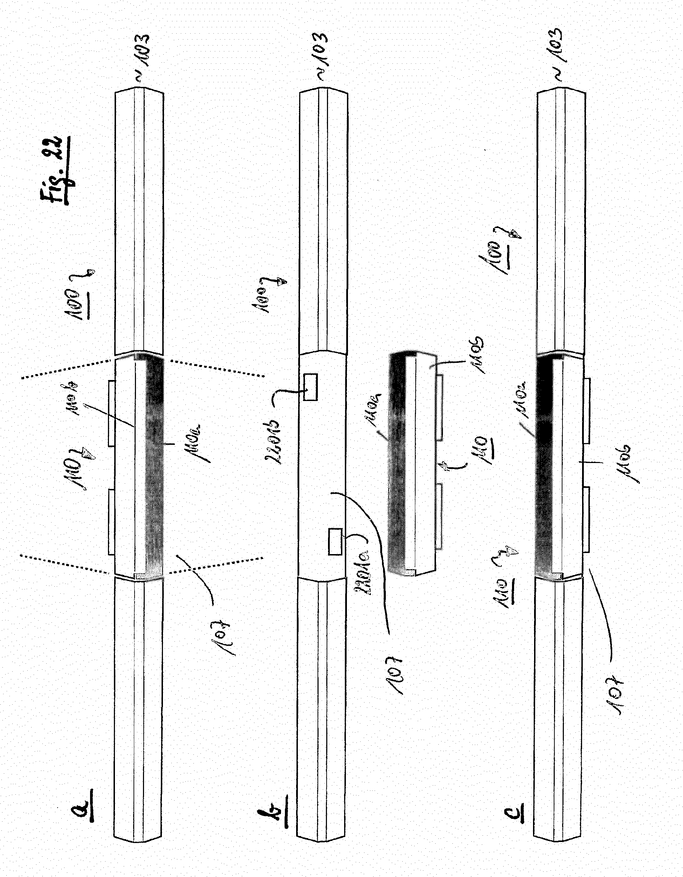

**Fig. 22** zeigt eine Weiterentwicklung des erfindungsgemäßen Notebook-Digitalcomputers 100 aus **Fig. 19** mit einem wendbaren Eingabegerät 110. **Fig. 22a** entspricht funktional der Darstellung in **Fig. 20a****.** In **Fig. 22b** sind im Vergleich zu **Fig. 20b** bei herausgenommenem Eingabegerät 110 zwei an der Stirnwand der Koppelbucht 107 symmetrisch angeordnete elektrische Schnittstellen 2201a, 2201 b erkennbar. Dieses ermöglicht, wie in **Fig. 22c** dargestellt, daß das Eingabegerät durch einen Benutzer (nicht dargestellt) auch in gewendeter Stellung betrieben werden kann, was beispielsweise eine Handhabung eines Notebook-Digitalcomputers nach der Art eines digitalen Buchgerätes ermöglicht. Hierbei sind beispielsweise ein Slidepad oder eine Rollkugel sowie gegebenenfalls auch Taster auf der dem Benutzer abgewandten Seite des Gehäuses des Notebooks 100 bedienbar.

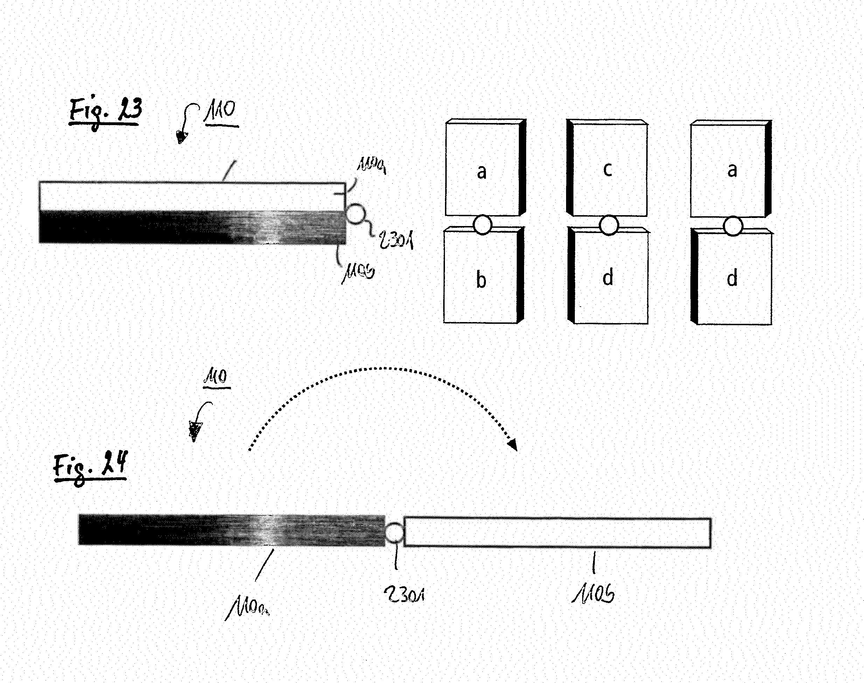

**Fig**. **23** und **Fig. 24** zeigen eine Weiterentwicklung eines aus zwei Teilen 110a, 110b zusammengesetzten erfindungsgemäßen Eingabegerätes 100, bei der der erste Teil 110a und der zweite Teil 110b über eine Kugelscharniervorrichtung 2301 schwenkbar miteinander verbunden sind. **Fig. 23** zeigt das Eingabegerät 110 in zusammengeklapptem Zustand, während **Fig. 24** das Eingabegerät in aufgeklapptem Zustand zeigt. **Fig. 23** zeigt im rechten Figurentoil eine schematische Darstellung der durch das Kugelscharnier 2301 möglichen mechanischen Konfigurationen.

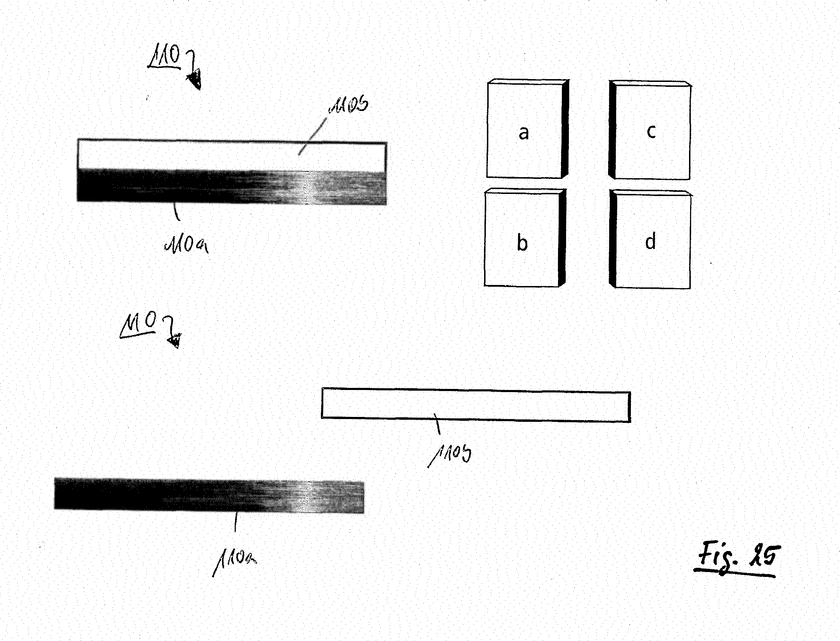

**Fig. 25** zeigt eine andere Weiterentwicklung eines aus zwei Teilen zusammengesetzten erfindungsgemäßen Eingabegerätes 110, bei dem der erste Teil 110a und der zweite Teil 110b nicht über ein Scharnier miteinander verbunden, sondern lediglich lose aufeinandergelegt sind. Es können auch andere mehrteilige Varianten vorgesehen werden, Im rechten Figurenteil von **Fig. 25** sind die dadurch erzielbaren mechanischen Konfigurationen (Orientierungen des ersten teils 110a / des zweiten Teils 110b) schematisch dargestellt.

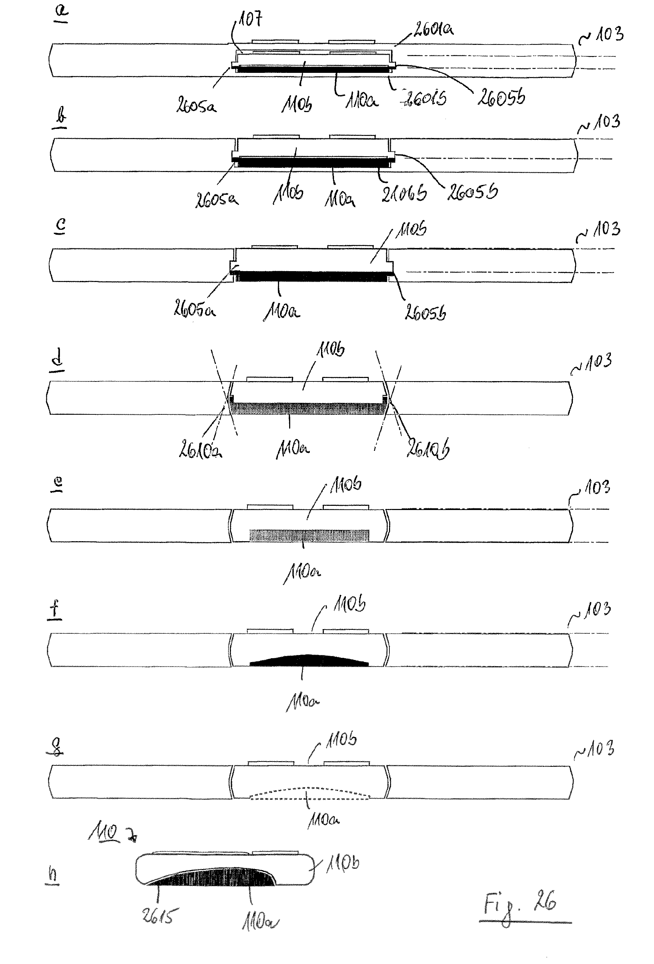

**Fig. 26** zeigt schematisch eine Übersicht über verschiedene Varianten der Integration des Eingabegerätes 110 in den Tastaturteil 103 eines Notebooks 100. **Fig. 26a** zeigt eine Konfiguration, bei der das Eingabegerät 110 in eine Koppelbucht 107 eingesetzt ist, die sowohl nach oben als auch nach unten durch eine Abdeckplatte 2601 a beziehungsweise 2601 b nach der Art eines Schachtes abgeschlossen ist. Das Eingabegerät 110 wird durch eine Nut-/Feder-Halterung 2605a, 2605b in der Koppelbucht 107 im Tastaturteil 103 des Notebooks 100 gehaltert. Durch die obere Abdeckplatte 2601 a werden die Bedienelemente auf der Oberseite des Eingabegerätes 110 abgedeckt, so daß sie nicht benutzt werden können. Daher ist es erforderlich, auf der Oberseite der Abdeckplatte 2601 a einen weiteren Satz bedienelemente vorzusehen. Die für das Eingabegerät 110 nutzbare Bauhöhe ist jedoch durch die Stärke der Abdeckplatten 2601a, 2601 b sowie den durch die zusätzlichen elektronischen Bauelemente benötigten Platz wesentlich vermindert. Eine Modifikation der in Fig. 26a gezeigten Anordnung besteht darin, den Schacht 107 seitlich zu verlegen (nicht dargestellt), so daß der zweite Satz an Bedienelementen nicht mehr die maximale Bauhöhe des Eingabegerätes 110 mindert. jedoch werden auch in diesem Fall zwei Sätze von Bedienelementen benötigt.

In **Fig. 26b** ist der Schacht durch Fortlassen der oberen Abdeckplatte 2601 a nach oben geöffnet. Dadurch wird die maximale Bauhöhe des Eingabegerätes 110 vergrößert, und ein zweiter Satz an Bedienelementen ist nicht mehr erforderlich. Das Eingabegerät 110 wird durch eine Nut-/Feder-Halterung 2605a, 2605b in der Koppelbucht 107 im Tastaturteil 103 des Notebooks 100 gehaltert.

In **Fig. 26c** ist auch die untere Abdeckplatte 2601 b fortgelassen, wodurch die maximale Bauhöhe des Eingabegerätes 110 weiter vergrößert wird. Das Eingabegerät 110 wird durch eine Nut-/Feder-Halterung 2605a, 2605b in der Koppelbucht 107 im Tastaturteil 103 des Notebooks 100 gehaltert.

In **Fig. 26d** ist die Nut-/Feder-Halterung 2605a, 2605b durch eine ergonomisch günstigere Auswölbung / Einwölbung 2610a, 2610b ersetzt.

In **Fig. 26e** ist der erste Teil des Eingabegerätes 110 nicht mehr wie in den **Fign. 26a** bis **26d** als schalenartiges Kostrukt ausgeführt, das den zweiten Teil des Eingabegerätes 110 aufnimmt. Vielmehr ist das erste Teil 110a des Eingabegerätes 110 als von der Stirnseite der Koppelbucht 107 senkrecht nach vorn zum Benutzer (nicht dargestellt) sich erstreckendes längliches Teil ausgeführt, auf das der zweiten Teil 110b links und rechts seitlich überstülpend aufgesetzt ist.

In **Fig. 26f** ist eine Modifikation der in **Fig. 26e** dargestellten Anordnung dargestellt, wobei der erste Teil 110a des Eingabegerätes 110 nach oben konvex aufgewölbt ist.

In **Fig**. **26g** ist eine Modifikation der in **Fig. 26f** dargestellten Anordnung dargestellt, wobei der erste Teil 110a des Eingabegerätes 110 nach oben konvex aufgewölbt ist, an der dem Benutzer (nicht dagestellt) zugewandten Vorderseite jedoch flach ausläuft, so daß der Benutzer bei in die Koppelbucht 107 eingeschobenem Eingabegerät 110 im wesentlichen nur den zweiten Teil 110b des Eingabegerätes sieht.

**Fig. 26h** zeigt eine schematische Schnittzeichnung durch das Eingabegerät 110 in **Fig. 26g** senkrecht zu der Schnittebene von **Fig. 26g****.** Die flach auslaufende Seite 2615 des ersten Teils des Eingabegerätes 110 ist erkennbar.

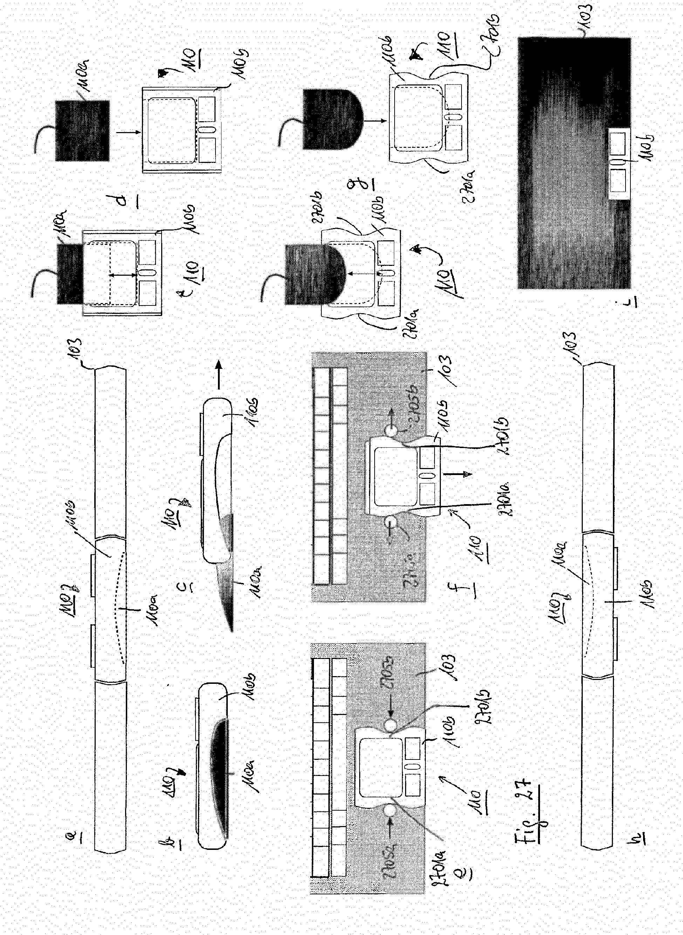

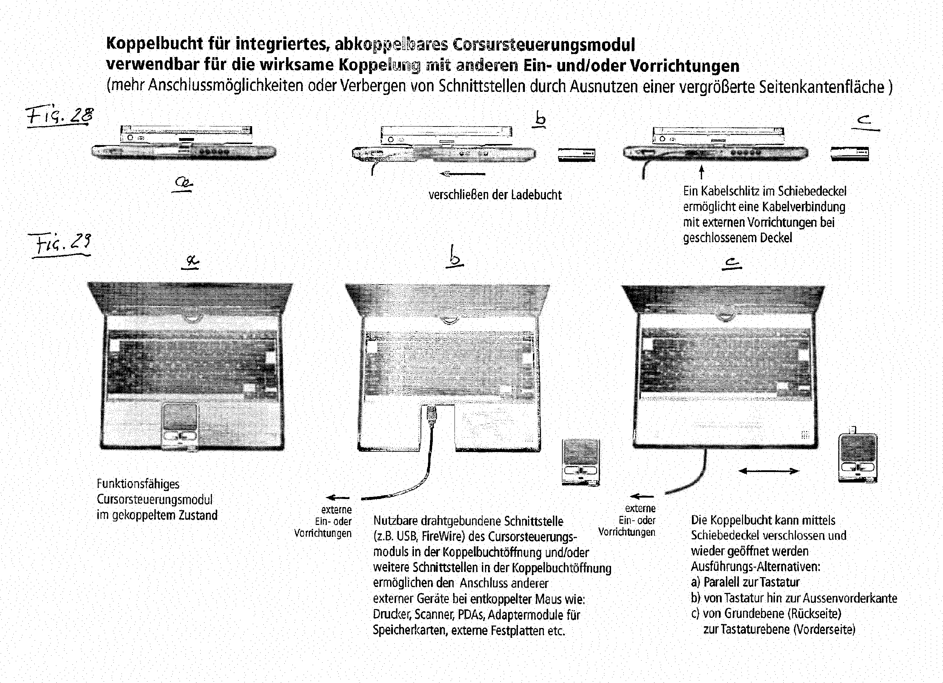

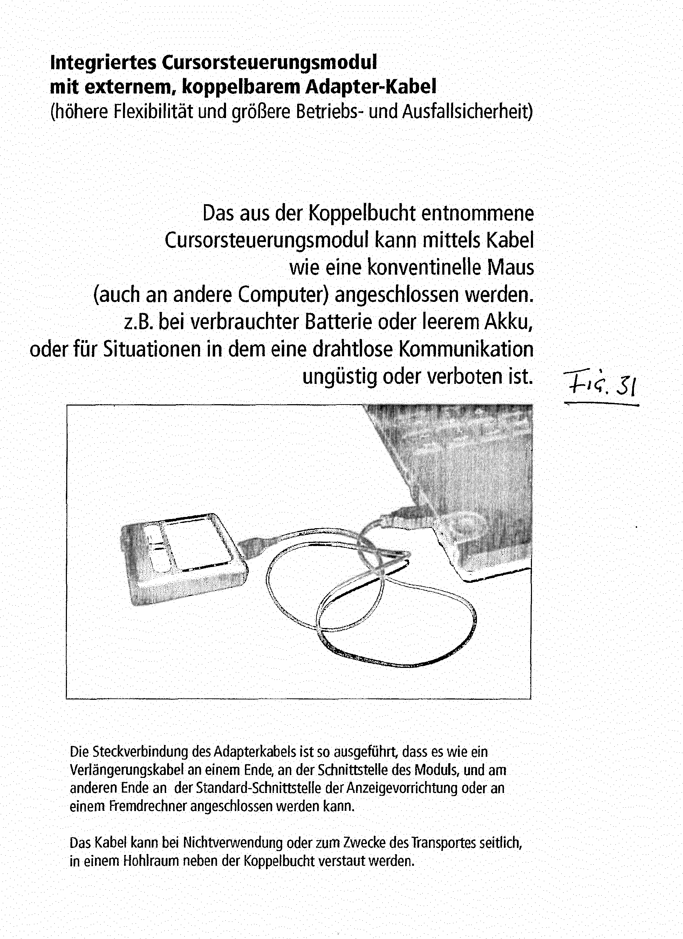

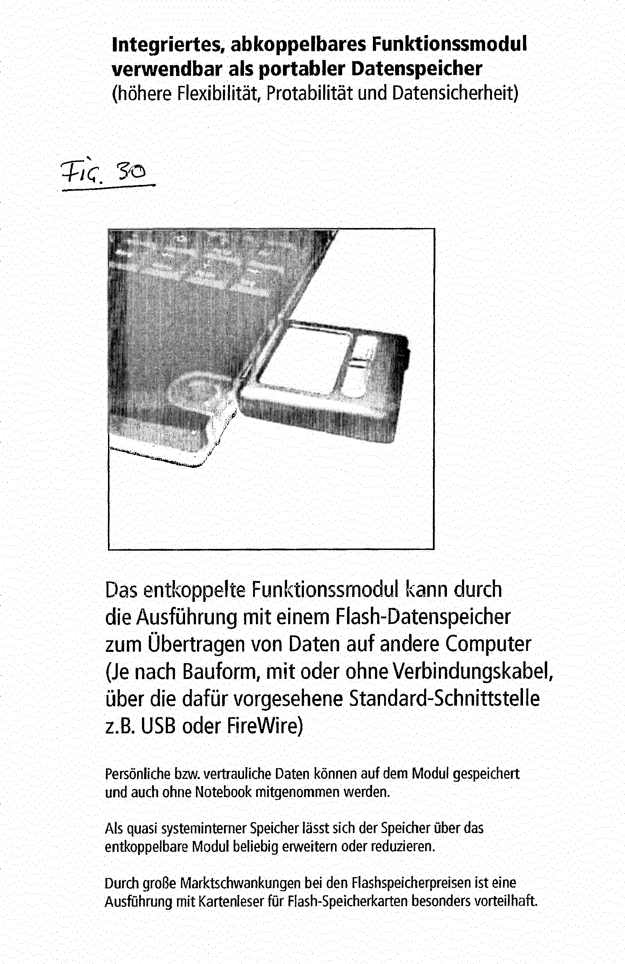

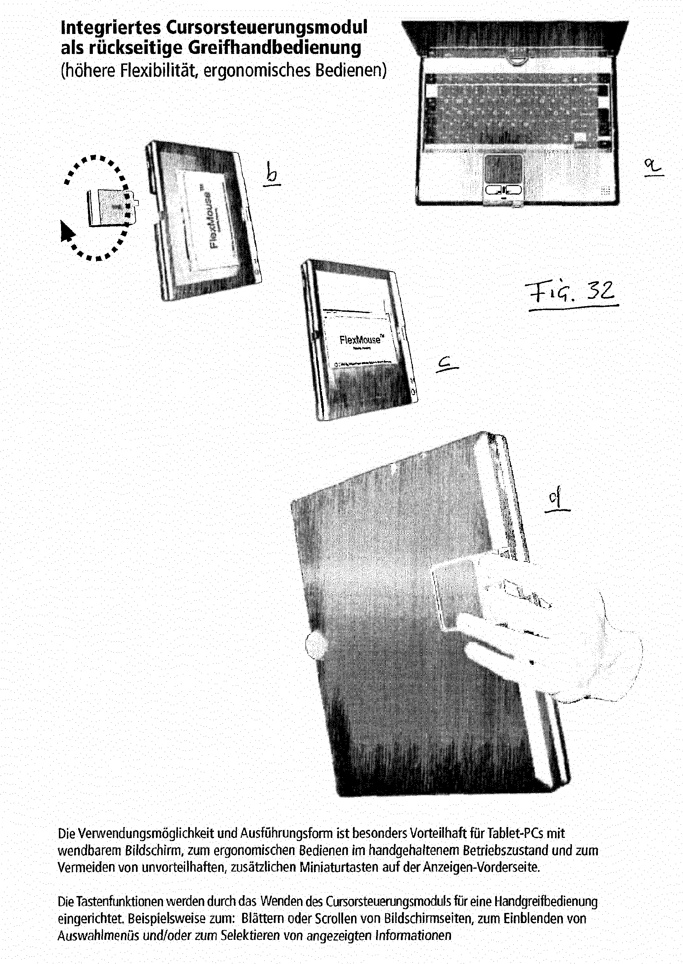

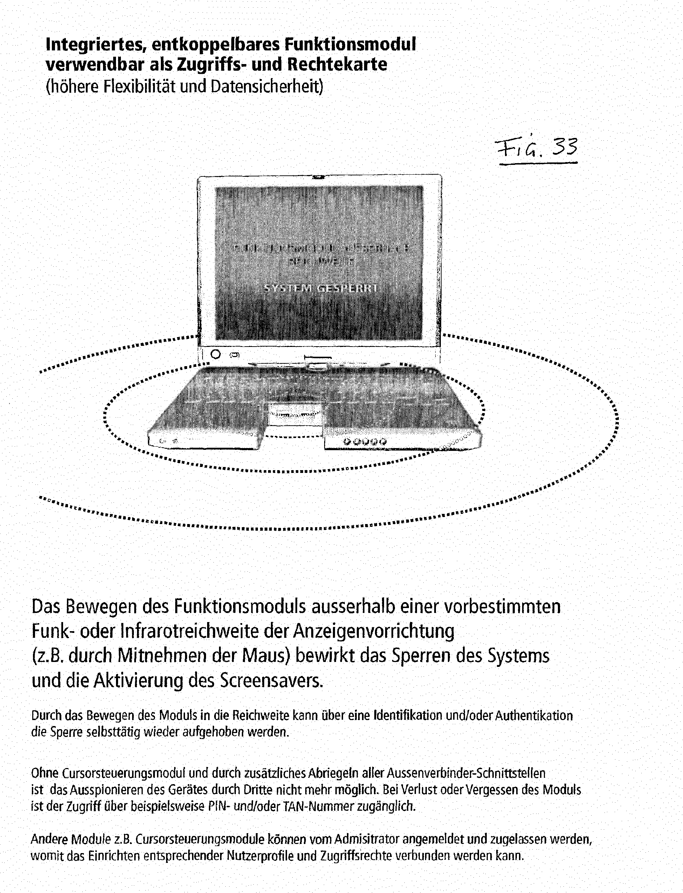

**Fig. 27** zeigt schematisch eine Übersicht über weitere Varianten der Ausgestaltung der Gehäuseform des Eingabegerätes 110 sowie der Integration des Eingabegerätes 110 in den Tastaturteil 103 eines Notebooks 100. **Fig. 27a** entsprecht **Fig. 26g****.** **Fig. 27b** entspricht **Fig. 26h****.** **Fig. 27c** veranschaulicht schematisch den Vorgang des Abnehmens des zweiten Teils 110b des Eingabegerätes 110 von dem ersten Teil 110a durch eine im wesentlichen horizontale Schiebebewegung in Pfeilrichtung. Das Aufsetzen erfolgt entsprechend in umgekehrter Pfeilrichtung. Durch die spezielle Wölbung der beiden Teile 110a, 110b des Eingabegerätes, wird eine ergonomisch günstige sichere Positionierung beider Teile 110a, 110b zueinander durch den Benutzer (nicht dargestellt) ermöglicht. **Fig. 27d** zeigt den Vorgang des Einschiebens des Eingabegerätes 110 in die Koppelbucht 107 entsprechend **Fig. 27c** schematisch von oben. **Fig. 27e** zeigt eine weitere Variante, bei der die äußere Form des zweiten Teils 110b durch je eine linke beziehungsweise rechte Griffeinbuchtung 2701 a, 2701 b in ergonomisch günstiger Weise verbessert ist. Zwei beispielsweise durch Federn (nicht dargestellt) mechanisch vorgespannte Greiffinger 2705a, 2705b können vorteilhafterweise vorgesehen sein, um das Eingabegerät 110 im eingeschobenen Zustand sicher im Tatstaturflügol 103 des Notebooks 100 zu fixieren. **Fig. 27f** zeigt die in **Fig. 27g** gezeigte Anordnung beim Herausziehen des Eingabegerätes 110. **Fig. 27g** zeigt den in den **Fign. 27e** und **27f** dargestellten Vorgang des Einschiebens / Herausziehens schematisch von oben.

**Fig. 27h** zeigt die in **Fig. 27a** dargestellte Anordnung bei gewendetem Eingabegerät 110; vgl. **Fig**. **22** und die dazugehörige Beschreibung. **Fig**. **27i** zeigt eine zu **Fig. 27h** gehörige Draufsicht auf die Unterseite des Tastaturflügels 103 des Notebooks 100.

Alle vorbeschriebenen Lösungen und Aspekte sind miteinander kombinierbar und beziehen sich ausdrücklich auf alle gezeigten oder beschriebenen Ausführungsbeispiele, wobei die jeweiligen Lösungen einzeln oder in Kombination mit anderen Lösungen auf alle in der Patentschrift erwähnten Geräte und/oder Einrichtungen anwendbar sind.

Die Erfindung stellt außerdem folgende Ausführungsbeispiele bereit:
1. Mobiler Digitalcomputer mit einem herausnehmbaren Eingabegerät zur Eingabe von relativen Ortsdaten für die Steuerung eines Cursors auf einem Anzeigedisplay durch eine entsprechende Bewegung einer Hand oder mindestens eines Fingers einer Hand eines Benutzers, wobei das Eingabegerät sowohl in einem ersten Betriebszustand, in welchem das Eingabegerät nicht herausgenommen ist, als auch in einem zweiten Betriebszustand, in welchem das Eingabegerät herausgenommen ist, den Cursor auf dem Anzeigedisplay steuern kann.
2. Digitalcomputer nach Ausführungsbeispiel 1, gekennzeichnet durch eine Zentraleinheit, wobei das Eingabegerät im zweiten Betriebszustand über eine kabelgebundene Datenkommunikationseinrichtung mit der Zentraleinheit gekoppelt ist.
3. Digitalcomputer nach Ausführungsbeispiel 1, gekennzeichnet durch eine Zentraleinheit, wobei das Eingabegerät im zweiten Betriebszustand über eine abtrennbare kabelgebundene Datenkommunikationseinrichtung mit der Zentraleinheit gekoppelt ist.
4. Digitalcomputer nach Ausführungsbeispiel 3, dadurch gekennzeichnet, dass die kabelgebundene Datenkommunikationseinrichtung ein Kabelstück umfasst, welches mindestens an dem dem Eingabegerät zugewandten Ende und/oder an dem der Zentraleinheit zugewandten Ende mit einer Steckverbindereinrichtung ausgestattet ist.
5. Digitalcomputer nach Ausführungsbeispiel 1, gekennzeichnet durch eine Zentraleinheit, wobei das Eingabegerät im zweiten Betriebszustand über eine drahtlose Datenkommunikationseinrichtung mit der Zentraleinheit gekoppelt ist.
6. Digitalcomputer nach Ausführungsbeispiel 5, dadurch gekennzeichnet, dass die drahtlose Datenkommunikationseinrichtung eine Infrarot-Datenübertragungseinrichtung ist.
7. Digitalcomputer nach Ausführungsbeispiel 5, dadurch gekennzeichnet, dass die drahtlose Datenkommunikationseinrichtung eine Hochfrequenzfunk-Datenübertragungseinrichtung ist.
8. Digitalcomputer nach einem der Ausführungsbeispiele 1 bis 7, dadurch gekennzeichnet, dass das Eingabegerät ein in eine Ausnehmung eines Digitalcomputer-Gehäuses herausnehmbar einsetzbares Mausgerät ist, das auf der Oberseite ein zusätzliches Slidepad aufweist.
9. Digitalcomputer nach einem der Ausführungsbeispiele 1 bis 7, dadurch gekennzeichnet, dass das Eingabegerät ein in eine Ausnehmung eines Gehäuses herausnehmbar einsetzbares Mausgerät ist, das auf der Oberseite eine zusätzliche Trackballeinrichtung aufweist.
10. Digitalcomputer nach einem der Ausführungsbeispiele 8 oder 9, dadurch gekennzeichnet, dass die Ausnehmung eine Bucht in der Vorderkante des Tastaturflügels eines zweiflügeligen Notebooks ist.
11. Digitalcomputer nach einem der Ausführungsbeispiele 1 bis 10, dadurch gekennzeichnet, dass das Eingabegerät durch einen Akkumulator gespeist wird, der in einem Eingabegerätegehäuse angeordnet ist.
12. Digitalcomputer nach Ausführungsbeispiel 11, dadurch gekennzeichnet, dass eine im Digitalcomputer-Gehäuse angeordnete Stromquelle im ersten Betriebszustand den Akkumulator aufladen kann.
13. Digitalcomputer nach einem der Ausführungsbeispiele 2 bis 12, gekennzeichnet durch eine im Eingabegerät angeordnete Sicherheitsdatenspeichereinrichtung zum Speichern von Daten zur Identifikation und/oder Authentikation mindestens eines Benutzers.
14. Digitalcomputer nach Ausführungsbeispiel 13, gekennzeichnet durch eine Sicherheitseinrichtung, wobei die Sicherheitseinrichtung Daten aus der Sicherheitsdatenspeichereinrichtung ausliest und in Abhängigkeit von den ausgelesenen Daten einen Sperr-Betriebszustand herbeiführt, in dem mindestens eine Benutzungsfunktionalität ganz oder teilweise gesperrt ist.
15. Digitalcomputer nach Ausführungsbeispiel 14, dadurch gekennzeichnet, dass die Sicherheitseinrichtung den Sperr-Betriebszustand insbesondere dann herbeiführt, wenn keine Datenkommunikation mit dem Eingabegerät zustandekommt.
16. Digitalcomputer nach Ausführungsbeispiel 15, dadurch gekennzeichnet, dass die Sicherheitseinrichtung den Sperr-Betriebszustand insbesondere dann aufhebt, wenn eine Datenkommunikation mit dem Eingabegerät zustandekommt und die übertragenen Daten vorbestimmten Bedingungen genügen.
17. Digitalcomputer nach Ausführungsbeispiel 16, dadurch gekennzeichnet, dass die Sicherheitseinrichtung vor dem Aufheben des Sperr-Betriebszustandes eine Benutzeridentifikation anhand von in der Sicherheitsdatenspeichereinrichtung gespeicherten Benutzeridentifikationsdaten ausführt.
18. Digitalcomputer nach Ausführungsbeispiel 17, dadurch gekennzeichnet, dass die Sicherheitseinrichtung vor dem Aufheben des Sperr-Betriebszustandes und nach der Benutzeridentifikation eine Benutzerauthentikation mittels einer Passwort- oder PIN-Abfrage durchführt.
19. Digitalcomputer nach Ausführungsbeispiel 17, dadurch gekennzeichnet, dass die Sicherheitseinrichtung vor dem Aufheben des Sperr-Betriebszustandes und nach der Benutzeridentifikation eine Benutzerauthentikation anhand von in der Sicherheitsdatenspeichereinrichtung gespeicherten Benutzerauthentifikationsdaten durchführt.
20. Digitalcomputer nach einem der Ausführungsbeispiele 1 bis 19, gekennzeichnet durch eine Konfigurationseinrichtung, wobei die Konfigurationseinrichtung in Abhängigkeit von dem Eingabegerät automatisch eine entsprechende Konfiguration vornehmen kann.
21. Digitalcomputer nach Ausführungsbeispiel 20, dadurch gekennzeichnet, dass das Eingabegerät zur Interaktion mit Fremdgeräten eingerichtet ist.
22. Digitalcomputer nach Ausführungsbeispiel 21, dadurch gekennzeichnet, dass das Fremdgerät ein Kraftfahrzeug ist.
23. Digitalcomputer nach Ausführungsbeispiel 22, dadurch gekennzeichnet, dass das Fremdgerät eine Gebäudesteuerungseinheit ist.
24. Digitalcomputer nach Ausführungsbeispiel 22, dadurch gekennzeichnet, dass das Fremdgerät eine Unterhaltungselektronikgerätesteuerung ist.
25. Digitalcomputer nach Ausführungsbeispiel 22, dadurch gekennzeichnet, dass das Fremdgerät eine Hausüberwachungseinrichtung ist.
26. Digitalcomputer nach Ausführungsbeispiel 22, dadurch gekennzeichnet, dass das Fremdgerät ein Verkaufsautomat ist.
27. Digitalcomputer nach Ausführungsbeispiel 22, dadurch gekennzeichnet, dass das Fremdgerät eine behördliche Personenidentifikationseinrichtung ist.
28. Digitalcomputer nach Ausführungsbeispiel 21 bis 27, dadurch gekennzeichnet, dass das Eingabegerät dem Fremdgerät Identifikationsinformationen und/oder Authentikationsinformationen und/oder Konfigurationsinformationen zur Verfügung stellen kann.
29. Digitalcomputer nach einem der Ausführungsbeispiele 1 bis 28, dadurch gekennzeichnet, dass das Eingabegerät zur Speicherung von personenbezogenen Daten eingerichtet ist.
30. Digitalcomputer nach Ausführungsbeispiel 29, dadurch gekennzeichnet, dass die personenbezogenen Daten mindestens ein Datenelment aus der biometrische Daten, Altersklassenmerkmale, Altersdaten, Namensdaten, Geburtdaten, Wohnortdaten, Güterstandsdaten enthaltenden Gruppe umfasst.
31. Digitalcomputer nach einem der Ausführungsbeispiele 1 bis 30, dadurch gekennzeichnet, dass das mindestens eine Funktionalität des Eingabegerätes gesperrt ist, bis eine spezifische Interaktion des Benutzers stattgefunden hat.
32. Digitalcomputer nach Ausführungsbeispiel 31, dadurch gekennzeichnet, dass die spezifische Interaktion eine Eingabe einer spezifischen Information und/oder eine Wechselwirkung mit einem spezifischen Gegenstand beinhaltet.
33. Digitalcomputer nach Ausführungsbeispiel 32, dadurch gekennzeichnet, dass die spezifische Information ein Passwort oder eine PIN oder TAN ist.
34. Digitalcomputer nach Ausführungsbeispiel 32, dadurch gekennzeichnet, dass der spezifische Gegenstand ein mechanischer Schlüssel oder eine Chipkarte oder ein Dokument ist.
35. Digitalcomputer nach einem der Ausführungsbeispiele 1 bis 34, dadurch gekennzeichnet, dass das Eingabegerät eine Eingabegerät-Anzeigeinrichtung zur Anzeige von Texten und/oder graphischen Informationen umfasst.
36. Digitalcomputer nach Ausführungsbeispiel 35, dadurch gekennzeichnet, dass die Eingabegerät-Anzeigeeinrichtung ein Touchscreen-Display umfasst.
37. Digitalcomputer nach Ausführungsbeispiel 36, dadurch gekennzeichnet, dass das Eingabegerät eingerichtet ist, von dem Benutzer vorgegebene relative Ortsdaten mittels des Touchscreen-Displays entgegenzunehmen.
38. Digitalcomputer nach Ausführungsbeispiel 37, dadurch gekennzeichnet, dass das Eingabegerät eingerichtet ist, durch Betätigung des Touchscreen-Displays mindestens einen Auswahl - und Selektionsvorgang auszulösen.
39. Eingabegerät zur Eingabe von relativen Ortsdaten für die Steuerung eines Cursors auf einem Anzeigedisplay eines Computers durch eine entsprechende Bewegung einer Hand oder mindestens eines Fingers einer Hand eines Benutzers, das dazu eingerichtet ist, durch Koppeln mit mindestens einem Fremdgerät dem Fremdgerät Identifikationsdaten und/oder Authentifikationsdaten und/oder Konfigurationsdaten bereitzustellen.
40. Eingabegerät nach Ausführungsbeispiel 39, dadurch gekennzeichnet, dass das Eingabegerät über eine kabelgebundene Datenkommunikationseinrichtung mit einer Zentraleinheit des Fremdgerätes gekoppelt ist.
41. Eingabegerät nach Ausführungsbeispiel 40, dadurch gekennzeichnet, dass das Eingabegerät im über eine abtrennbare kabelgebundene Datenkommunikationseinrichtung mit der Zentraleinheit gekoppelt ist.
42. Eingabegerät nach Ausführungsbeispiel 41 dadurch gekennzeichnet, dass die kabelgebundene Datenkommunikationseinrichtung ein Kabelstück umfasst, welches mindestens an dem dem Eingabegerät zugewandten Ende und/oder an dem der Zentraleinheit zugewandten Ende mit einer Steckverbindereinrichtung ausgestattet ist.
43. Eingabegerät nach Ausführungsbeispiel 39, dadurch gekennzeichnet, dass das Eingabegerät über eine drahtlose Datenkommunikationseinrichtung mit einer Zentraleinheit des Fremdgerätes gekoppelt ist.
44. Eingabegerät nach Ausführungsbeispiel 43, dadurch gekennzeichnet, dass die drahtlose Datenkommunikationseinrichtung eine Infrarot-Datenübertragungseinrichtung ist.
45. Eingabegerät nach Ausführungsbeispiel 43, dadurch gekennzeichnet, dass die drahtlose Datenkommunikationseinrichtung eine Hochfrequenzfunk-Datenübertragungseinrichtung ist.
46. Eingabegerät nach einem der Ausführungsbeispiele 39 bis 45, gekennzeichnet durch einen Akkumulator, der in einem Eingabegerätegehäuse angeordnet ist.
47. Eingabegerät nach Ausführungsbeispiel 46, dadurch gekennzeichnet, dass eine im im Fremdgerät angeordnete Stromquelle den Akkumulator aufladen kann.
48. Eingabegerät nach einem der Ausführungsbeispiele 39 bis 47, gekennzeichnet durch eine Sicherheitsdatenspeichereinrichtung zum Speichern von Daten zur Identifikation und/oder Authentikation mindestens eines Benutzers.
49. Eingabegerät nach Ausführungsbeispiel 48, dadurch gekennzeichnet, dass das Eingabegerät eingerichtet ist, dass das Fremdgerät eine Sicherheitseinrichtung aufweist, wobei die Sicherheitseinrichtung Daten aus der Sicherheitsdatenspeichereinrichtung erkennt und in Abhängigkeit von den erkannten Informationen einen Sperr-Betriebszustand herbeiführt, in dem mindestens eine Benutzungsfunktionalität ganz oder teilweise gesperrt ist.
50. Eingabegerät nach einem der Ausführungsbeispiele 39 bis 49, dadurch gekennzeichnet, dass das Fremdgerät ein Kraftfahrzeug ist.
51. Eingabegerät nach einem der Ausführungsbeispiele 39 bis 49, dadurch gekennzeichnet, dass das Fremdgerät eine Gebäudesteuerungseinheit ist.
52. Eingabegerät nach einem der Ausführungsbeispiele 39 bis 49, dadurch gekennzeichnet, dass das Fremdgerät eine Unterhaltungselektronikgerätesteuerung ist.
53. Eingabegerät nach einem der Ausführungsbeispiele 39 bis 49, dadurch gekennzeichnet, dass das Fremdgerät eine Hausüberwachungseinrichtung ist.
54. Eingabegerät nach einem der Ausführungsbeispiele 39 bis 49, dadurch gekennzeichnet, dass das Fremdgerät ein Verkaufsautomat ist.
55. Eingabegerät nach einem der Ausführungsbeispiele 39 bis 49, dadurch gekennzeichnet, dass das Fremdgerät eine behördliche Personenidentifikationseinrichtung ist.
56. Eingabegerät nach einem der Ausführungsbeispiele 39 bis 55, dadurch gekennzeichnet, dass es dem Fremdgerät Identifikationsinformationen und/oder Authentikationsinformationen und/oder Konfigurationsinformationen zur Verfügung stellen kann.
57. Eingabegerät nach einem der Ausführungsbeispiele 39 bis 56, dadurch gekennzeichnet, dass es zur Speicherung von personenbezogenen Daten eingerichtet ist.
58. Eingabegerät nach Ausführungsbeispiel 57, dadurch gekennzeichnet, dass die personenbezogenen Daten mindestens ein Datenelment aus der biometrische Daten, Altersklassenmerkmale, Altersdaten, Namensdaten, Geburtdaten, Wohnortdaten, Güterstandsdaten enthaltenden Gruppe umfasst.
59. Eingabegerät nach einem der Ausführungsbeispiele 39 bis 58, gekennzeichnet durch eine Eingabegerät-Anzeigeinrichtung zur Anzeige von Texten und/oder graphischen Informationen.
60. Eingabegerät nach Ausführungsbeispiel 59, dadurch gekennzeichnet, dass die Eingabegerät-Anzeigeeinrichtung ein Touchscreen-Display ist.
61. Eingabegerät nach Ausführungsbeispiel 60, dadurch gekennzeichnet, dass das Eingabegerät eingerichtet ist, von dem Benutzer vorgegebene relative Ortsdaten mittels des Touchscreen-Displays entgegenzunehmen.
62. Eingabegerät nach Ausführungsbeispiel 61, dadurch gekennzeichnet, dass das Eingabegerät eingerichtet ist, durch Betätigung des Touchscreen-Displays mindestens einen Auswahl- und Selektionsvorgang auszulösen.
63. Portabler Digitalcomputer mit einer eingebauten Kopplungseinrichtung, die eingerichtet ist, um Maussignale einer mit einem Akkumulator versehenen und durch den Akkumulator gespeisten kabellosen Maus aufzunehmen, gekennzeichnet durch eine eingebaute Stromquelle und eine mit der Stromquelle verbundene und fest eingebaute elektrische Schnittstelle, die eingerichtet ist zum Aufladen des Akkumulators.
64. Portabler Digitalcomputer nach Ausführungsbeispiel 63, gekennzeichnet durch eine Steckverbindereinrichtung, die eingerichtet ist zur Entgegennahme der Maussignale mittels eines durch die Steckverbindereinrichtung geführten seriellen Busses, wobei der serielle Bus eingerichtet ist, die Stromversorgung zum Aufladen des Akkumulators darzustellen, und wobei die eingebaute Kopplungseinrichtung deaktiviert wird und die Maussignale über den seriellen Bus entgegengenommen werden, wenn eine Maus an die Steckverbindereinrichtung angeschlossen ist.
65. Portabler Digitalcomputer nach Ausführungsbeispiel 64, dadurch gekennzeichnet, dass der serielle Bus ein USB Universal Serial Bus ist.
66. Portabler Digitalcomputer nach Ausführungsbeispiel 64, dadurch gekennzeichnet, dass der serielle Bus ein FireWire-Bus ist.
67. Portabler Digitalcomputer nach Ausführungsbeispiel 63, 64, 65 oder 66, gekennzeichnet durch eine Ausnehmung, die zur Aufnahme der kabellosen Maus eingerichtet ist.
68. Eingabegerät für einen portablen Digitalcomputer, mit einer kabellosen Maus, wobei auf der Oberseite der kabellosen Maus ein zusätzliches Slidepad angeordnet ist.
69. Eingabegerät nach Ausführungsbeispiel 68, gekennzeichnet durch ein Gehäuse, das eingerichtet ist, in eine Ausnehmung im Gehäuse eines Notebooks eingesetzt und fixiert werden zu können, wobei die Ausnehmung eine Bucht, eine Veriefung oder schubladenartige Öffnung ist.
70. Portabler Digitalcomputer, aufweisend
   a) ein Computergehäuse mit einer Ausnehmung,
   b) eine in dem Computergehäuse angeordnete Stromquelle,
   c) eine erste Koppeleinrichtung zur drahtlosen Datenübertragung,
   d) ein Eingabegerät
   da) mit einem Eingabegerätegehäuse,
   db) mit einem Akkumulator,
   dc) mit einer zweiten Koppeleinrichtung, die zur drahtlosen Datenübertragung mit der ersten Koppeleinrichtung eingerichtet ist, und
   dd) mit einer Eingabeeinrichtung zur Eingabe von relativen Ortsdaten zur Steuerung eines Cursors,
   de) wobei die Eingabeeinrichtung dafür eingerichtet ist, relative Ortsdaten durch eine entsprechende Bewegung einer Hand oder mindestens eines Fingers einer Hand eines Benutzers oder relative Ortsdaten durch eine entsprechende Bewegung des Eingabegehäuses gegen eine Unterlage analog entgegenzunehmen,
   e) wobei die Ausnehmung des Computergehäuses zur Aufnahme des Eingabegerätegehäuses eingerichtet ist und der Akkumulator von der Stromquelle aufgeladen werden kann, wenn das Eingabegerätegehäuse von der Ausnehmung aufgenommen ist.
71. Portabler Digitalcomputer nach Ausführungsbeispiel 70, gekennzeichnet durch eine drahtgebundene Koppeleinrichtung zur Datenübertragung, wobei die Koppeleinrichtung zur drahtlosen Datenübertragung deaktiviert und die drahtgebundene Koppeleinrichtung aktiviert werden kann, wenn das Eingabegerätegehäuse von der Ausnehmung aufgenommen ist.
72. Eingabegerät für einen portablen Digitalcomputer, aufweisend
   a) ein Gehäuse mit einer vorderen Oberfläche und einer hinteren Oberfläche,
   b) eine elektronische Steuerungseinheit,
   c) eine auf der vorderen Oberfläche angeordnete und mit der Steuerungseinheit elektrisch gekoppelte erste Eingabeeinrichtung zur Eingabe von relativen Ortsdaten, wobei die erste Eingabeeinrichtung dafür eingerichtet ist, relative Ortsdaten durch eine entsprechende Bewegung einer Hand oder mindestens eines Fingers einer Hand eines Benutzers analog entgegenzunehmen, und
   d) eine auf der hinteren Oberfläche angeordnete und mit der Steuerungseinheit gekoppelte zweite Eingabeeinrichtung zur Eingabe von relativen Ortsdaten, wobei die zweite Eingabeeinrichtung dafür eingerichtet ist, relative Ortsdaten durch eine entsprechende Bewegung des Gehäuses gegen eine Unterlage analog entgegenzunehmen,
   e) eine elektronische Kommunikationseinrichtung zur Übertragung von relativen Ortsdaten der ersten Eingabeeinrichtung und/oder der zweite Eingabeeinrichtung an den portablen Digitalcomputer,
   f) wobei das Gehäuse dafür eingerichtet ist, an einem Gehäuseteil des portablen Digitalcomputers lösbar arretiert zu werden.
73. Portabler Digitalcomputer, aufweisend
   a) ein Gehäuse und
   b) ein Eingabegerät nach Ausführungsbeispiel 72,
   c) wobei das Eingabegerät am Gehäuse lösbar arretiert werden kann.
74. Portabler Digitalcomputer, aufweisend
   a) ein Gehäuse mit einer vorderen Oberfläche und einer gegenüberliegenden hinteren Oberfläche, das in zwei verschiedenen vom Benutzer einstellbaren Betriebsmodi benutzbar ist, und
   b) eine Eingabeeinrichtung zur Eingabe von relativen Ortsdaten zur Steuerung eines Cursors, wobei die erste Eingabeeinrichtung dafür eingerichtet ist, relative Ortsdaten durch eine entsprechende Bewegung einer Hand oder mindestens eines Fingers einer Hand eines Benutzers analog entgegenzunehmen,
   c) wobei die Eingabeeinrichtung in dem ersten Betriebsmodus auf der vorderen Oberfläche angeordnet ist und in dem zweiten Betriebsmodus auf der hinteren Oberfläche angeordnet ist.
75. Portabler Digitalcomputer nach Ausführungsbeispiel 74, dadurch gekennzeichnet, dass der Wechsel vom ersten Betriebsmodus zum zweiten Betriebsmodus und umgekehrt dadurch bewerkstelligt wird, dass die Eingabevorrichtung aus dem Gehäuse entnommen und in einer geänderten Orientierung wieder eingesetzt werden kann.
76. Portabler Digitalcomputer nach Ausführungsbeispiel 75, dadurch gekennzeichnet, dass eine unterschiedliche Einabevorrichtung eingesetzt werden kann.
77. Portabler Digitalcomputer nach Ausführungsbeispiel 74, dadurch gekennzeichnet, dass der Wechsel vom ersten Betriebsmodus zum zweiten Betriebsmodus und umgekehrt dadurch bewerkstelligt wird, dass die Eingabevorrichtung um eine parallel zur Eingabeoberfläche liegende Schwenkachse schwenkbar ist.
78. Notebook mit einer Tastatur und mit einem Slidepad und mindestens einer Slidepadtaste, wobei das Notebook eingerichtet ist, in einer ersten Betriebsart betrieben zu werden, bei der das Slidepad und die mindestens eine Slidepadtaste auf derselben Gehäuseseite liegen wie die Tastatur, und wobei das Notebook ferner eingerichtet ist, in einer zweiten Betriebsart betrieben zu werden, bei der bei der das Slidepad und die mindestens eine Slidepadtaste auf der der Tastatur entgegengesetzten Gehäuserückseite liegt.
79. Notebook nach Ausführungsbeispiel 78, gekennzeichnet durch einen Touchscreen und eine Stiftgarage, wobei ein Bedienstift zur Bedienung des Touchscreens in der Stiftgarage aufbewahrt werden kann.
80. Portabler Digitalcomputer, aufweisend:
   a) ein eine Computereinrichtung aufnehmendes Gehäuse mit einem ersten Gehäuseflügel und einem zweiten Gehäuseflügel, wobei der erste Gehäuseflügel und der zweite Gehäuseflügel mit einem Scharnier buchartig auf- und zuklappbar miteinander verbunden sind,
   b) eine auf der Vorderseite des ersten Gehäuseflügels angeordnete Anzeigeeinrichtung,
   c) eine auf der Vorderseite des zweiten Gehäuseflügels abnehmbar angeordnete Tastatureinrichtung, die mit einer ersten Übertragungseinrichtung zum Datenaustausch mit der Computereinrichtung versehen ist,
   d) eine in einer Ausnehmung des zweiten Gehäuseflügels abnehmbar eingesetzte Mauseinrichtung, die mit einer zweiten Übertragungseinrichtung zum drahtlosen Datenaustausch mit der Computereinrichtung versehen ist,
   e) wobei das Gehäuse eingerichtet ist, auf einer im wesentlichen ebenen Unterlage derart aufgestellt zu werden, so dass die Vorderseite des zweiten Gehäuseflügels bei abgenommener Tastatureinrichtung und abgenommener Mauseinrichtung auf die im wesentlichen ebene Unterlage gelegt werden kann, wobei der Winkel zwischen der Rückseite des ersten Gehäuseflügels und der Rückseite des zweiten Gehäuseflügels auf einen Wert kleiner oder. gleich 90[deg.] einstellbar ist.
81. Portabler Computer mit einem Gehäuse und mit einer der Eingabe von ortsrelativen Daten dienenden, maus- oder mausähnliche Funktionen aufweisenden, finger- oder handbetätigbaren Eingabeeinrichtung, die
   a) zur Benutzung innerhalb des Computers in eine Steckausnehmung des Gehäuses einsteckbar und zur Benutzung ausserhalb des Computers aus der Steckausnehmung aussteckbar und in diesen beiden Zuständen in Eingabeverbindung mit dem Computer bringbar und somit zur Eingabe nutzbar ist,
   b) mindestens im aus der Steckausnehmung entnommenen Zustand drahtlos mit dem Computer koppelbar ist und
   c) einen eigenen Akkumulator aufweist, der im eingesteckten Zustand über den Computer aufladbar ist.
82. Mobiler Digitalcomputer mit einer Anzeigeeinrichtung mit mindestens einem Bildschirm und einem Funktionsmodul zur bildschirmabgewandten Navigationsbedienung mit den Fingern einer den Computer haltenden Hand, wobei das Funktionsmodul abkoppelbar ist und als externe Maus verwendet werden kann.
83. Mobiler Digitalcomputer mit einer Anzeigeeinrichtung mit mindestens einem Bildschirm sowie mit einem abkoppelbaren Funktionsmodul, wobei das Funktionsmodul im abgekoppelten Zustand außerhalb eines vorbestimmten Mindestabstandes zur Anzeigeeinrichtung wirksam wird, wobei die Anzeigeeinrichtung selbsttätig bei Oberschreiten des vorbestimmten Mindestabstandes
   a) gesperrt wird und/oder
   b) ein Bildschirmschirmschoner auf der Anzeigeeinrichtung aktiviert' wird und/oder
   c) die Anzeigeeinrichtung in einen Ruhezustand versetzt wird und/oder
   d) die Anzeigeeinrichtung ausgeschaltet wird,
   wobei dieser bewirkte Betriebszustand wieder rückgängig gemacht werden kann, wenn das Funktionsmodul der Anzeigeeinrichtung bis auf eine Entfernung unterhalb des vorbestimmten Mindestabstandes angenähert wird und wirksam mit der Anzeigeeinrichtung gekoppelt wird.
84. Digitalcomputer nach Ausführungsbeispiel 83, gekennzeichnet durch eine bei der Anzeigeeinrichtung vorgesehenen Eingabeeinrichtung, wobei der bewirkte Betriebszustand alternativ auch durch Eingabe eines Kennwortes in die Eingabeeinrichtung rückgängig gemacht werden kann.
85. Digitalcomputer nach Ausführungsbeispiel 83 oder Ausführungsbeispiel 84, dadurch gekennzeichnet, dass Funktionsmodul mindestens für eine weitere Funktionalität eingereichtet ist.
86. Digitalcomputer nach Ausführungsbeispiel 87, dadurch gekennzeichnet, dass die weitere Funktionalität eine Cursorsteuerungsfunktion umfasst.
87. Digitalcomputer nach Ausführungsbeispielen 86 oder 85, dadurch gekennzeichnet, daß die weitere Funktionalität eine Datenspeicherungsfunktion umfasst.
88. Digitalcomputer nach einem der Ausführungsbeispiele 83 bis 87, dadurch gekennzeichnet, daß die wirksame Kopplung durch ein Funksignal, durch ein Infrarotsignal oder durch eine Kabelverbindung zustande kommt.
89. Digitalcomputer nach einem der Ausführungsbeispiele 83 bis 88, dadurch gekennzeichnet, daß die wirksame Kopplung eine Identifikation und Authentifikation zwischen dem Funktionsmodul und der Anzeigeeinrichtung beinhaltet.
90. Digitalcomputer nach einem der Ausführungsbeispiele 83 bis 89, dadurch gekennzeichnet, daß das Funktionsmodul und die Anzeigeeinrichtung eingerichtet sind, zu einem Gesamtgerät mechanisch integriert zu werden.
91. Mobiler Digitalcomputer mit einer Anzeigeeinrichtung mit mindestens einem Bildschirm und einem integrierten, abkoppelbaren Cursorsteuerungsmodul, welches sowohl im integrierten als auch im abgekoppelten Zustand wirksam ist, wobei im abgekoppelten Zustand eine frei werdende Koppelbucht derart ausgebildet und eingerichtet ist, daß mindestens eine andere externe Einrichtung über die Koppelbucht wirksam verbunden oder gekoppelt werden kann, wobei die gleiche Koppelschnittstelle des Cursorsteuerungsmoduls verwendbar ist und/oder mindestens eine weitere Schnittstelle an einer Seitenkante der Koppelbucht vorgesehen ist.
92. Digitalcomuter nach Ausführungsbeispiel 91, dadurch gekennzeichnet, daß die Schnittstelle des Cursorsteuerungsmoduls sowohl Stromversorgung wie auch Datenverkehr ermöglicht, wobei Cursorsteuerungsmodul b beim Entkoppeln auf eine drahtlose Verbindung umschaltet und als externe Maus wirksam bleibt.

## Patentansprüche

1. Portabler Digitalcomputer, aufweisend:
a) ein Gehäuse,
b) eine auf der Vorderseite des Gehäuses angeordnete Anzeigeeinrichtung,
c) eine auf der Rückseite des Gehäuses angeordnete Koppelschnittstelle zum mechanischen und/oder elektrischen Koppeln eines Funktionsmoduls.

2. Digitalcomputer nach Anspruch 1, weiterhin umfassend ein Funktionsmodul.

3. Digitalcomputer nach Anspruch 1 oder 2, wobei das Funktionsmodul umfassen kann:
a) ein Eingabegerät
b) ein Adaptermodul für eine Speicherkarte, eine Prozessorkarte, eine Multimediacard und/oder eine SmartCard,
c) ein Systemerweiterungsmodul zur Erweiterung der Funktionalität des portablen Digitalcomputers mittels GSM, GPRS, DSL, MODEM, GPS, SAT-Receiver oder TV
d) ein Aufzeichnungsgerät, ein Abspielgerät und/oder ein DRM-Modul,
e) eine Joystick-Bedieneinheit für Computerspiele, ein Fernbedienungsteil für Medienplayer, ein Einsteckmodul als eigene Computereinheit oder ein MP3-Player, und/oder
f) ein Mobiltelefon und/oder ein PDA-Taschenrechner als eigenständig nutzbare Gerätschaft.

4. Digitalcomputer nach Anspruch 3, wobei das Eingabegerät zur Eingabe von relativen Ortsdaten zur Steuerung eines Cursors ausgebildet ist, wobei das Eingabegerät dafür eingerichtet ist, relative Ortsdaten durch eine entsprechende Bewegung einer Hand oder mindestens eines Fingers einer Hand eines Benutzers analog entgegenzunehmen.

5. Digitalcomputer nach Anspruch 3 oder 4, wobei das Eingabegerät ein Slidepad, einen Betätigungstaster, ein Stellrädchen, eine Rollkugel mit Rollkugel-Bewegungssensoren und/oder eine optische Untergrundabtastvorrichtung aufweist.

6. Digitalcomputer nach einem der vorangegangenen Ansprüche, wobei das Funktionsmodul eine Batterie oder einen Akkumulator umfasst.

7. Digitalcomputer nach einem der vorangegangenen Ansprüche, wobei das Funktionsmodul eine Übertragungseinrichtung zum drahtlosen Datenaustausch mit dem Digitalcomputer aufweist.

8. Digitalcomputer nach einem der vorangegangenen Ansprüche, umfassend eine Ausnehmung zur Aufnahme des Funktionsmoduls.

9. Digitalcomputer nach Anspruch 8, wobei das Funktionsmodul aus der Ausnehmung herausziehbar ist.

10. Digitalcomputer nach einem der vorangegangenen Ansprüche, umfassend eine Magnethalterung oder einen Rastmechanismus zum Haltern des Funktionsmoduls.

11. Digitalcomputer nach einem der vorangegangenen Ansprüche, wobei das Gehäuse einteilig ausgebildet ist.

12. Digitalcomputer nach einem der vorangegangenen Ansprüche, wobei die Anzeigeeinrichtung einen druck- oder berührungsempfindlichen Bildschirm umfasst.

13. Digitalcomputer nach einem der vorangegangenen Ansprüche, umfassend eine Stiftgarage, wobei ein Bedienstift zur Bedienung des Anzeigeeinrichtung in der Stiftgarage aufbewahrbar ist.

14. Funktionsmodul für einen Digitalcomputer nach einen der Ansprüche 3 bis 13, wobei das Funktionsmodul zur mechanischen und/oder elektrischen Kopplung mit dem Digitalcomputer mit einer entsprechenden Schnittstelle ausgebildet ist.

15. System umfassend einen Digitalcomputer nach einem der Ansprüche 1 - 13 und ein Funktionsmodul für einen Digitalcomputer nach Anspruch 14.
